# EUROPEAN PATENT APPLICATION

(11) **EP 0 805 593 A2**
(43) Date of publication of application: **05.11.1997**
(21) Application number: 97107084.2
(22) Date of filing: 29.04.1997
(51) Int. Cl.: H04N 7/173, G11B 20/00

(54) **Storage device control unit and management system**

(30) Priority: 30.04.1996 JP 109183/96; 29.01.1997 JP 15239/97; 31.03.1997 JP 81647/97
(71) Applicant: MATSUSHITA ELECTRIC INDUSTRIAL CO., LTD., Kadoma-shi, Osaka-fu (JP)
(72) Inventor: Ito, Yukiko, Moriguchi-shi, Osaka-fu (JP); Tanaka, Tsutomu, Nishinomiya-shi, Hyogo-ken (JP); Tamai, Masaaki, Moriguchi-shi, Osaka-fu (JP); Doi, Shinzo, Hirakata-shi, Osaka-fu (JP)
(74) Representative: Altenburg, Udo, Dipl.-Phys.

(57) **Abstract**

The queue inputting part 42 enqueues the arrived "top priority request" to the priority queue so that each request being held in the "priority queue" meets the allowable delay value and the request is processed after other "top priority requests" being held and so that the access position is consecutive. The queue inputting part 42 enqueues the write requests and the "no priority requests" to the write queue and the "no priority queue" respectively one by one. The command output processing part 47, based on state numbers held in the state showing table 46, selects one from the three kinds of queues and the read request or the write request is outputted from the selected queue as a command.

## Description

### BACKGROUND OF THE INVENTION

### Field of the Invention

The present invention relates to a storage device control unit, and more particularly the storage device control unit manages reading and writing for the storage device storing the data for which real-time properties are required and the data for which real time properties are not required.

### Related Art Statement

A video server is an apparatus which provides video data stored therein beforehand, with responding in real-time to individual requests from plural users and is described, for example, in "Nikkei Communication 1993, 2. 15 No. 144, pp.38-55". A video server is applied to the VOD ( Video On Demand ) service or nonlinear moving picture edit system in broadcasting stations by which users can be provided with video data at any time.

Various improvements are being made on the video server, and the examples of such video servers include video servers disclosed in Japanese Patent Laid-Open No. 107425/1995 described in the document : D. James Gemmell, "Multimedia Storage Servers: A Tutorial.", Computer Vol.28 No. 5 pp. 40-49, 1995.

By the way, in the above-described use for the video server, requests for video data are generated asynchronously, and the same video data are requested in one case and different video data are requested in the other area. To deal with such multiple access and efficiently provide video data without intermission, a video server distributes unit blocks which are video data divided into the data having predetermined size to plural built-in storage devices.

To perform such distribution, the video server described in the above-mentioned official gazette selects , at random, storage devices to which unit blocks are distributed with using random numbers, while the video server described in the above-mentioned document distributes the unit blocks constituting the video data to the plural storage devices, to which the unit blocks is distributed in a predetermined order, in the order of video data configuration.

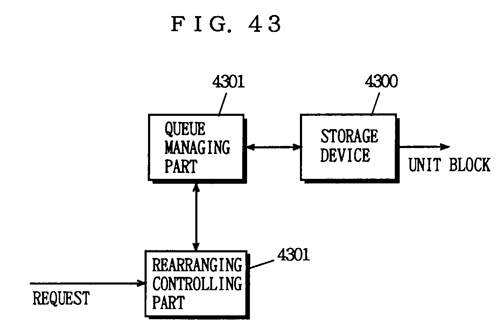

By the way, the video server, when a request has arrived from a user, reads video data for the request out of a storage device and sends the read-out video data as a stream in right order. The user replays the stream being sent to obtain programmed images. Therefore, the video server is required to send the video data to plural users in real time and also to read the video data out of the storage device efficiently. To satisfy these requirements, the video server comprises a storage device control unit as shown in Fig. 43.

Referring to Fig. 43, a storage device control unit comprises a storage device 4300, a queue managing part 4301 and a rearrangement controlling part 4302.

The storage device 4300 includes plural storage media (for instance, hard disks) and, as described above, distributes unit blocks to the plural storage media.

The queue managing part 4301 temporarily holds requests of video data generated asynchronously from many users as a queue and outputs them to the storage device 4300 in a predetermined order.

The rearrangement controlling part 4302 stores the inputted requests in the queue managing part 4301 in order but at predetermined intervals rearranges requests held in the queue managing part 4301 at the time so that the seek direction in the storage device 4300 is maintained constant.

The queue managing part 4301 outputs the requests to the storage device 4300 in the rearranged order. Therefore, the storage device 4300 read the unit blocks out of the storage medium in the rearranged order. Thus, the storage device control unit shortens mean seek time in the storage device 4300 to perform read efficiently.

By the way, since video data are replayed for a long time by users, the video server has to send unit blocks constituting the video data continuously. Also, the video server has to read all of the unit blocks constituting the video data out of storage devices within a fixed period after having received the request (hereinafter, "delay limit time" in the present specification). This process does not permit even one simple unit block to be read beyond the delay limit time. For, while the user replays the video data, the programmed image or the sound is interrupted at the part corresponding to the unit block read with beyond the delay limit time.

However, in the storage device control unit shown in Fig. 43, this delay limit time is not taken into consideration at all.

Also, the video server is provided with plural storage devices assuming the case that requests for the same programmed image have simultaneously arrived from many users. Video data for the same programmed image are divided into plural unit blocks, each of which is stored in a different storage device. Therefore, the video server, even when requests for the same programmed image have simultaneously arrived from plural users, can read the unit blocks each of which is stored in the different storage devices. Thus, even when the requests for the same programmed image are concentrated thereon accesses are not concentrated on the same storage device.

However, in order for the video server to support many users, the video server needs to be provided with many storage devices, and thereby the cost of the video server raises.

Also, it can be expected that the video server will in near future provide not only video data on programmed image or the like but a variety of data including static image data and computer data. Since for the static image data and the computer data, the above-mentioned dropout in image or sound does not occur unlike for the video data, for the static image data and the computer data, the delay limit time does not need to be taken into consideration. That is, it is expected that both data which requires the delay limit time and data which does not require the delay time are stored in the video server.

However, there is expected to be some case where read of the static image data and the computer data which do not require the delay limit time negatively affect the delay limit time which the video server has to keep.

Also, the video server is required high-speed response to the programmed images at the time of starting replay and the time of changing the replay speed or replayed program.

Also, possibly, data once written into storage devices will be read many times. Therefore, the video sever has to divide video data into unit blocks and has to ensure to write the divided unit blocks into the storage devices sequentially or dispersively

However, in the conventional video server, certainty of write is not examined.

By the way, when data are being written into storage devices in the manner shown in the above-described document, for each data, an order of access to the storage devices is same. Therefore, when requests are generated by plural users simultaneously, access concentrate in the same storage device. As a result of that, until access to the storage device made in compliance with a request is over, the access to the storage device cannot be made, so that operations for the other requests are delayed. Hence, since it takes many time to obtain data after an user has outputted a request, volume of data which is accessible in unit time decrease, which leads to the fact that band (for example, the number of video) which can be taken out becomes small as a whole.

To deal with such a problem, with taking into consideration a delay from the time when a request is generated to the time when access to the video data begins, access timing is staggered for each request from users as an attempt, which still delays responses to requests.

Also, when requests for data, each of which has different band, are generated, even if access timing is staggered for each request from users, access timing is becoming synchronous due to the different band. Therefore, as described above, there occurs such problems that the band becomes small. That is, when the data having different band each other are read at the same time, the method of staggering the access timing has little effect.

On the other hand, the video server of the above-mentioned official gazette determines destinations of the data with using random numbers, but in some random members, there are some cases where units blocks are sequentially distributed to the same storage device, and thereby the video server includes such difficulties as that the above-mentioned band becomes small, used capacity of each storage device become various and plural storage devices cannot be used efficiently.

Also, there is another problem that, when the video server is provided with plural devices, each of which has respective different band, capacity and the other performance and data is divided and distributed to each of all storage devices in the manner shown in the above-described document or official gazette, the total band or the total stored data volume as a whole of the video sever is depend upon the storage device of lowest performance and thereby storage devices of high performance cannot be used efficiently.

By the way, in comparison between cases where a same volume of data is divided and distributed to consecutive area and the case where the data is distributed dispersively, the case where the data are divided and distributed to consecutive areas has larger band. Therefore, in such case as dealing with the data requiring large band, even when requests have arrived from the other plural users simultaneously, the request from a user is processed sequentially. In this case, as cleared above, the data read had better be divided and distributed to consecutive area of one storage device. However, since the manner described in the above-mentioned document and official gazette do not take such case into consideration, there is cases where the video server cannot process requests from users efficiently.

### SUMMARY OF THE INVENTION

Therefore, a first object of the present invention is to provide a storage device control unit being capable of reading video data which has to keep the delay limit time out of storage devices effectively.

Also, a second object of the present invention is to provide a storage device control unit being capable of writing video data or the others into storage devices for great certainty.

Also, a third object of the present invention is to provide a storage device control unit being capable of writing both video data which has to keep the delay limit time and static image data which does not have to keep the delay limit time into the same storage device.

Also, a fourth object of the present invention is to provide a storage device management system being capable of determining destinations of data so as to obtain large band even when data is distributed to plural storage devices and so that speed of response to the request from the terminal becomes high.

Also, a fifth object of the present invention is to provide a storage device management system being capable of determining destinations of data so that the used capacity of each of the plural storage devices become equal even when data is distributed to plural storage devices.

Further, a sixth object of the present invention is to provide a storage device control unit which improves use efficiency of storage devices as well as performing a real-time read.

The first to the sixty seventh aspect of the present invention comprises the following composition and / or character in order to achieve the above-described objects.

In accordance with the first aspect, a storage device control unit for controlling write operation or read operation on storage devices to be performed, in compliance with write requests or read requests successively arriving by the external, wherein
the above-described data is divided into unit blocks of a predetermined size and
each of the above-described read requests includes a delay limit value meaning a period which is from the arrival time of the read request to the time when the read operation has to finish, comprises:
   selecting means for selecting one consecutive empty area or plural consecutive empty areas, where the predetermined number of unit blocks can be written consecutively, corresponding to the amount of data to be written into the above-described storage devices from empty areas of the above-described storage device,
   write command outputting means for outputting the above-described write request as write command,
   order determining means for determining an order of outputting the read request successively arriving from the external as a read command, and
   read command outputting means for outputting the read commands in the order determined by the order determining means, wherein
      the write command outputting means outputs the above-described write command such that data to be written in the above-described storage devices is written into the empty areas selected by the selecting means and
      the order determining means determines the order of processing each the read requests successively arriving from the external so that each of read periods is not beyond each of the delay limit value and is also shorter than a read period obtained assuming that read requests is outputted in the order of arrival

According to the first aspect, data to be written into the storage devices is written into connective empty area selected by the selecting means. Therefore, unit blocks, which is distributed to one of the storage device, composing this data are located near to each other. This, for example, can shorten move distance of a head of the storage device and also time to write data into the storage device. Also, the read request is outputted as a read command in the order so that the period for the read operation is shorter than the period for the read operation obtained assuming that read requests are outputted in the order of arrival. This can shorten period to read data out of the storage device. Therefore, this storage device control unit can read more data out of the storage devices in a period than a conventional storage device control unit, which leads to decrease in the number of expensive storage devices.

Further, the read request is outputted as a read command within the delay limit value, which can prevent a dropout of image or sound for video data or the like which has to meet real time.

In accordance with the second aspect in the first aspect, the storage device control unit is characterized in that the selecting means selects the above-described empty areas at random.

According to the second aspect, the selecting means selects the consecutive empty areas at random, which enables those areas to be used effectively.

In accordance with the third aspect in the first aspect, the storage device control unit is characterized in that, when the number of connected storage devices is "p" (d₁,d₂,...dₚ),
the selecting means selects the above-described consecutive empty areas from empty areas of storage devices of which number is "m" ("m" is an integer of 1≦m≦p), and
consecutive empty areas selected from one "dᵢ" ("i" is an integer of 1≦i≦m ) of the storage devices are aᵢ₁,aᵢ₂,...aᵢₙ ("n" is an integer of 2 or more),
the write command outputting means outputs the above-described write command so that the unit blocks composing the above-described data are written in such an order of a₁₁,a₂₁,...aₘ₁,a₁₂,a₂₂,...aₘ₂,...a₁ₙ,a₂ₙ,...aₘₙ.

According to the third aspect, unit blocks composing the data are written into the consecutive empty area of the same storage device, which can shorten time to write data and to read data.

In accordance with the fourth aspect in the first aspect, the storage device control unit is characterized in that the selecting means selects the above-described consecutive empty areas from an empty area which one storage device has.

According to the fourth aspect, all of the unit blocks composing the data are written into the same storage device, which can shorten time to write data and to read data.

In accordance with the fifth aspect in the first aspect, the storage device control unit is characterized in that the above-described delay limit values are predetermined values stored therein.

According to the fifth aspect, the storage device control unit has the predetermined delay limit values stored therein, which leads to advantages in use.

In accordance with the sixth aspect in the first aspect, the storage device control unit is characterized in that the above-described delay limit values are parameters which the above-described read request includes.

According to the sixth aspect, an external device can set the delay limit value freely.

In accordance with the seventh aspect in the first aspect, the storage device control unit further comprises position file managing means for managing positions to store each of the unit blocks in the above-described storage devices,
wherein the order determining means includes:
queue managing means, having a read queue which temporarily holds the above-described read requests in a queue, for managing record positions of unit blocks to be read in compliance with the read requests,
position fixing means for fixing a position in the read queue to enqueue an arrived read request to,
allowable delay information computing/managing means for computing and then managing an estimated processing period which is estimated to be period for each of the above-described read operations, an expected ending time when the read operation is expected to finish, an allowable delay value which is obtained by subtracting the expected ending time from an ending time, obtained by referring to the delay limit value, when the read operation has to finish,
the position fixing means
   extracts a record position (hereinafter, "a first record position") of a unit block to be read in compliance with a newly-arrived read request from the position file managing means,
   extracts record positions (hereinafter, "second record positions") of unit blocks to be read in compliance with each of the read requests held in the read queue from the queue managing means,
   temporarily fixing a position in the read queue to which to enqueue the newly-arrived read request based on the first record position and the second record position,
the allowable delay information computing/managing means
   computes the estimated processing period for the above-described newly-arrived read request which is enqueued to the temporarily fixed position, and
   compares the estimated processing period for the above-described newly-arrived read request with the allowable value for each of the read request behind the read request enqueued to the temporarily-fixed position, and
the position fixing means, when the allowable delay information computing/managing means judges that each allowable value is more than the above-described estimated processing period, fixes the temporarily fixed position as a place to enqueue the newly-arrived read request to.

According to the seventh aspect, a position in the read queue to enqueue the newly-arrived is fixed based on the first record position and the second record position, which can shorten time to read data. Therefore, there is no need to store a lot of the same data in the storage device, which results in decrease in cost which it takes to make the video server.

In accordance with the eighth aspect in the seventh aspect, the storage device control unit is characterized in that the above-described storage devices have disks for record of the above-described unit blocks,
the estimated processing period is computed based on
   seek time for a head of the above-described storage devices to move between tracks where unit blocks to be read in compliance with the read request and a read request enqueued just ahead of the request are stored,
   transfer time to transfer the above-described unit block to be read in compliance with the read request from the disks, and
   predetermined overhead time and rotational latency.

In accordance with the ninth aspect in the eighth aspect, the storage device control unit is characterized in that tracks of the disk have respective track numbers,
the position file managing means and the queue managing means manage the track numbers for the positions of the tracks where unit blocks are stored, and
the seek time is computed based on each of the track numbers.

In accordance with the tenth aspect in the seventh aspect, a storage device control unit is characterized in that the above-described storage devices have disks for store of the above-described unit blocks,
the estimated processing period is computed based on
   seek time for a head for the above-described storage devices to move between cylinders where unit blocks to be read in compliance with the read request and an read request enqueued just ahead of the read request are stored,
   transfer time to transfer the above-described unit block to be read in compliance with the read request from the disks, and
   predetermined overhead time and rotational latency.

According to the eighth and the tenth aspects, the estimated processing period can be calculated as precisely as possible.

In accordance with the eleventh aspect in the tenth aspect, the storage device control unit is characterized in that cylinders of the disk have respective cylinder numbers,
the position file managing means and the queue managing means manage the cylinder numbers for the positions of cylinders where unit blocks are stored, and
the seek time is computed based on each of the cylinder numbers.

According to the ninth and the eleventh aspects, the seek time is computed based on a track position or a cylinder position of the disk, which can lead to precise value.

In accordance with the 12th aspect in the tenth aspect, the storage device control unit is characterized in that the transfer time is computed based on packing density in the position where the unit block to be read in compliance with the read request is stored and the rotating speed of the disk.

According to the 12th aspect, the transfer speed can be computed as precisely as possible.

In accordance with the thirteenth aspect in the eighth aspect, the storage device control unit is characterized in that the overhead time is obtained by subtracting the sum of mean seek time, mean rotational latency of the disk and mean transfer time from the average of measured period to read data of the same size as the unit block from the storage device plural times consecutively.

According to the thirteenth aspect, the overhead time can be computed as precisely as possible.

In accordance with the fourteenth aspect in the eighth aspect, the storage device control unit is characterized in that the rotational latency is the mean rotational latency of the disk.

According to the fourteenth aspect, the mean rotational latency of the desk is used as the rotational latency, and thereby the rotational latency can be obtained easily.

In accordance with the fifteenth aspect in the seventh aspect, the storage device control unit is characterized in that the estimated processing period means the period as a predetermined confidence limit which covers the set of measured periods obtained by reading the data of the same size as the unit block from the storage device plural times consecutively.

According to the fifteenth aspect, the estimated processing period is obtained using actual measured time, which can leads to precise vale.

In accordance with the sixteenth aspect in the seventh aspect, the storage device control unit is characterized in that the above-described storage devices have disks for store of the above-described unit blocks,
the disk have tracks provided with respective ascending or descending numbers from the most inner track of the disk to the most outer track of the disk,
the position file managing means manages position files including track numbers corresponding to the positions where the unit blocks are stored,
the queue managing means manages the numbers of the tracks where unit blocks to be read in compliance with read requests enqueued to the read queue are stored,
the position fixing means
   extracts a number (hereinafter, "a first track number") of the track where unit block to be read in compliance with the newly-arrived read request from the external is stored from the position file managing means,
   extracts numbers (hereinafter, "second track numbers") of the tracks where each unit block to be read in compliance with the respective read requests hold in the read queue is stored from the queue managing means, and
   temporarily fixes a position where the first track number and second track numbers stand in a row and in an ascending order or descending order as the temporarily fixed position, and enqueue the newly-arrived read request to the temporarily fixed position.

In accordance with the seventeenth aspect in the seventh aspect, the storage device control unit is characterized in that the above-described storage devices have disks for record of the above-described unit blocks,
the disk have cylinders provided with respective ascending or descending numbers from the most inner track of the disk to the most outer track of the disk,
the position file managing means manages position files including cylinder numbers corresponding to the positions where the above-described unit blocks are stored,
the queue managing means manages the numbers of the cylinders where unit blocks to be read in compliance with read requests enqueued to the read queue are stored,
the position fixing means
   extracts a number (hereinafter, "first cylinder number") of the cylinder where unit block to be read in compliance with the newly-arrived read request from the external is stored from the position file managing means,
   extracts numbers (hereinafter, "second cylinder numbers") of the cylinder where each unit block to be read in compliance with the respective read requests held in the read queue is stored from the queue managing means, and
   temporarily fixes a position the first cylinder number and the second cylinder numbers stand in a row and in an ascending order or a descending order as the temporarily fixed position, and enqueues the newly-arrived read request to the temporarily fixed position.

According to the sixteenth and the seventeenth aspects, the position to which to enqueue the newly-arrived read request is fixed so that the first track number (or the first cylinder number) and the second track numbers (or the second cylinder numbers) stand in a row and in a ascending order or a descending order, which can shorten move distance of the head of the storage device and also period to read our data.

In accordance with the eighteenth aspect in the seventh aspect, the storage device control unit further comprises
command operation ending means for detecting the ending time of the read operation, for unit blocks responding to the read request, performed by the storage device, and notifying the allowable delay information computing/managing means of the ending time,
wherein the allowable delay information computing/managing means calculates, when the ending time notified by the command operation ending means is different from the expected ending time for the above-described read request managed therein, a differential between the ending time and the expected ending time,
update the expected ending time and the allowable delay value for each of the read requests stored in the read queue based on the calculated differential.

According to the eighteenth aspect, in the allowable delay time the differential between the expected ending time and the ending time when the read operation has to finish, which enables the present storage device control unit to output more command.

In accordance with the nineteenth aspect, a storage device control unit for controlling write operation or read operation of data on storage devices to be performed, in compliance with write requests or read requests successively arriving from the external,
wherein each of the above-described read requests includes a delay limit value showing the maximum value of a period which is from the arrival time of the read request to the time when the read operation has to finish,
comprises write command outputting means for outputting the above-described write requests as write command to the storage devices ,
wherein the write command outputting means outputs the write command so that the write operation for each write request is performed within the delay limit value which each of the read requests includes.

According to the nineteenth aspect, the write command outputting means outputs the write command so that the write operation for each write request is performed within the delay limit value which is determined for each of the read request. Therefore, data can be read so as not to exceed the allowable delay time and thereby satisfy real time.

In accordance with the 20th aspect in the nineteenth aspect, the storage device control unit, further comprises
allowable delay information computing/managing means for computing and then managing an estimated processing period which is estimated to be period for each of the above-described read operations or write operation, an expected ending time when the read or write operation is expected to finish, and an allowable delay value which is obtained by subtracting the expected ending time from an ending time, obtained by referring to the delay limit value, when the operation has to finish, wherein
the write command outputting means outputs the above-described write command when the allowable delay value is more than the estimated processing period for the above-described write request, and
the allowable delay information computing/managing means, when the above-described write command is outputted, subtracts the estimated processing period for the above-described write command from each of the allowable delay values for the above-described read requests.

According to the 20th aspect, the allowable delay information computing/managing means, when the write is performed, subtracts the estimated processing period for the write operation from the allowable delay value for each of the read requests and thereby updates each allowable delay value. Thus, the allowable delay information computing/managing means can always manage accurate allowable delay values.

In accordance with the 21st aspect in the 20th aspect, the storage device control unit is characterized in that the estimated processing period for the read request means the processing period as predetermined confidence limit which covers the set of measured periods obtained by writing the data of the same size as the data written into the storage device in compliance with the write request plural times consecutively.

According to the 21st aspect, the estimated processing period is obtained based on actual measured time, which can lead to precise value.

In accordance with the 22nd in the 21st aspect, the storage device control unit further comprises
command operation ending means for receiving an actual ending time of write operation performed by the storage device and notifying the allowable delay information computing/managing means of the actual ending time,
wherein the allowable delay information computing/managing means calculates, when an actual processing time for the write operation, which is calculated based on the ending time, is different from the estimated processing period which the write request has, a differential between the processing period and the estimated processing period,
update the allowable delay value for each of the above-described read requests based on the calculated differential.

According to the 22nd aspect, the allowable delay information computing/managing means updates the allowable delay value for each read requests based on the differential between the actual ending time and the expected ending time. Thus, the allowable delay information computing/managing means can always manages accurate allowable delay value.

In accordance with the 23rd aspect in the 19th aspect, the storage device control unit is characterized in that the above-described delay limit values are predetermined values stored therein.

According to the 23rd aspect, the storage device control unit has the predetermined delay limit values stored therein, which leads to advantages in use.

In accordance with the 24th aspect in the 19th aspect, the storage device control unit is characterized in that the above-described delay limit values are parameters which the read requests include.

According to the 24th aspect, an external device can set the delay limit time freely.

In accordance with the 25th aspect, a storage device control unit for controlling write operation of data on storage devices to be performed, in compliance with write requests successively arriving from the external, comprises:
buffer memory managing/judging means for managing a used capacity of a buffer memory which stores temporarily data to be written into the above-described storage devices and judging whether the used capacity is more than a predetermined threshold value or not, and
write command outputting means for outputting the above-described write requests to the above-described storage device as write command,
   wherein the write command outputting means, when the buffer memory managing/judging means judges that the used capacity is more than the predetermined threshold value, outputs a write command so that the data stored temporarily in the above-described buffer memory is written into the above-described storage devices.

According to the 25th aspect, the write command outputting means, when the buffer memory managing/judging means judges that the used capacity is not less than the predetermined threshold value, outputs the write command, which prevents the overflow of the buffer memory and improves in reliability on write of data.

In accordance with the 26th aspect, a storage device control unit for controlling write operation on storage devices to be performed, in compliance with write requests successively arriving from the external, wherein
each of the above-described write requests includes a delay limit value meaning the maximum value of a period which is from the arrival time of the write request to the time when the write operation has to finish, comprises
   write command outputting means for outputting the above-described write request to the above-described storage device as write command,
   wherein the write command outputting means, after the delay limit of time has passed since the arrival of the write request, outputs the write command.

According to the 26th aspect, the write command outputting means, after the delay limit of time has passed since the arrival of the write request, outputs the write command. Thereby, data can be written into the storage device so as not to exceed the delay limit value. This can prevent the situation that the data can not be read because the write of data doesn't finish.

In accordance with the 27th aspect in the 26th aspect, the storage device control unit is characterized in that the above-described delay limit values are predetermined values stored therein.

According to the 27th aspect, the storage device control unit has the predetermined delay limit values stored therein, which leads to advantages in use.

In accordance with the 28th aspect in the 26th aspect, the storage device control unit is characterized in that the above-described delay limit values are parameters which the write requests includes.

According to the 28th aspect, an external device can set the delay limit time freely.

In accordance with the 29th aspect, a storage device control unit for controlling write operation or read operation of data on storage devices to be performed in compliance with write requests or read requests successively arriving from the external, wherein
each of the above-described read requests includes a first priority information and a second priority information, and
read requests including at least the second priority information includes a delay limit value showing the maximum value of a period which is from the arrival time of the read request to the time when the read operation finishes, comprises
   read command outputting means for outputting the above-described read requests to the above-described storage devices as read command,
   wherein the read command outputting means outputs a read command including the first priority information within delay limit value for an arrived read request including the second priority information and with priority to the arrived read request including the second priority information.

According to the 29th aspect, the read command outputting means can read data immediately in compliance with the read command (including the first priority information) which has to be responded quickly, so as not to exceed delay limit value for the other read requests (including the second priority information priority).

In accordance with the 30th aspect in the 29th aspect, the storage device control unit is characterized in that the above-described data is divided into unit blocks of a predetermined size,
consecutive empty areas where the determined number of unit block can be written, are selected from the empty areas of the storage device as many as the number which the data needs,
the selected consecutive empty areas are stored in the storage devices as a position file to fix a position to record the data, and
read requests which reads out the position files from the above-described storage devices include each the first priority information.

According to the 30th aspect, read requests which reads the position files out of the storage devices include each the first priority information, and thereby the position file is read preferentially.

In accordance with the 31st aspect in the 29th aspect, the storage device control unit further comprises:
a first read queue which holds the read requests including the first priority information in a queue,
a second read queue which holds the read requests including the second priority information in a queue, and
allowable delay information computing/managing means for computing and then managing an estimated processing period which is estimated to be period for each of the read operations performed in compliance with the read request, an expected ending time when the read operation is expected to finish, and an allowable delay value which is obtained by subtracting the expected ending time from an ending time, obtained by referring to the delay limit value, when the read operation has to finish,
   wherein read command outputting means, when the estimated processing period for the read request held in the first read queue is less than each of the allowable delay values for the read requests held in the second read queue, outputs a read request located at the head of the queue held in the first read queue as the read command.

According to the 31st aspect, the read command outputting means, when the estimated processing period for the read request held in the first read queue is less than each of the allowable delay values for read requests held in the second read queue, outputs the read command from the first read queue, and thereby the read request including the first priority information is outputted as a command preferentially.

In accordance with the 32nd aspect in the 29th aspect, the storage device control unit further comprises:
a read queue which holds read requests including the first priority information and the second priority information in a queue,
position fixing means for fixing a predetermined position to which to enqueue a read request arrived newly from the external to the read queue, and
allowable delay information computing/managing means for computing and then managing an estimated processing period which is estimated to be period for the read operation performed in compliance with each read request held in the read queue, an expected ending time when the read operation is expected to finish, and an allowable delay value which is obtained by subtracting the expected ending time from an ending time, obtained by referring to the delay limit value, when the read operation has to finish,
   wherein the position fixing means enqueues a read request including the first priority information to the queue so that the read request is outputted as a read command within delay limit value for the read request, which is being held in the read queue, including the second priority information and with priority to the read request including the second priority information, and
the read command outputting means outputs the read commands as the read command in the order from the head of the queue held in the read queue.

According to the 32nd aspect, the read request including the first priority information and the second priority information are held in the same queue. Then, the position fixing means fixes the position in the read queue to which to enqueue the newly-arrived read request including the first priority information so that the newly-arrived read request is preferentially outputted as a read command within the delay limit value for the read request, which is being held in the read queue, including the second priority information.

The read command outputting means outputs the read requests as read commands in order from the head of the queue held in the read queue. Therefore, there is no need to select a queue in order to output the redout command, which leads to effective process in the storage device.

In accordance with the 33rd aspect in the 32nd aspect, the storage device control unit is characterized in that the position fixing means, when the read request including the first priority information has arrived newly, defines read request including the second priority information which is nearest to the tail of the queue held in the read queue as a sample request and
the allowable delay information computing/managing means computes an estimated processing period for an arrived read request having the first priority information, which has been inputted by the position fixing means, when the position just ahead of the sample request is temporarily fixed as a position to enqueue the arrived read request to, and
the position fixing means
   compares the estimated processing period for the newly-arrived read request with allowable delay values for the sample request and read requests including the second priority information behind the sample request,
   when each of the allowable delay values is the estimated processing period or more, fixes finally a position just ahead of the sample request to enqueue the newly-arrived read request to,
   when at least one of the allowable delay values is less than the estimated processing period, judges whether the sample request is located at the tail of the queue held in the read queue,
   when the sample request is sitting at the tail, enqueues the newly-arrived read request to the tail of the queue held in the read queue, and,
   when the sample request is not located at the tail, defines a read request located just behind the sample request as a new sample request.

According to the 33rd aspect, the read request including the first priority information can be preferentially outputted as a read command.

In accordance with the 34th aspect in the 32nd aspect, the storage device control unit is characterized in that the above-described storage devices have disks for store of the above-described unit blocks,
the estimated processing period is computed based on
   seek time for a head of the above-described storage devices to move between tracks or cylinders where unit blocks to be read in compliance with the read request and a read request located just ahead of the read request are stored,
   transfer time to transfer the unit block to be read in compliance with the read request from the disks, and
   predetermined overhead time and rotational latency.

According to the 34th aspect, the estimated processing period can be calculated as precisely as possible.

In accordance with the 35th aspect in the 32nd aspect, the storage device control unit is characterized in that the estimated processing period means the period as a predetermined confidence limit which covers the set of measured periods obtained by reading the data of the same size as the unit block from the storage device plural times consecutively.

According to the 35th aspect, the estimated processing period is obtained based on an actual measured time, which can lead to precise value.

In accordance with the 36th aspect in the 29th aspect, the storage device control unit is characterized in that the above-described read request includes any one of pieces of the first to a third priority information and
the read request outputting means, when a newly-arrived read request has the third priority information, outputs the newly-arrived read request as read command after all of read requests including the first priority information and the second priority information are outputted.

According to the 36th aspect, the read request including the third priority information is outputted as a read command after all of read requests including the first priority information and the second priority information are outputted. Therefore, when data (for example, video data and the like) which has to keep the delay limit time strictly is read, the first priority information and the second priority information are used, and, data (for example, stationary image data, computer data and the like) which does not have to keep the delay limit time is read, the third priority information is used. Therefore, time to read data in compliance with the read request including the third priority information has no influence on the read request including the first priority information and the second priority information, and thereby since the delay limit time is keep strictly, a variety of data (video data, stationary image data, computer data and the other) can be stored in the storage devices,

In accordance with the 37th aspect, a storage device control unit for controlling write operation or read operation of data on storage devices to be performed, in compliance with write requests or read requests successively arriving from the external, wherein
each of the above-described read requests and the above-described write requests includes a delay limit value showing the maximum value of a period which is from the arrival time of the read request or the write request to the time when the read operation or the write operation finishes, comprises:
   a read queue which holds temporarily the above-described read requests in a queue,
   a write queue which holds temporarily the above-described write requests in a queue,
   command outputting means for choosing the read queue or the write queue and outputting a read request or a write request located at the head of the queue held in the read queue or the write queue to the above-described storage devices as a read or a write command respectively,
   allowable delay information computing/managing means for computing and then managing an estimated processing period which is estimated to be period for the operation to be performed in compliance with each arrived read request or each arrived write request, an expected ending time when the operation is expected to finish, and an allowable delay value which is obtained by subtracting the expected ending time from an ending time, obtained by referring to the delay limit value, when the operation has to finish,
   buffer memory managing/judging mans for managing a used capacity of a buffer memory which stores temporarily data to be written into the above-described storage devices and judging whether the used capacity is not less than a predetermined threshold value,
   comparing means for comparing the estimated processing period for the write request located at the head of the queue held in the write queue with each minimum value of the allowable delay values for the read requests composing the queue held in the read queue,
   judging means for judging whether the read request or the write request is held in the read queue or the write queue,
   wherein the command outputting means,
   when the buffer memory managing/judging mans judges that the used capacity is a predetermined threshold value or more,
   when the allowable delay value for the write request which is managed by the allowable delay information computing/managing means reaches a predetermined constant value,
   when the judging means judges that the write request and the read request is held in the write queue and the read queue and the comparing means judges that the estimated processing period for the write request is less than the minimum value of the allowable delay time,
   when the judging means judges that only the write request is held in the write queue, chooses the write queue, and,
   when the judging means judges that the write request and the read request is held in the write queue and the read queue and the buffer memory managing/judging means judged that the used capacity is less than the predetermined threshold value and
when the judging means judges that only the read request is held in the read queue, chooses the read queue.

According to the 37th aspect, the write command is preferentially outputted within the delay limit time for each of the read request. This enables data to be read from the storage devices within the delay limit time and satisfies real time. Also, as there is no case where the buffer memory overflows data written into the storage device is improved in reliability. Further, as the write request which is beyond the delay limit time is prior outputted as write command it can be prevented from occurring that as data is being written the data is not able to be read. Therefore, data or the like which plural users read can be written into the storage devices certainly.

In accordance with the 38th aspect, a storage device control unit for controlling write operation or read operation of data on storage devices to be performed, in compliance with write requests or read requests successively arriving from the external, wherein
the above-described read request includes any one of first to third priority information,
read requests including at least the first priority information and the second priority information and the above-described write requests includes a delay limit value showing the maximum value from the arrival time of the read request or the write request to the time when the read operation and the write operation finish, comprises:
   a first read queue which holds temporarily read requests including the first priority information and the second priority information in a queue,
   a second read queue which holds temporarily read requests including the third priority information in a queue,
   a write queue which holds temporarily the above-described write requests in a queue,
   position fixing means for fixing a predetermined position in the first read queue to which to enqueue a read request arrived from the external including the first priority information,
   command outputting means for choosing one from the first read queue, the second read queue and the write queue, and outputting a read request from the head of the queue held in the chosen to the above-described storage devices as a read or a write command respectively,
   allowable delay information computing/managing means for computing and then managing an estimated processing period which is estimated to be period for the operation to be performed in compliance with each arrived read request or each arrived write request, an expected ending time when the operation is expected to finish, and an allowable delay value which is obtained by subtracting the expected ending time from an ending time, obtained by referring to the delay limit value, at which the operation has to finish,
   buffer memory managing/judging means for managing a used capacity of a buffer memory which stores temporarily data to be written into the above-described storage devices and judging whether the used capacity is not less than a predetermined threshold value or not,
   comparing means for comparing the estimated processing period for the write request located at the head of the queue held in the write queue with the minimum value of the allowable delay values for read requests composing the queue held in the first read queue,
   judging means for judging whether the read request or the write request is held in the first read queue, the second read queue or the write queue and whether a read request including the first priority information is held in the first read queue, wherein
      the position fixing means enqueues the read request including the first priority information to the first read queue so that the read request is outputted as a read command within a delay limit value for the read request, which is being held in the first read queue, including the second priority information and with priority to the read request including the second priority information, and,
      the command outputting means,
         when the buffer memory managing/judging means judges that the used capacity is a predetermined threshold value or more,
         when the buffer memory managing/judging means judges that the used capacity is less than the predetermined threshold value, and the allowable delay value for the write request which is managed by the allowable delay information computing/managing means reaches a predetermined constant value, and
         when the buffer memory managing/judging means judges that the used capacity is less than the predetermined threshold value, and the allowable delay value for the write request which is managed by the allowable delay information computing/managing means does not reach the predetermined constant value, and further the judging means judges that the read request including the first priority information is not stored, and the comparing means judges that the estimated processing period for the write request is less than the minimum of the allowable delay value, chooses the write queue,
         when the buffer memory managing/judging means judges that the used capacity is less than the predetermined threshold value, and the allowable delay value for the write request which is managed by the allowable delay information computing/managing means does not reach the predetermined constant value, and further the judging means judges that the read request including the first priority information is stored in the first read queue,
         when the buffer memory managing/judging means judges that the used capacity is less than the predetermined threshold value, and the allowable delay value for the write request which is managed by the allowable delay information computing/managing means does not reach the predetermined constant value, and further the judging means judges that the read request including the first priority information is not stored in the first read queue, and the comparing means judges that the estimated processing period for the write request is more than the minimum of allowable delay value, and
         when the judging means judges that the write request is not stored, chooses the first read queue, and,
      when the judging means judges that the read request is stored in only the second read queue, chooses the second read queue.

According to the 38th aspect, like as the 37th aspect, the write command is preferentially outputted within the delay limit time for each of the read request. This enables data to be read of the storage devices and satisfies real time. Also, as there is no case where the buffer memory overflows data written into the storage device is improved in reliability. Further, as the write request which is beyond the delay limit time is preferentially outputted as a write command, which prevents the situation that the data can not be read because the write operation of data is not finished. Therefore, data and the like which a lot of users read can be written into the storage devices certainly.

Further, the read request including the first priority information and the second priority information is held in the first read queue. Then, the position fixing means fixes the position in the first read queue to which to enqueue the read request including the first priority information to the first queue so that the read request is preferentially outputted as a read command. Therefore, there is no need to select a queue in order to output the redout command, which leads to effective process in the storage device.

In accordance with the 39th aspect, a storage device control unit for controlling write operation or read operation of data on storage devices to be performed, in compliance with write requests or read requests successively arriving from the external, wherein
each of the above-described read or write requests includes priority information to set a priority outputted as a command, comprises:
   a plurality of queues which holds temporarily the above-described read or write requests in a queue,
   position fixing means for fixing a predetermined position in a predetermined queue to which to enqueue the read or write request arrived from the external based on the priority information,
   command outputting means for choosing any one from the plurality of queues and outputting a write or read request located at the head of the queue held in the selected queue to the above-described storage devices as the write or read command, and
   state-number holding means for holding state numbers which decides if the write request should be outputted as the command and the read request should be outputted as the command,
   wherein the command outputting means selects any one from the plurality of queues based on the state numbers held by the stat-number holding means.

According to the 39th aspect, the command outputting means selects the queue to be selected with reference to this state number, thereby there is no need to select the queue which outputs a command. This can shorten processing time to output the command, and, as a result, there can be provided a storage device control unit which is capable of shortening time to read data and to write data.

In accordance with the 40th aspect in the 39th aspect, the storage device control unit is characterized in that each of the above-described read requests and the above-described write requests includes a delay limit value showing the maximum value of a period which is from the arrival time of the read request or the write request to the time when the read operation or the write operation finishes, and
a plurality of queues are a read queue which holds temporarily the above-described read requests in a queue and a write queue which holds temporarily the above-described write requests in a queue, comprises:
   allowable delay information computing/managing means for computing and then managing an estimated processing period which is estimated to be period for the operation to be performed in compliance with each arrived read request or each arrived write request, an expected ending time when the operation is expected to finish, and an allowable delay value which is obtained by subtracting the expected ending time from an ending time, obtained by referring to the delay limit value, at which the operation has to finish,
   buffer memory managing/judging means for managing a used capacity of a buffer memory which stores temporarily data to be written into the above-described storage devices and judging whether the used capacity is not less than a predetermined threshold value,
   comparing means for comparing the estimated processing period for the write request located at the head of the queue held in the write queue with the minimum value of the allowable delay values for read requests composing the queue held in the read queue, and
   judging means for judging whether the read request and the write request are held in the read queue and the write queue respectively, wherein
      the state-number holding means holds:
         a first state-number showing a case where the buffer memory managing/judging means judges that the used capacity is a predetermined threshold value or more,
         a second state-number showing a case where the allowable delay value for the write request which is managed by the allowable delay information computing/managing means reaches a predetermined constant value,
         a third state-number showing a case where the judging means judges that the write request or read request is held in the write or read queue and the comparing means judges that the estimated processing period for the write request is less than the minimum value of the allowable delay time,
         a forth state-number showing a case where the judging means judges that only the write request is held in the write queue,
         a fifth state-number showing a case where the judging means judges that the write request or read request is held in the write and read queue and the buffer memory managing/judging means judges that the used capacity is less than the predetermined threshold value, and
         a sixth state-number showing a case where the judging means judges that only the read request is held in the read queue,
      the position fixing means enqueues the read request including a first priority information to the read queue so that the read request is outputted as a read command within an allowable delay value for the read request including a second priority information, which has been held in the read queue and with priority to the read request including the second priority information,
      the command outputting means
         chooses the write queue when the state-number holding means holds any one of the first to fourth state numbers, and
         chooses the read queue when the state-number holding means holds the fifth or sixth state number.

According to the 40th aspect, the command outputting means decides whether the read command is outputted from the read queue or the write command is outputted from the write queue with reference to the allowable delay information computing/managing means, the buffer memory managing/judging means, the comparing means and the judging means. This enables data to be read from the storage devices to satisfy real time. Also, there is no case where the buffer memory overflows, and thereby data can be written into the storage device certainly. Further, it can be prevented the situation that the data can not be read because the write operation is not finished.

In accordance with the 41st aspect in the 39th aspect, the storage device control unit is characterized in that the above-described read request includes any one of first to third priority information,
each of read requests including at least the first priority information and the second priority information or each of the above-described write requests includes a delay limit value showing the maximum value of a period which is from the arrival time of the read request and the write request to the time when the read operation and the write operation finish,
a plurality of queues are a first read queue which holds temporarily read requests including the first priority information and the second priority information in a queue, a second read queue which holds temporarily read requests including the third priority information in a queue, and a write queue which holds temporarily the above-described write requests in a queue, comprises:
   allowable delay information computing/managing means for computing and then managing an estimated processing period which is estimated to be period for the operation to be performed in compliance with each arrived read request or each arrived write request, an expected ending time when the operation is expected to finish, and an allowable delay value which is obtained by subtracting the expected ending time from an ending time, obtained by referring to the delay limit value, at which the operation has to finish,
   buffer memory managing/judging means for managing a used capacity of a buffer memory which stores temporarily data to be written into the above-described storage devices and judging whether the used capacity is not less than a predetermined threshold value,
   comparing means for comparing the estimated processing period for the write request located at the head of the queue held in the write queue with each of the minimum allowable delay values for read requests composing the queue held in the first read queue,
   judging means for judging whether the read request or the write request is held in the first read queue, the second read queue or the write queue and whether a read request including the first priority information is held in the first read queue, wherein
      the position fixing means enqueues the read request including the first priority information to the queue so that the read request is outputted as a read command within a delay limit value for the read request, which is being held in the read queue, including the second priority information and with priority to the read request including the second priority information,
      the state-number holding means holds:
         a first state-number showing a case where the buffer memory managing/judging means judges that the used capacity is a predetermined threshold value or more,
         a second state-number showing a case where the buffer memory managing/judging means judges that the used capacity is less than the predetermined threshold value, and the allowable delay value for the write request which is managed by the allowable delay information computing/managing means reaches the predetermined constant value,
         a third state-number showing a case where the buffer memory managing/judging means judges that the used capacity is less than the predetermined threshold value, and the allowable delay value for the write request which is managed by the allowable delay information computing/managing means does not reach the predetermined constant value, and further the judging means judges that the read request including the first priority information is not stored, and the comparing means judges that the estimated processing period for the write request is less than the minimum of allowable delay value, chooses the write queue,
         a fourth state-number showing a case where the buffer memory managing/judging means judges that the used capacity is less than the predetermined threshold value, and the allowable delay value for the write request which is managed by the allowable delay information computing/managing means does not reach the predetermined constant value, and further the judging means judges that the read request including the first priority information is stored in the first read queue,
         a fifth state-number showing a case where the buffer memory managing/judging means judges that the used capacity is less than the predetermined threshold value, and the allowable delay value for the write request which is managed by the allowable delay information computing/managing means does not reach the predetermined constant value, and further the judging means judges that the read request including the first priority information is not stored in the first read queue, and the comparing means judges that the estimated processing period for the write request is more than the minimum of allowable delay value,
         a sixth state-number showing a case where the judging means judges that the write request is not stored in the write queue, and
         a seventh state-number showing a case where the judging means judges that the read request is stored only in the second read queue,
      the command outputting means
         chooses the write queue when the state-number holding means holds any one of the first to third state numbers,
         chooses the read queue when the state-number holding means holds the fourth to sixth state number, and
         chooses the read queue when the state-number holding means holds the seventh state number.

According to the 41st aspect, data to be read from the storage devices can satisfy real time. Also, there is no case where the buffer memory overflows, and thereby the data can be written into the storage device certainly. Also, the situation that the data can be read because the write operation of data is not finished can be prevented. Further, data which has to keep real time and data which does not have to be written into the same storage device.

In accordance with the 42nd aspect in the 38th aspect, the storage device control unit is characterized in that the position fixing means, when a read request including the first priority information has arrived newly from the external, defines read a request which is located at the nearest to the tail of the first read queue and further including the second priority information as a sample request and
the allowable delay information computing/managing means computes an estimated processing period for the arrived read request when the position fixing means temporarily fixes a position just ahead of the sample request to which to enqueue the arrived read request, and
the position fixing means
   compares the estimated processing period for the newly-arrived read request with the allowable delay value for the sample request and each of the read requests including the second priority information and located behind the sample request,
   when each of the allowable delay values is the estimated processing period or more, fixes finally a position just ahead of the sample request to which to enqueue the newly-arrived read request,
   when at least one of the allowable delay values is less than the estimated processing period, judges whether the sample request is located at the tail of the queue held in the first read queue,
   when the sample request is located at the tail, enqueues the newly-arrived read request at the tail of the queue held in the first read queue, and,
   when the sample request is not located at the tail, defines a read request located just behind the sample request as a new sample request.

According to the 42nd aspect, the read request including the first priority information can be preferentially outputted as a read command.

In accordance with the 43rd aspect in the 38th aspect, the storage device control unit is characterized in that the above-described storage devices have disks for store of the above-described unit blocks,
the estimated processing period is computed based on
   seek time for a head of the above-described storage devices to move between tracks or cylinders where, in the first and second read queue, each of the unit blocks to be read in compliance with the read request and a read request enqueued just ahead of the request are stored,
   transfer time to transfer the above-described unit block to be read in compliance with the read request from the disks, and
   predetermined overhead time and rotational latency.

According to the 43rd aspect, the estimated processing period can be calculated as precisely as possible.

In accordance with the 44th aspect in the 38th aspect, the storage device control unit is characterized in that the estimated processing period means the period as a predetermined confidence limit which covers the set of measured periods obtained by reading the data of same size as the unit block from the storage device plural times repeatedly, or means the period as a predetermined confidence limit which covers the set of measured periods obtained by writing the data into the storage device plural times consecutively.

According to the 44th aspect, the estimated processing period is obtained based on actual measured time, which can lead to precise value.

In accordance with the 45th aspect, a storage device management system, which applied to a system which distributes data divided into blocks as units for write to a plurality of storage devices, wherein
each of the storage devices is provided with a first identifier which is different from that of the other storage devices, comprises:
   a first managing part which manages at least each of the first identifier,
   a second managing part which manages an empty area of each storage devices with using address of each empty area into which the block is able to be written and the first identifier,
   a destination determining part, with referring to the first and second managing porions, which creates a combination of the identifier and the above-described address for each of all or part of the storage devices and then rearranges the created combinations, and thereby determine destinations of the data.

As described above, the storage device management system in accordance with the 45th aspect determines destinations of data so that data is equally distributed to the plural storage devices. Therefore, since, when read of data and so on is performed, the access does not concentrate in the specific storage device but is made equally to all storage devices, the band large enough can be obtained in the storage device as a whole.

Further, the order of access to the storage devices when a data which is written into the storage devices according to the above-described destination of data is read is different from the order for each of the other data. Therefore, since, even when the read requests for data are generated simultaneously, the access order is different from each other, the storage device management system can respond to the read request of data at high speed.

In accordance with the 46th aspect, a storage device management system, which applied to a system which is used to distribute data divided into blocks as units for write to a plurality of storage devices divided into predetermined groups, wherein
each of the storage devices is provided with a first identifier which is different from that of the other storage devices belonging to the same group,
each of the group is provided with a second identifier which is different from that of the other groups, comprises:
   a first managing part which manages at least each first identifier and each second identifier,
   a second managing part which manages an empty area of each of the storage devices with using address of each empty block into which the block is able to be written and the first and second identifier,
   a destination determining part which selects all or part of the groups, with referring to the first and second managing parts, and, in the group, selects one storage device for each, at random and so that the same storage device is not selected until all storage devices belonging to the group are selected thoroughly, and creates a combination of the first and second identifiers and the address for each of the selected storage devices and then rearranges the created combinations at random, and thereby determines destinations of the data.

As described above, the storage device management system in accordance with the 46th aspect determines destinations of data so that when the system manages plural storage devices which are divided into plural groups the blocks composing data are equally distributed to each group and further to storage devices belonging to each group. Therefore, since, when read of data and so on is performed, the access does not concentrate in the storage devices belonging to the specific group and in each storage device belonging to each group, and is made equally to both all groups and storage devices belonging to each group, the band large enough can be obtained in the storage device as a whole.

Further, like as the 45th aspect, the order of access to the storage devices when a data which is written into the storage devices according to the above-described destination of data is read is different from the order for each of the other data. Therefore, the storage device management system can respond to the read request of data at high speed.

In accordance with the 47th aspect in the 45th aspect, a storage device management system is characterized in that at least one of the plural storage devices is different from the other storage devices in performance,
when the data is distributed to the plurality of storage devices, the rate of the block distributed to each storage device is set, based on the performance, as a distribution rate, and
the destination determining part selects storage devices for creating combinations according to the distribution rate, creates a combination for each of the selected storage devices and further rearranges the created combinations at random.

As described above, the storage device management system in accordance with the 47th aspect determines destinations of data so that each storage device has equal load with using the distribution rate.

In accordance with the 48th aspect in the 46th aspect, a storage device management system is characterized in that at least one of the storage devices belonging to each of the groups is different from the other storage devices belonging to the same group in performance,
when the data are distributed to the plurality of storage devices, the rate of the block distributed to each storage device belonging to the same group is preset, based on the performance, as a first distribution rate and when the data are distributed to the plural groups, the rate of the block distributed to each group is preset, based on the performance of the storage device belonging to the group, as a second distribution rate, and
the destination determining part selects groups to be distributed the blocks thereto according to the second distribution rate, selects, as the storage device to create combinations, any one storage devices belonging to the selected group according to the first distribution rate, creates the combination for each of the selected storage device and further rearranges the created combinations at random.

As described above, the storage device management system in accordance with the 48th aspect determines destinations of data so that each group has equal load and each storage device belonging to each group has equal load, with using the first and the second distribution rate.

In accordance with the 49th aspect in the 47th aspect, a storage device management system is characterized in that the distribution rate is beforehand managed therein.

In accordance with the 50th aspect in the 47th aspect, a storage device management system is characterized in that the distribution rate is obtained therein based on the performance.

In accordance with the 51st aspect in the 48th aspect, a storage device management system is characterized in that the first and/or second distribution rates are beforehand managed therein.

In accordance with the 52nd aspect in the 48th aspect, a storage device management system is characterized in that the first and/or second distribution rate is obtained therein based on the performance.

The storage device management system in accordance with the 49th and the 51st aspect beforehand manages the distribution rate and the first and the second distribution rate therein, and thereby the process in the system can be facilitated.

The storage device management system in accordance with the 50th and the 52nd aspect obtains therein the distribution rate and the first and the second distribution rate, and thereby follows easily the procedure when, for example, storage devices are increased or decreased,

In accordance with the 53rd aspect in the 52nd aspect, a storage device management system is characterized in that when the destination determining part repeats the random rearrangement of the created combinations and thereby the number of blocks where the destinations of the data being not determined becomes less than the number of the all or part of storage devices,
the destination determining position selects storage devices for creating combinations based on the number of empty blocks which each storage device has and further creates the combination for each of the selected storage devices.

The number of blocks composing the data to be distributed is not always multiple of the number of storage devices. Therefore, the storage device management system in accordance with the 53rd aspect determines destinations of data so that data are distributed to the storage device having many empty blocks. As a result of that, data are equally distributed to the storage devices. The storage device can obtain more great band.

In accordance with the 54th aspect in the 52nd aspect, a storage device management system is characterized in that when the destination determining part repeats the random rearrangement of the created combinations
the destination determining part rearranges the created combinations at random, both in the determined data destination and in the rearranged combinations, so as not to distribute the data to the same storage device repetitively at the block corresponding the predetermined number of combinations.

In the storage device management system in accordance with the 54th aspect, the identifier showing the same storage device does not exist in a predetermined block. Therefore, access is more equally made to all storage devices when, for example, data written according to the destinations determined in the way described above is read. Therefore, all storage devices can be used effectively in capacity, and thereby greater band can be obtained.

In accordance with the 55th aspect in the 52nd aspect, a storage device management system is characterized in that each plural data which is different in his character from each other is distributed to the plural storage devices,
the destination determining part takes out the addresses corresponding to the number of the character and masses the taken-out addresses, and further creates a combinations with using the mass of addresses.

As described above, in the storage device management system in accordance with the 55th aspect, the number of block address changes according to the character of data. Therefore, the processing efficiency of storage devices can be improved.

In accordance with the 56th aspect in the 55th aspect, a storage device management system is characterized in that the character means the band when the data are written into the storage devices, and
the destination determining part takes out the addresses of which number being determined based on the band.

As described above, in the storage device management system in accordance with the 56th aspect, only the same number of address is taken out as determined based on the band. Therefore, for example, data which require great band are able to be written into the consecutive area, and thereby the processing efficiency of storage devices when the data are read can be improved.

In accordance with the 57th aspect, a storage device control unit for controlling write operation or read operation of data on storage devices in compliance with requests successively arrived by the external, wherein
each of the requests has an access position for the write operation or read operation on the storage device, comprises:
   queue means for temporarily holding requests, which is not being processed standing in order of process in a queue,
   request receiving means for receiving a request arrived newly from the external, calculating limited rearrangement time for the arrived request and enqueuing the arrived request to the queue means,
   position fixing means for fixing a position to enqueue the requests received by the request receiving means to the queue means so that a first condition is satisfied, and
   holding means for calculating and holding weighted time and expected ending time for each of the requests held in the queue means, wherein
      the limited rearrangement time is determined based on the arrival time of the request, and
      the weighted time for each request held in the queue means is determined based on an access position which the request has and an access position which a request to be processed just ahead of the request has,
      the expected ending time is obtained by adding the weighted time to the arrival time, further comprises
         command outputting means for outputting requests held in the queue means in the order of the queue to the storage devices as commands,
         wherein the position to satisfy the first condition is so that the expected ending time is not beyond the limited rearrangement time or each arrived request and the sum of the weighted time is the sum of the weighted time assuming that a request received newly by the request receiving means is enqueued to the end of the queue, or less.

According to the 57th aspect, the queue means holds the order of output of command and the holding means holds the weighted time and the expected ending time for each of the requests composing the queue. The position fixing means fixes, when all of the arrived requests are processed, a position to enqueue the requests received by the request receiving means to the queue means so that the expected ending time is not beyond the limited rearrangement time for all of arrived requests and the sum of the weighted time is not more than the sum of the weighted time assuming that a request received newly by the request receiving means is enqueued to the end of the queue. Therefore, use efficiency of storage devices can be improved even with a delay limit when the requests composing the queue is rearranged.

In accordance with the 58th aspect in the 57th aspect, a storage device control unit is characterized in that the requests are write requests to write data and read requests to read data,
the queue means includes a write queue and a read queue to temporarily hold write requests or read requests which is not being processed,
the request receiving means further calculates limited rearrangement time for the request arrived newly from the external and enqueues the arrived request, and
the command outputting means, when the expected ending time for each of the read requests held in the read queue is not beyond the limited rearrangement time, preferentially outputs the write request held in the write queue as a command.

According to the 58th aspect, the read requests and the write requests are held in respective queues, and the expected ending time is computed based on each of the queues. In this case, the write requests are outputted as commands when the expected ending time in compliance with the read request is within a predetermined limit time, thereby data to be read from the storage devices can keep real time with improving use efficiency of storage devices even when the read requests and the write requests are mixed together.

In accordance with the 59th aspect in the 58th aspect, a storage device control unit is characterized in that maximum necessary period to finish write operation in compliance with the request on the storage device after the request has arrived is set as maximum processing time, and
the holding means changes the weighted time for the write request outputted as the command into the maximum processing time.

As known well, write operation by the storage devices does not actually finish on calculated expected ending time in many cases. Therefore, according to the 59th aspect, the maximum necessary period from the arrival of the request to the finish time of write operation in compliance with the request on the storage device is set as maximum processing time. Then, the holding means changes the weighted time for the write request outputted as the command into the maximum processing time for read operation, and thereby can correct the expected ending time and the weighted time for an outputted request as the command after the write command so as to keep real-time.

In accordance with the 60th aspect in the 57th aspect, a number is preset for the number of commands which the command outputting means is able to output to the storage devices in a determined period of time,
the command outputting means is characterized in outputting commands so as not to exceed the number of preset commands.

According to the 60th aspect, the number of commands which is efficient for operation of the storage device is set by limiting the number of commands to be outputted to the storage devices not to exceed a constant number, thereby the number of requests for rearrangement is increased and the use efficiency of the storage devices can be improved.

In accordance with the 61st aspect in the 57th aspect, the storage devices outputs the ending time when the write operation or read operation is finished in compliance with the command, comprises
command operation ending means for calculating a differential between ending time received from the storage devices and the expected ending time which the request has, the request being held in the holding means and finished to be processed in the storage device, wherein
the command operation ending means is characterized in recalculating the weighted time and the expected ending time for each of the requests held in the queue means or the limited rearrangement time based on the differential calculated by the command operation ending means.

According to the 61st aspect, when the ending time that the operation in storage device actually finishes is different from the expected ending time and the limited rearrangement time for requests composing the queue reflects on the differential so that a margin for absorbing the differential between the weighted time and the actual processing time can be decreased , thereby the number of requests for rearrangement can be increased the use efficiency of storage devices is improved.

In accordance with the 62nd aspect in the 61st aspect, the holding means is characterized in recalculating the expected ending time and the limited rearrangement time, only when the differential calculated by the command operation ending means is a predetermined value or more.

According to the 62nd aspect, the holding means, only when the differential is a predetermined value or more, the differential is reflected on the expected ending time for requests composing the waiting queue or the limited rearrangement time. Therefore, the load of processing the storage devices can be reduced.

In accordance with the 63rd aspect in the 57th aspect, a storage device control unit is characterized in that the requests are write requests to write data and read requests to read data,
the queue means includes a write queue and a read queue,
the request receiving means further calculates write priority time of the write request arrived newly from the external and enqueue the arrived request,
the write queue and the read queue temporarily holds write requests and read requests received by the request receiving means, and
the command outputting means, when the write queue holds the write request which reaches the write priority time, preferentially outputs the command from the write queue.

According to the 63rd aspect, when write requests which reach the write priority time in all requests composing the queue exist, the write requests are outputted as commands prior to the read requests, thereby improving reliability of data written into the storage device.

In accordance with the 64th aspect in the 57th aspect, the position fixing means is characterized in not enqueuing requests received by the request receiving means between the consecutive requests when each of requests standing connectively in order of process in a queue has consecutive or the same access positions.

According to the 64th aspect, when requests standing connectively in order of process in a queue have consecutive or the same access positions, the storage device control unit prohibits the newly arrived request from being enqueued between the requests. Therefore, such queue that decrease use efficiency is not configured.

In accordance with the 65th aspect, a processing order deciding method for determining to which position of a queue requests arrived connectively from the external are enqueued, the queue being temporarily hold requests in a queue so that the request stands in order of process, wherein
each of the requests has an access position for the write operation or read operation on the storage device, comprises:
   a first step of calculating and holding weighted time and expected ending time for each of the requests held in the queue, wherein
      the weighted time is determined based on an access position which the request has and an access position which a request to be processed just ahead of the request has, and the expected ending time is obtained by adding the weighted time to arrival time of the request in the queue,
   a second step of receiving a request arrived newly from the external, calculating limited rearrangement time for the arrived request and enqueuing the arrived request to the queue, wherein
      the limited rearrangement time is determined based on the arrival time of the request,
   a third step of enqueuing the requests arrived newly at the second step in a temporarily-determined position to satisfy a first condition in the queue means and recalculating the weighted time and the expected ending time for each of the requests currently held in the queue, and a fourth step of, when the weighted time and the expected ending time recalculated at the third step satisfies a second condition, determining that the newly-arrived request is enqueued in the temporarily-determined position, wherein
      the first condition is such that the access position which the newly-arrived request has and the access positions which requests located just ahead and/or behind of the newly-arrived request have are consecutive access positions or the same access position, and
      the second condition is such that the expected ending time for all of already-arrived requests is not beyond the limited rearrangement time and the sum of the weighted time is not less than the sum of the weighted time assuming that a request received newly at the first step is enqueued to the end of the queue.

According to the 65th aspect, the newly-arrived request is enqueued just ahead or behind of a request having the consecutive or the same access positions is in the queue means. And, the requests are enqueued to such positions that the expected ending time is not beyond the limited rearrangement time for the already-arrived requests and that the sum of the weighted time is not more than the sum of the weighted time assuming that the request is enqueued to the end of the queue. Therefore, the use efficiency of storage devices can be improved even with a delay limit caused by rearrangement of the requests.

In accordance with the 66th aspect, a processing order deciding method for determining to which position of a queue requests arrived connectively from the external is enqueued, the queue being temporarily hold requests in a queue so that the request stands in order of process, wherein
each of the write or read requests has an access position on the storage device and limited rearrangement time obtained by adding the predetermined period which is from the arrival time of the request to the finish time of the operation,
weighted time determined based on an access position which the request has and an access position which a request to be processed just ahead of the request has in the queue means, and
expected ending time obtained by adding the weighted time to the arrival time of the request, comprises:
   a first step of receiving a request arrived newly from the external, calculating limited rearrangement time for the arrived request and enqueuing the arrived request to the queue, wherein
      the limited rearrangement time is determined based on the arrival time of the request,
   a second step of enqueuing the newly-arrived request at the first step to the end of the queue as a temporarily-determined position and calculating a first sum of the weighted time which each request being held in the queue has,
   a third step of removing the newly-arrived request from the queue, enqueuing the request in a new temporarily-determined position of the queue, calculating weighted time and expected ending time for each of the requests held in the queue and calculating a second sum of the weighted time,
   a fourth step of comparing the first sum with the second sum,
   a fifth step of judging whether the expected ending time for each of the requests obtained at the third step is earlier than a first limited time for each of the requests,
   a sixth step of fixing a position to enqueue the newly-arrived request to the queue as the newly-temporarily-determined position when the first sum is more than the second sum at the fourth step and the expected ending time for each of the requests is earlier than the first limited time for each of the requests at the fifth step.

In the 66th aspect, like as in the 65th aspect the efficiency of storage devices can be improved even with the delay limit caused by rearrangement of the requests.

In accordance with the 67th aspect, a processing order deciding method for determining which position of a queue requests arrived connectively from the external are enqueued, the queue temporarily holding requests in a queue so that the request stands in order of process, wherein
each of the write or read requests has an access position for the write operation or read operation on the storage device and the limited rearrangement time obtained by adding predetermined period which is from the arrival time of the request to the finish time of the operation,
weighted time for each request held in the queue is determined based on an access position which the request has and an access position which a request to be processed just ahead of the request has, and
expected ending time obtained by adding the weighted time to the arrival time of the request is set, comprises:
   a first step of receiving a request arrived newly from the external, calculating a limited rearrangement time for the arrived request and enqueuing the arrived request to the queue, wherein
      the limited rearrangement time is determined based on the arrival time of the request,
   a second step of enqueuing the newly-arrived request at the first step in any position in the queue as a temporarily-determined position, calculating weighted time which each request held in the queue has, and calculating and holding a sum of the calculated weighted time, wherein
      the first step is repeated until the newly-arrived requests are enqueued in all positions in the queue and thereby the sum of the weighted time is corresponding with the number of requests composing the queue,
      a second step of selecting the smallest sum from the sums of plural of weighed time obtained by repeating the first step,
      a third step of setting temporarily a temporarily-determined position corresponding to the sum of the weighted time selected at the second step as a position to which the new-arrived request is enqueued,
      a fourth step of calculating and holding the expected ending time for each of the requests composing the queue when the newly-arrived request is enqueued in the position set temporarily at the fourth step, and
      a fifth step of fixing finally the position set temporarily at the fourth step as the position to enqueue the newly-arrived request when each expected ending time obtained at the fourth step is earlier than the limited rearrangement time.

In the 67th aspect, like as in the 65th aspect, the use efficiency of storage devices can be improved even with a delay limit caused by the rearrangement of the requests.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the storage device control unit and the peripheral devices according to the first embodiment of the present invention.

Fig. 2 is a block diagram showing the composition of the position information managing part 1 (see Fig. 1)

Fig. 3 is a diagram showing the empty area list which the empty area managing part 11 (see Fig. 2) has.

Fig. 4 is a flowchart showing the procedure when the address position file creating part 12 creates an address position file.

Fig. 5 is a diagram showing the address position list which the address position files (see Fig. 2) has.

Fig. 6 is a block diagram showing a detailed block structure of the request managing part 4 (see Fig. 1) and connection with the position information managing part 1, the storage devices and so on.

Fig. 7 is a diagram explaining the priority managing part 41 (see Fig. 6).

Fig. 8 is a diagram explaining rules for storing the read request inputted to the queue inputting porion 42 (see Fig. 6) in any one of the three kinds of the queues.

Fig. 9 is a diagram showing the queue management list which the queue managing part 43 (see Fig. 6) has.

Fig. 10 is a diagram explaining the allowable delay managing part 44 (see Fig. 6)

Fig. 11 is a flowchart showing the procedure of the processing of the queue inputting part 42 (see Fig. 6) when the top priority request is inputted.

Fig. 12 is a flowchart showing the procedure of the processing of the queue inputting part 42 (see Fig. 6) when the priority request is inputted.

Fig. 13 is a block diagram showing the detailed composition of the buffer memory managing part 45 (see Fig. 6).

Fig. 14 is a block diagram showing the detailed composition of the command output processing part 47 (see Fig. 6).

Fig. 15 is a diagram explaining a relation between the state numbers hold by the state table (see Fig. 6) and the queue to be selected by the command outputting part 471.

Fig. 16 is a block diagram showing the detailed composition of the command operation ending part 48 (see Fig. 6).

Fig. 17 is a flowchart showing the procedure executed for the command outputting part 471 to select a queue to output commands when the storage device control unit can be composed without the state showing table 46, and, the first, second and third state-showing-table updating parts 412, 444 and 453.

Fig. 18 is a block diagram showing the example of composition of the storage device management system according to the present invention.

Fig. 19 is a block diagram showing the example of composition of the storage device control unit and the peripheral devices which the storage device management system according to the first, the third and the fifth to seventh examples of the composition manages.

Fig. 20 is a flowchart showing the procedure of the address position file creating part 1803 (see Fig. 18) according to the first example of the composition.

Fig. 21 is a diagram showing one example of the address position file which the address position file creating part 1803 (see Fig. 18) creates according to the first example of the composition.

Fig. 22 is a block diagram showing the example of the composition of the storage device control unit and the peripheral devices which the storage device management system according to the second and the fourth examples of composition manages.

Fig. 23 is a flowchart showing the procedure of the address position file creating part 1803 (see Fig. 18) according to the second example of the composition.

Fig. 24 is a diagram showing one example of address position file which the address position file creating part 1803 (see Fig. 18) creates according to the second example of composition.

Fig. 25 is a flowchart showing the procedure of the address position file creating part 1803 (see Fig. 18) according to the third example of the composition.

Fig. 26 is a diagram showing what shifts are made in the computed destination values for the first identifiers SCSIa∼SCSIc when the steps S2505 and S2506 are executed repeatedly, and showing the storage devices 1805 to be selected at the step S2507.

Fig. 27 is a diagram showing one example of address position file which the address position file creating part 1803 (see Fig. 18) creates according to the third example of the composition.

Fig. 28 is a flowchart showing the procedure of the address position file creating part 1803 (see Fig. 18) according to the fourth example of the composition.

Fig. 29 is a diagram showing what shifts are made in the computed destination values of SCSIa∼SCSIc and for MSFS1 and/or MSFS2 when the steps S2805 and S2806 are executed repeatedly, and also showing the storage devices 1807 to be selected at the step 2808.

Fig. 30 is a diagram showing one example of address position file which the address position file creating part 1803 (see Fig. 18) creates according to the fourth of the example of the composition.

Fig. 31 is a flowchart showing the procedure of the address position file creating part 1803 (see Fig. 18) according to the fifth example of the composition.

Fig. 32 is a flowchart showing the procedure of the address position file creating part 1803 (see Fig. 18) according to the fifth example of the composition.

Fig. 33 is a flowchart showing the procedure of the address position file creating part 1803 (see Fig. 18) according to the sixth example of the composition.

Fig. 34 is a flowchart showing the procedure of the address position file creating part 1803 (see Fig. 18) according to the seventh example of the composition.

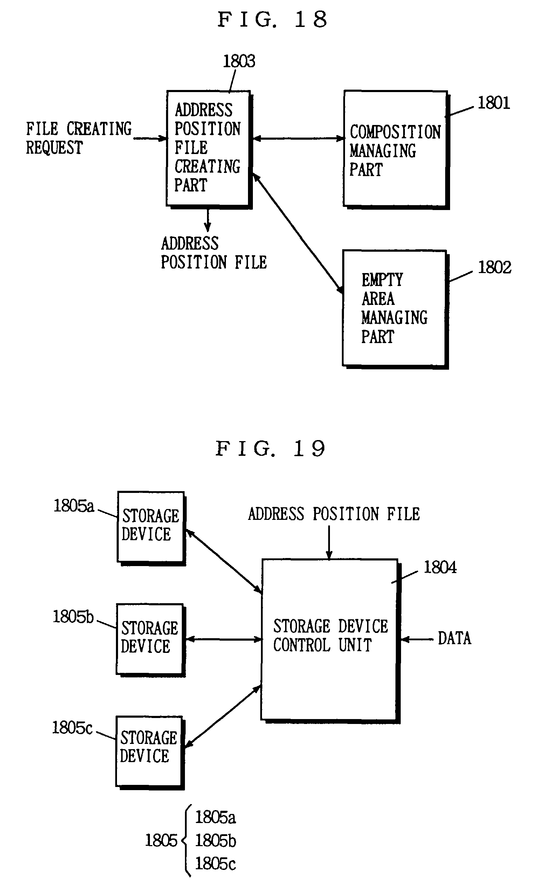

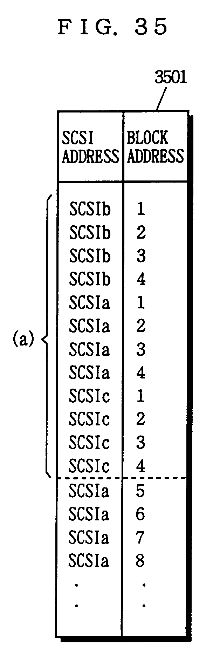

00 Fig. 35 is a diagram showing one example of address position file which the address position file creating part 1803 (see Fig. 18) creates according to the seventh example of the composition.

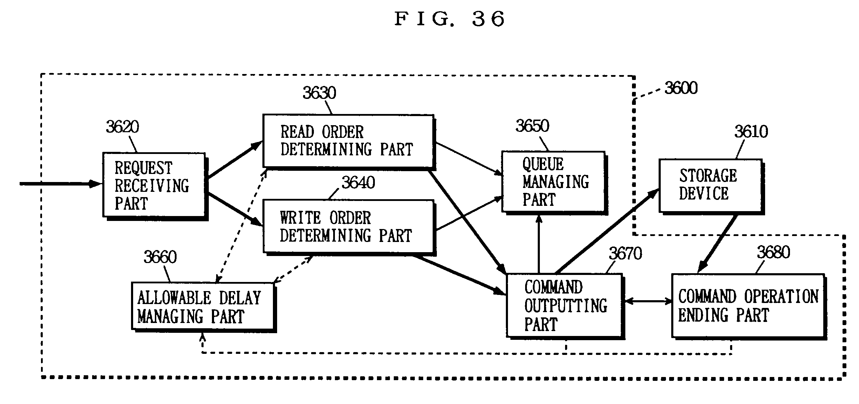

Fig. 36 is a block diagram showing the storage device control unit and the peripheral devices according to the second embodiment of the present invention.

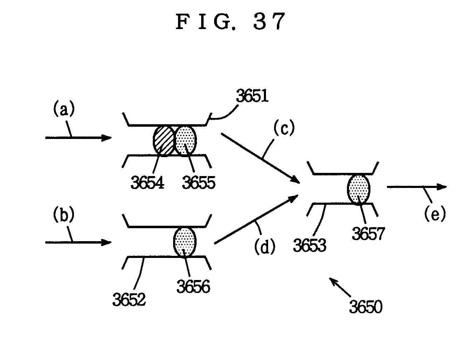

Fig. 37 is a diagram showing conceptually the composition of queue which the queue managing part 3660 (see Fig. 36) manages.

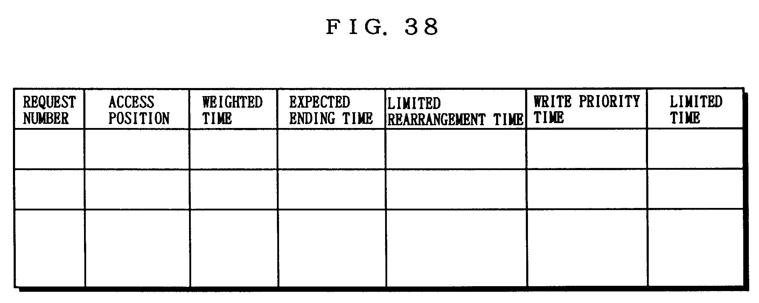

Fig. 38 is a diagram showing the allowable delay list which the allowable delay managing part 3660 (see Fig. 36) holds therein.

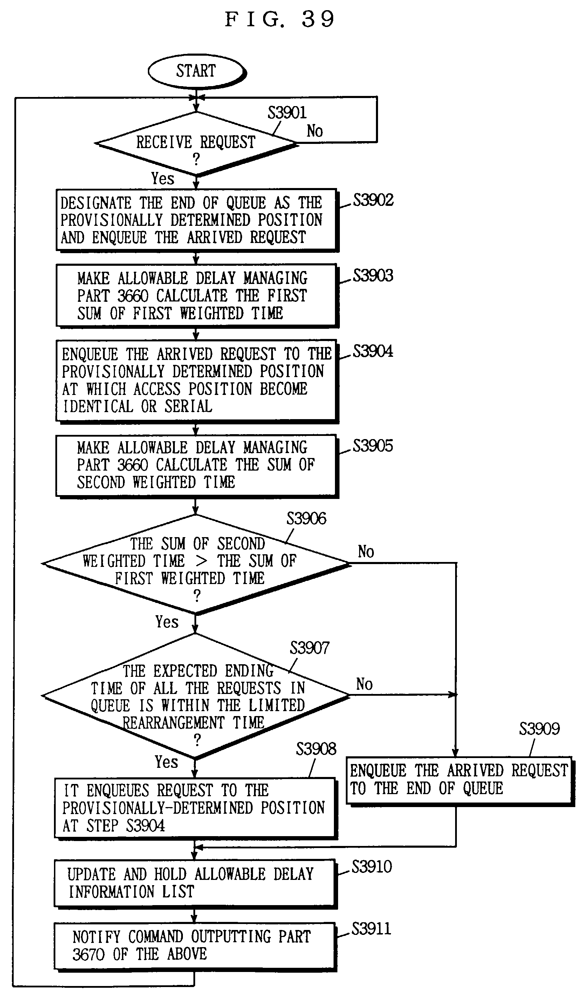

Fig. 39 is a flowchart showing another procedure to determine the order when the arrived read or write request is outputted as a command in the read order determining part 3640 and, the write order determining part 3650 (see Fig. 36).

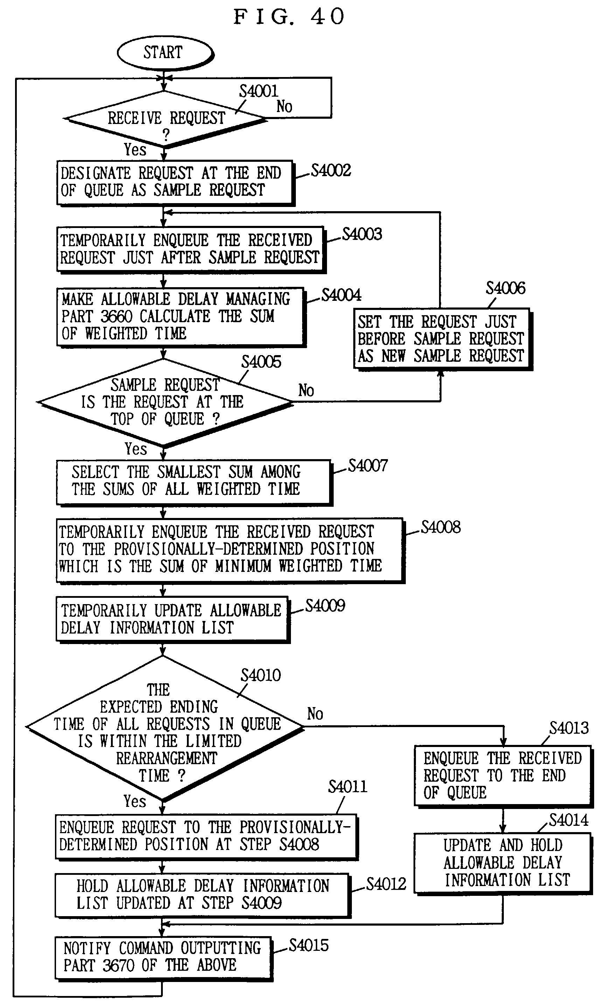

Fig. 40 is a flowchart showing another procedure to determine the order when the arrived read or write request is outputted as a command in the read order determining part 3640 and, the write order determining part 3650 (see Fig. 36).

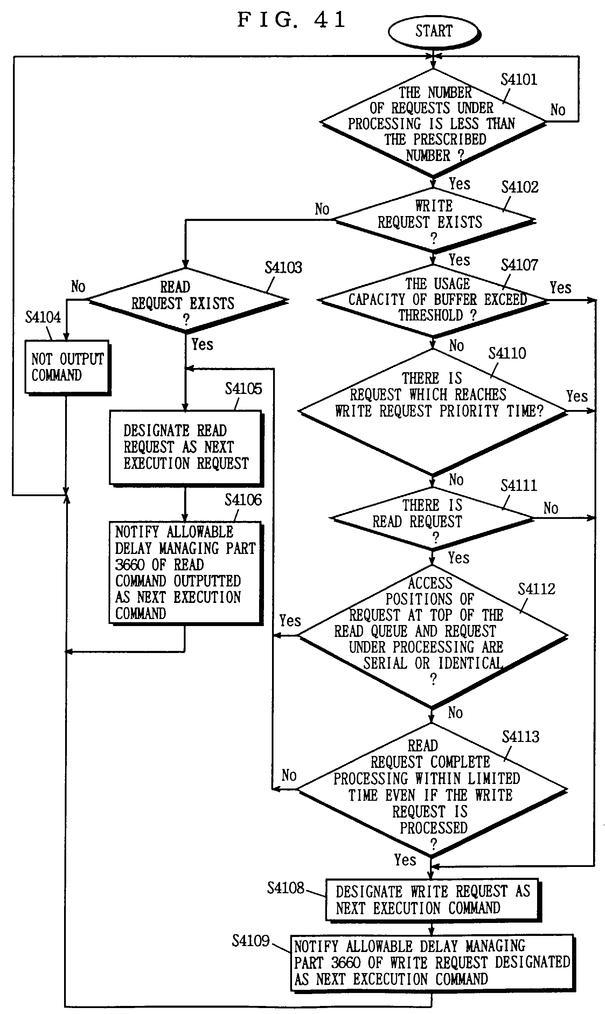

Fig. 41 is a flow chart showing the algorithm for selecting the queue outputting command at the command outputting part 3670 (see Fig. 36).

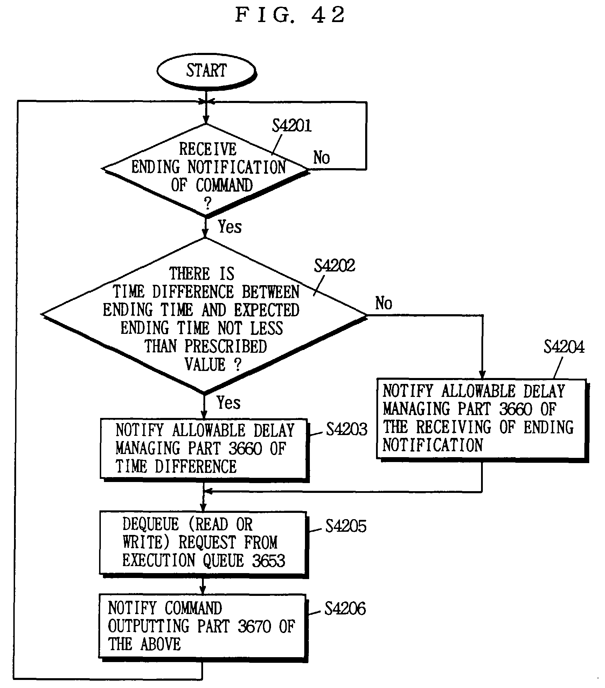

Fig. 42 is a flow chart showing the procedure of the processing when the ending notice of the command has arrived from the storage device 3610 at the command operation ending part 3680 (see Fig. 36),

Fig. 43 is a block diagram showing the structure of a conventional storage device control unit.

### DESCRIPTION OF THE PREFERRED EMBODIMENTS

First, a video server to which a storage device control unit according to the present invention is applied will be described outline below. The video server holds video data which requires real time, and stationary picture data, computer data or the like which does not require real time, and connects to televisions, computers and / or video camera etc. as the external devices.

The television, the computer or the like sends to the video server a read request for video data or computer data in compliance with the user's preferences. The video server reads out the video data or the like in compliance with this read request from a built-in storage device and sends to the transmitting source which outputs the read request. Also, the video camera or the like sends a write request of the produced video data to the video server. The video server writes the video data which is being sent from the video camera in compliance with the write request into the built-in storage device.

The video server further comprises a storage device control unit, and thereby processes read requests or write requests and not in an arrival order but by rearranging. That leads to an increase in the number of requests which can be processed. Referring to figures there will be described the storage device control unit below.

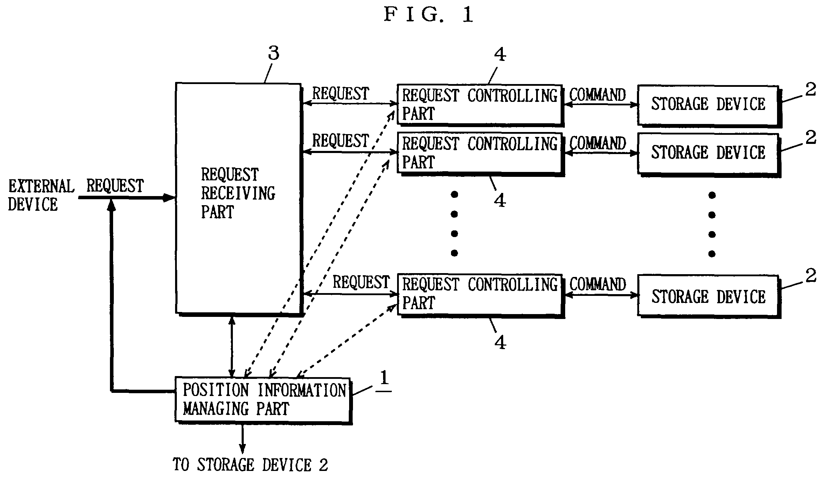

Fig. 1 is a block diagram showing composition of the storage device control unit according to one embodiment of the present invention. Referring to Fig. 1, the storage device control unit comprises a position information managing part 1, a plurality of storage devices 2, a request receiving part 3 and the same number of request controlling parts 4 as that of the storage devices 2.

In Fig. 1, the position information managing part 1 manages empty blocks (where one unit block described below can be stored), and address positions of the storage devices 2 where video data and the like are stored.

Each storage device 2 is composed of, for instance, hard disk drives and the like, wherein video data or the like is stored in the address positions managed by the position information managing part 1. Meanwhile, the video data or the like is divided into unit blocks of a predetermined size and distributed and placed in the storage devices 2. Also, each storage device 2 is provided with an identification number (hereinafter, "SCSI address") for identification.

The request receiving part 3 distributes requests inputted from the external devices to the appropriate request controlling part 4.

Each request controlling part 4 , after rearranging requests inputted from the request receiving part 3 in a manner described below, sends each of the requests to the storage devices 2 as a command. These composition will be detailed below.

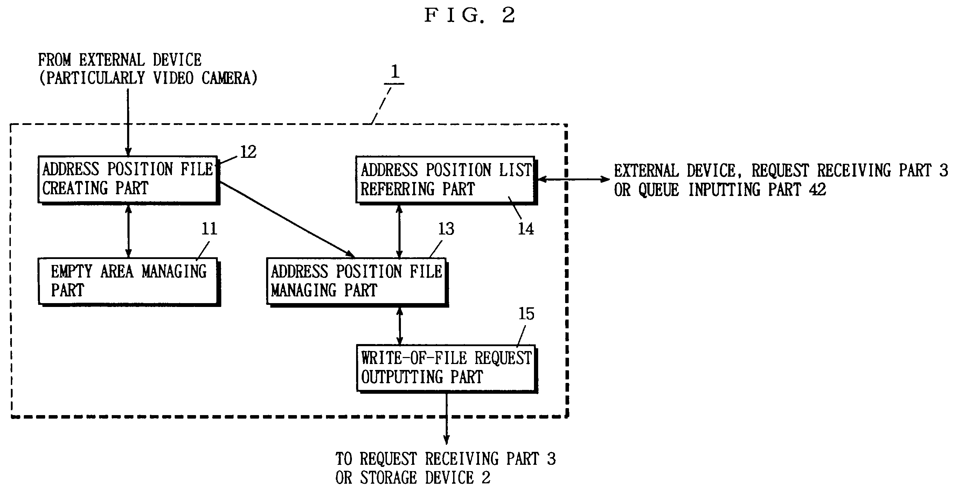

First, there will be described the position information managing part 1. Fig. 2 is a block diagram showing the composition of the position information managing part 1 shown in Fig. 1. Referring to Fig. 2, the position information managing part 1 includes an empty area managing part 11, an address position file creating part 12, an address position file managing part 13, an address position list referring part 14 and a write-of-file request outputting part 15.

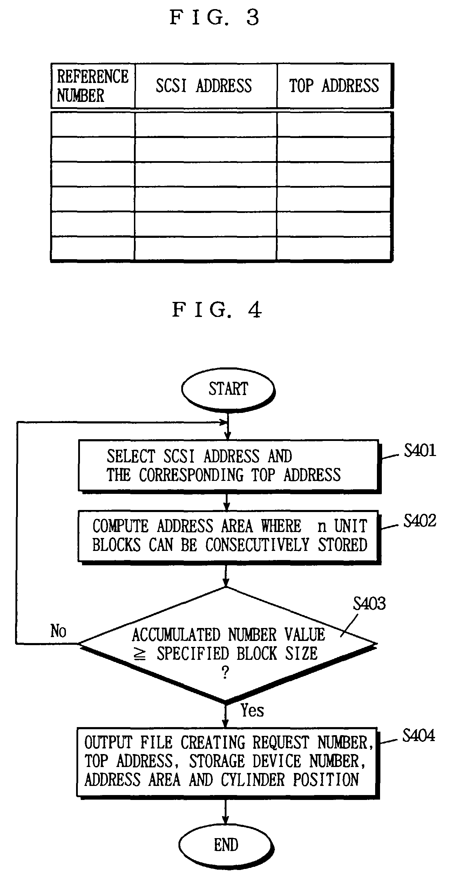

The empty area managing part 11 manages empty areas in each storage device using an empty area list shown in Fig. 3. The empty block list holds combinations of a SCSI address and an empty area (for example, its top address) for each reference number.

By the way, an external device (particularly, video camera or the like), before outputting a write request, outputs a file creating request for an address position file of video data or the like to be written in the storage devices 2. The file creating request includes information (hereinafter, "specified block size") to specify the number of empty blocks which is necessary to write video data or the like into the storage device 2. The address position file creating part 12, when receiving the file creating request, creates an address position file having a file creating request number and address position information. The address-position information has one or more combination of access position information, a SCSI address, an address area and a cylinder position. The access position information, the address area and the cylinder position specify the top of the address position, the address area and the cylinder position of video data or the like to be stored, respectively. This address position information determines how the video data or the like is divided and then distributed to a plurality of storage devices 2.

Here, Fig. 4 is a flowchart showing procedures when the address position file creating part 12 creates an address position file.

the file creating request includes information (hereinafter, "specified block size") as to how many blocks composes video data, stationary image data or the like to be written into the storage devices 2.

First, the address position file creating part 12 provides a file creating request arriving from the external device with a file creating number, and then selects one reference number from the empty area list (see Fig. 3), to select a SCSI address and the top address (Step S401).

Next, the address position file creating part 12 computes from the selected top address an address area where n ("n" is an integer) unit blocks is able to be stored consecutively in order (Step S402) and then notify of the empty area managing part 11 of the computed address area. The empty area managing part 11 updates top address in response to this notification so that the address area computed at the present step S402 will be not computed thereafter again.

The address position file creating part 12 accumulates the number of unit blocks which is able to be stored in the address area computed at a step S402 and then judges whether the accumulated number value is the specified block size or more or not (Step S403). The address position file creating part 12, when the accumulated number value is not more than the specified block size, judges that all of unit blocks composing the video data, stationary image data or the like cannot be written into the storage devices 2, and then returns to step S401. The address position file creating part 12 repeats the steps S401 to S403 until the accumulated number value is the specified block size or more in the step S403.

The address position file creating part 12, when judging that the accumulated number value is the specified block size or more at the step S403, goes to step S404 to output the file creating request number for the above-described file creating request, the SCSI address and the top address, the address area computed at the step S402 which begins from the top address, and, the cylinder position of the top address to the address position file managing part 13 as an address position file (Step S404) and finishes creating the address position file.

Meanwhile, the SCSI address, the top address, the address area and the cylinder position composes a combination, and therefore at least one combination of the SCSI address, the top address, the address area and the cylinder position is outputted in compliance with each file creating request. Also, the top address is defined as the below-described access position information.

Here will be described an embodiment when the steps S401 to S403 shown in Fig. 4 are repeated. Assume that a process of the above-described steps S401 to S403 is repeated m times, m SCSI addresses marked with "d_{1,} d₂, ... dₘ" are selected, and then for the SCSI address "d₁" a top address "a₁₁" is selected and in the same way for the SCSI addresses "d₂, ... dₘ" top addresses "a₂₁, ... aₘ₁" are selected respectively.

At the step S402, assume that for the top address "a₁₁" an address area "a₁₁, a₁₂, ... a₁ₙ" is computed, and in the same way for top addresses "a₂₁, ... aₘ₁" address areas "(a₂₁, a₂₂, ... a₂ₙ), ... (aₘ₁, aₘ₂, ... aₘₙ)" are computed.

At the step S404, the order of the address area sent to the address position file managing part 13 is "a₁₁, a₂₁, a₃₁, ... aₘ₁, a₁₂, a₂₂, ... a₁ₙ, a₂ₙ, ... aₘₙ ("m" is an integer of 1 or more, "n" is an integer of 2 or more)." Write operations are performed in this order, so that video data, stationary image data or the like is distributed and placed.

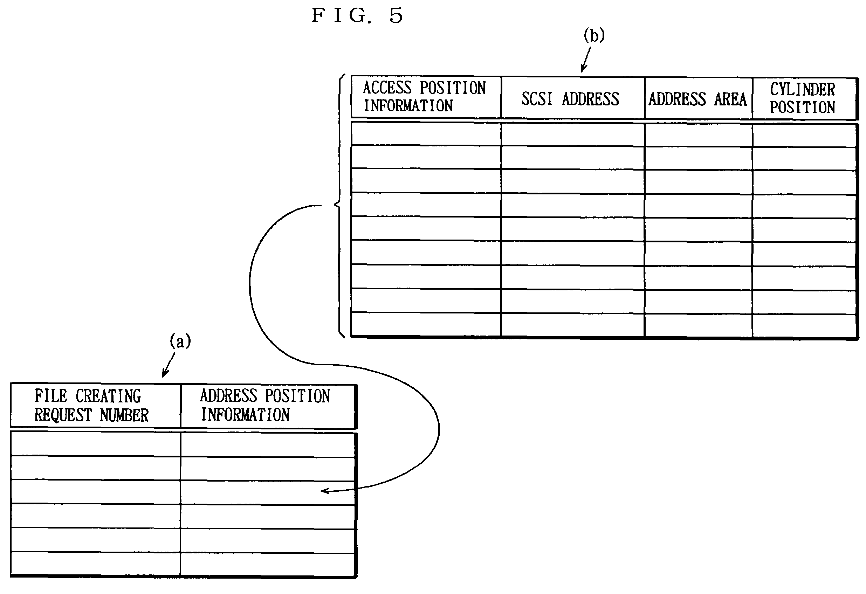

In Fig.2, the address position file managing part 13 manages all address position files created by the address position file creating part 12 as an address position list as shown in Fig. 5. Here, Fig. 5(a) shows that address position list has address position files which each includes a combination of file creating request number and address position information. Also, Fig. 5(b) shows that each address position information shown in Fig. 5(a) is composed of a plurality of combination of access position information (the above-described top address), SCSI address, address area and cylinder position.

The address position list referring part 14, in response to the order from a queue inputting part 42, extracts to output address position information from the address position list (the detail will be described below).

Further, the address position list referring part 14 generates a read request for reading an address position file stored in the storage devices 2, and outputting the read request to the request receiving part 3 (the detail will be described below). Referring to the address position file to be read in compliance with the read request, the external device (particularly, video camera or the like) generates a write request of video data, stationary image data or the like, while the external device (television, computer or the like) generates a read request of video data, stationary image data or the like.

The write-of-file request outputting part 15, whenever an address position file is written into the address position list (see Fig. 5), takes out and holds the file therein. Next, the write-of-file request outputting part 15 generates a write-of-file request and outputs the request to the request receiving part 3, and then outputs the held address position file to the storage devices 2. That is, the address position file, as described above, is stored in the storage devices 2. This address position file stored in the storage devices 2, as described above, is read by the address position list referring part 14 and used for the external device to generate read requests and write requests.

Next, the request receiving part 3 shown in Fig. 1 will be described. As described above, the external device refers to the address position file, and thereby generates and outputs a write request for writing self-made video data or the like is write into the storage devices 2 or a read request for reading video data or the like previously stored in the storage devices 2. This write request and read request include the access position information of the address position file, and assume that the access position information "a₁₁ ∼ aₘ₁" (described above) are included. The request receiving part 3 inquires of the address position list referring part1 4 a SCSI address corresponding to the access position information included in write or read request to be inputted. The address position list referring part 14, in response to this inquiry, takes out the SCSI address d₁ ∼ dₘ corresponding to the address position information a₁₁ ∼ aₘ₁ from the address position list (see Fig. 5) and outputs the SCSI address to the request receiving part 3. The request receiving part 3 distributes the inputted write or read request to the request controlling parts 4 for the storage devices 2 having the SCSI address "d₁ ∼ dₘ".

Meanwhile, there will be described an operation of the request controlling part 4 set up ahead of the storage device 2 having the SCSI address "d₁" below. For an operation of the request controlling parts 4 set up ahead of the storage devices 2 having the SCSI address d₂ ∼ dₘ the description is omitted since the same description is repeated.

Next, prior to the description of the operation of the request controlling part 4, there will be described the above-mentioned write request and read request. The write request and the read request inputted to the request controlling part 4 includes each priority information, delay limit time, access position and data size.

Priority information is classified into two kinds of big categories: "read" and "write", to enable judgement whether the inputted request is a read or write request. Further, the priority information in "read" is classified into three kinds of small categories: "top priority", "priority" and "no priority". Therefore, the priority information is of four kinds, and according to the four kinds of information the request controlling part 4 performs different operations according to the priority information.

The read request including "top priority" (hereinafter, "top priority request") is processed so as to be sent early to the storage devices 2 as a command. Therefore, the external device, when using the "top priority request", receives services (start on read of video data, change in what to be read and so on) from the video server the fastest. Also, the read request including "priority" (hereinafter, "priority request") is processed so as to be sent early to the storage devices 2. Therefore, the external device, when using the "top priority request", receives high-speed services from the video server though the speed is later than that of the "top priority request". Video data or the like which is necessary to satisfy real time can be sent to the external device at high response.

The read request including "no priority" (hereinafter, "no priority request") is processed so as to be sent the latest as a command. Therefore, data which does not have to satisfy real time such as stationary image data, computer data or the like can be distinguished.

Delay limit time is the maximum value of a period which may be required from time when a read request or a write request arrives at the request controlling part 4 to time when the operation (read or write) at the storage device 2 finishes. The request controlling part 4 outputs the prior read or write request as a command within this delay limit time. By outputting the command within the delay limit time, when the external device replays video data, a dropout of image and sound can be prevented.

Since access position information is such as described above the description is omitted.

Information on data size shows size of video data, stationary image data or computer data which is read of the storage device 2 or written into the storage device 2.

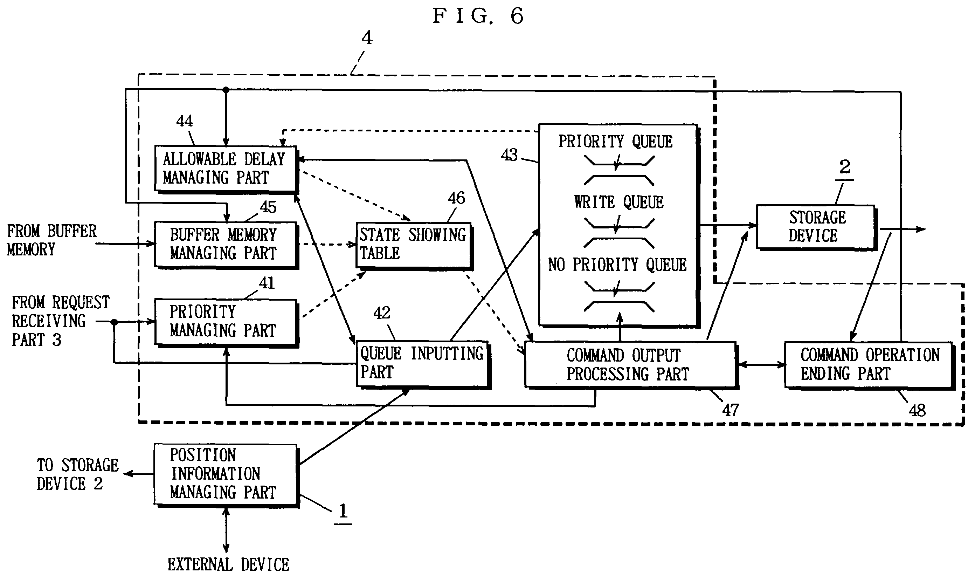

Fig. 6 shows a block structure of the request controlling part 4 (see Fig. 1) in detail and a connecting relation with the position information managing part 1, the storage devices 2 or the like. Referring to Fig. 6, the request controlling part 4 (see insideof the dotted line) comprises a priority managing part 41, the queue inputting part 42, a queue managing part 43, an allowable delay managing part 44, a buffer memory managing part 45, a state showing table 46, a command output processing part 47 and a command operation ending part 48. There will be described each structure below.

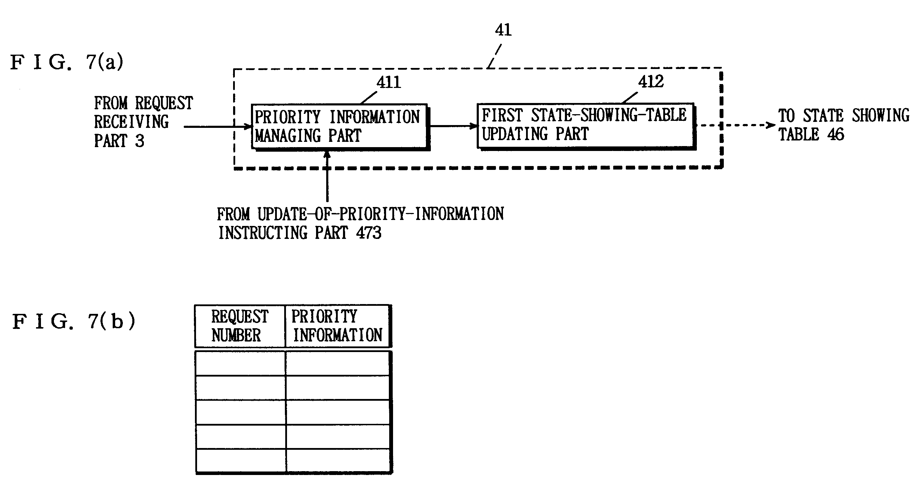

First, the priority managing part 41 (see Fig. 6) will be described referring to Fig. 7. The priority managing part 41, as shown in Fig. 7(a), includes a priority information managing part 411 and a first state-showing- table updating part 412. The priority information managing part 411 has a priority information list, as shown in Fig. 7(b), to manage priority information on requests (read requests and / or write requests) existing in the request controlling part 4.

The priority information managing part 411 provides requests inputted consecutively from the request receiving part 3 with respective sequential request numbers, and then extracts priority information from each of the requests and write the request number and the priority information into the priority information list. After that, the priority information managing part 411 examines whether the same priority information as the written priority information exists in the priority information list or not, and when judging that the same priority information does not exist in the priority information list, generates instructions to update a state-showing table including the written priority information, and outputs the instructions to the first state-showing-table updating part 412.

Further, the priority information managing part 411, in response to a notification from an update-of-priority-information instructing part 473 (to be described below), omits the request number and the priority information included in the notification from the priority information list. After that, the priority information managing part 411, examines whether the same priority information as the omitted priority information exists yet in the priority information list or not, and when judging that the same priority information does not exist in the priority information list, generates instructions to update the state-showing table including the omitted priority information, and outputs the instructions to the first state-showing-table updating part 412.

The first state-showing-table updating part 412 updates a state showing table 46 (to be described below) based on priority information included in the instructions to update state-showing table inputted priority information managing part 411. Thus, in the state showing table 46, state number is updated according to a kind of request ("top priority request", "priority request", "no priority request" or "write request") existing in the request controlling part 4 (the detail will be described below).

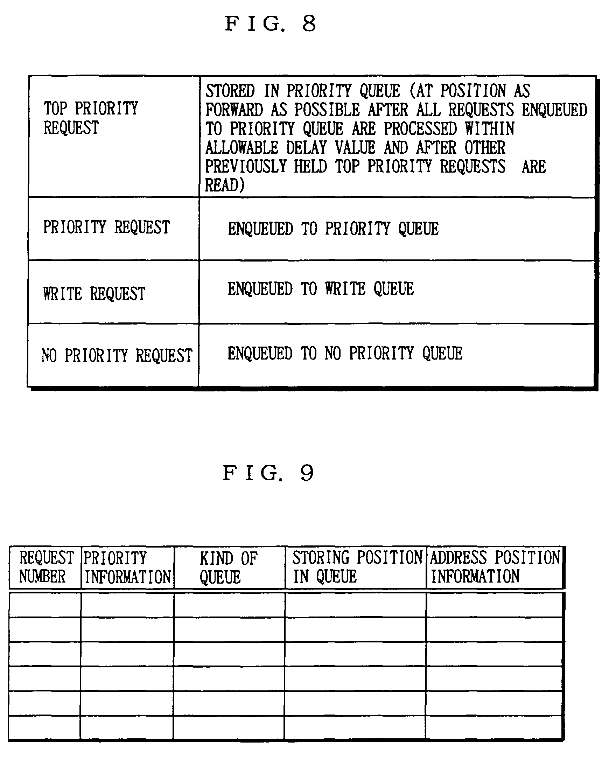

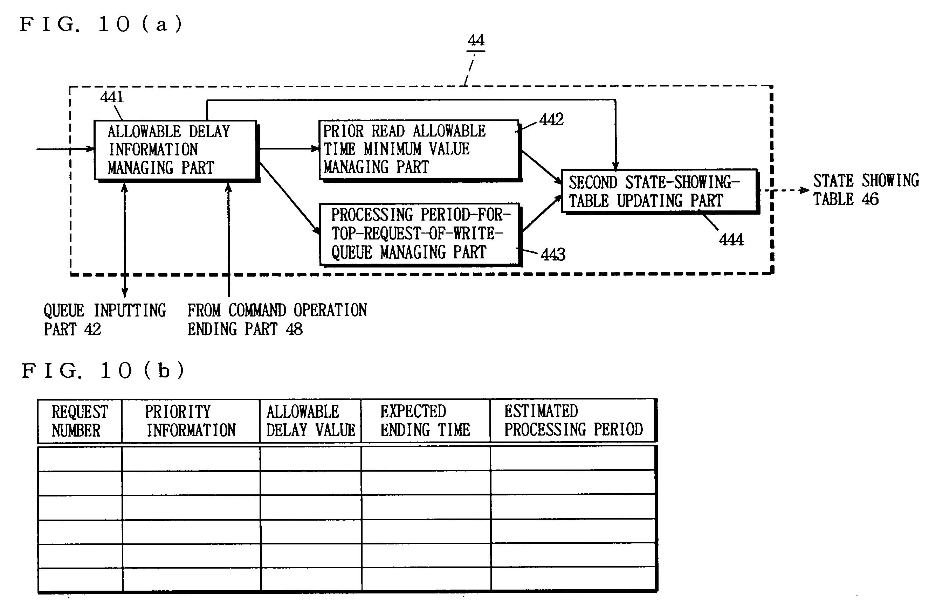

The queue inputting part 42 (see Fig. 6) provides requests inputted from the request receiving part 3 with respective sequential request numbers (the same number as the request number provided in the priority information managing part 411 ) and respective arrival time, and then determines a queue ("priority queue", "write queue" or "no priority queue", see Fig. 2) for each requests to be enqueued to and its position based on rules as shown in Fig. 8 referring to an allowable delay information list (see Fig. 10(b)).

The queue inputting part 42 enqueues a "top priority request" to the "priority queue" at the position as forward as possible after all the requests ("top priority request" and / or "priority request" ) previously held in the "priority queue" are processed (read) within respective delay limit values (see Fig. 10(b)) and after the other previously held "top priority requests" are processed (read) (see Fig. 8).

Also, the queue inputting part 42 adds an arrived priority request to the "priority queue" (see Fig. 8) referring to a cylinder position in the address position file and the allowable delay information list (see Fig. 10(b)).

The queue inputting part 42, as shown in Fig.8, determine to store the no priority request and the write request at the tail of the no priority queue and the write queue respectively.

Also, the queue inputting part 42 outputs the queue and its position in the queue which are determined in the above-described manner, a request inputted from the request receiving part and a request number given therein to the queue managing part 43, and further outputs the request number, the time of arrival, the priority information, delay limit time, the access position information and the data size to the allowable delay information managing part 441 (see Fig. 10).

The queue managing part 43 (see Fig. 6), includes three kinds of queues: "priority queue", "write queue" and "no priority queue", and a request inputted from the queue inputting part 42 to any one of three queues based on information inputted with the request. Also, the queue managing part 43 has a queue management list, as shown in Fig. 9 to manage the three kinds of queues. As the queue management list holds the combination of the request number, the priority information, kind of the queue, a storing position in the queue, and the address position information, and manages the requests which are enqueued to the three kinds of the queues. The queue managing part 43 writes the priority information and address position information which are obtained from each request inputted from the queue inputting part 42, and further the request number, kind of the queue and the storing position in the queue which are inputted together from the queue inputting part 42, to the queue management list. Further, the queue managing part 43 omits information on a request selected by the below-described command output processing part 47 and outputted as a command from the queue management list.

Next, an allowable delay managing part 44 (see Fig. 6) will be described with reference to Fig. 10. The allowable delay managing part 44 , as shown in Fig. 10(a), includes an allowable delay information managing part 441, a prior read allowable time minimum value managing part 442, an processing-period-for-top-request-of-write-queue managing part 443, and a second state-showing-table updating part 444.

The allowable delay information managing part 441, having an allowable delay information list as shown in Fig. 10(b), obtains allowable delay value, expected ending time and estimated processing period for each inputted request number by using the following computing manner referring to the information (described above) inputted from the queue inputting part 42 and then writes these into the allowable delay information list as allowable delay information. The allowable delay information managing part 441 writes also priority information inputted from the queue inputting part 42 into the allowable delay information list other than the allowable delay information.

Further, the allowable delay information managing part 441, in response to instructions from a correction-for-allowable-delay-information instructing part 483, a first update-of-allowable-delay-information instructing part 472 and a second update-of-allowable delay information instructing part 484, corrects or updates the allowable delay information. The allowable delay information will be described with reference to Fig. 10 below.

The estimated processing period, in the present embodiment, depends on which of read and write a request is for. First, the case the read request will be described. The estimated processing period (read) is time which is estimated to be required for reading data corresponding to one read request from the storage device 2, and is given by the following formula(1):$\text{the estimated processing period (read) = seek time + mean rotational latency + data transfer time + overhead.}$

The seek time is obtained by the allowable delay information managing part 441 referring to access position information inputted from the queue inputting part 42. More specifically, first a cylinder distance between address position information for a request which is used to obtain the estimated processing period (read) and address position information for the immediately preceding request to be processed. The seek time is period for a head of the storage device 2 (for example, hard disk) to move this cylinder distance. Meanwhile, the allowable delay information managing part 441 previously memorizes a function which is used to obtain the seek time from the cylinder distance.

The means rotational latency is computed based on rotating speed of the storage device 2.

The data transfer time is computed based on address position information for a request which is used to obtain the estimated processing period (read), packing density of data in the address position and rotating speed of the storage device 2.

The overhead is, for example, obtained by subtracting the sum of mean seek time, mean rotational latency and mean data transfer time from the average of measured period when data of the same size as video data is read predetermined times. Therefore, this overhead changes according to information on data size which a request outputted by the queue inputting part 42 has.

Also, the estimated processing period (write) is such that its confidence limit for a measured mean write time set which is obtained when data of the same size as the unit block is written consecutively determined times becomes 99.99%. Meanwhile, the above-described manner may be applied to the estimated processing period (read).

The expected ending time is time when processing (read or write) for the request is expected to finish when requests are outputted as commands in order from the top of the same queue ("priority queue", "write queue" or "no priority queue"). That is, the expected ending time is obtained by adding the estimated processing period for the request to the expected ending time for the immediately preceding request deposited at the request.

Meanwhile, the expected ending time is obtained for each request held in the same queue. Therefore, when a queue is selected in order to output commands the expected ending time for each request held in queues other than the selected queue changes. For example, when a request in the "write queue" is outputted as a command the expected ending time for each request in the "priority queue" and the "no priority queue" is obtained by adding the estimated processing period for the command (write request).

The allowable delay value is as follows. By adding arrival time and delay limit time for a request time (hereinafter, ending time) when the processing for the request (read or write) has to finish is obtained. The allowable delay value is time which is obtained by subtracting the expected ending time from the ending time. That is, even when the below-described command output processing part 47 delays output of command for time which the allowable delay value for a request, the real time of data which is read or written by the request can be kept.

The prior read allowable time minimum value managing part 442 holds the smallest value (hereinafter, "the smallest allowable delay value") among the allowable delay values for requests ("top priority requests" and / or "priority requests") in the "priority queue". The allowable delay information managing part 441 selects the smallest allowable delay value from the allowable delay information list and stores it in the prior read allowable time minimum value managing part 442.

The processing-period-for-top-request-of-write-queue managing part 443 holds the estimated processing period (write) for a request which is stored at the head of the write queue.

The second state-showing-table updating part 444 examines whether the allowable delay value for write requests is "a predetermined constant value" or more or not referring to the allowable delay information list. Next, the second state-showing-table updating part 444 compares the estimated processing period (write) for a request which is sitting at the top of "write queue" with the smallest allowable delay value and, when the smallest allowable delay value is less, judges that the allowable delay values for requests in the "write queue" have no time to space. The second state-showing-table updating part 444 updates the state showing table 46 based on time to space which the allowable delay value for the write request and the allowable delay value for the request in the "priority queue" have.

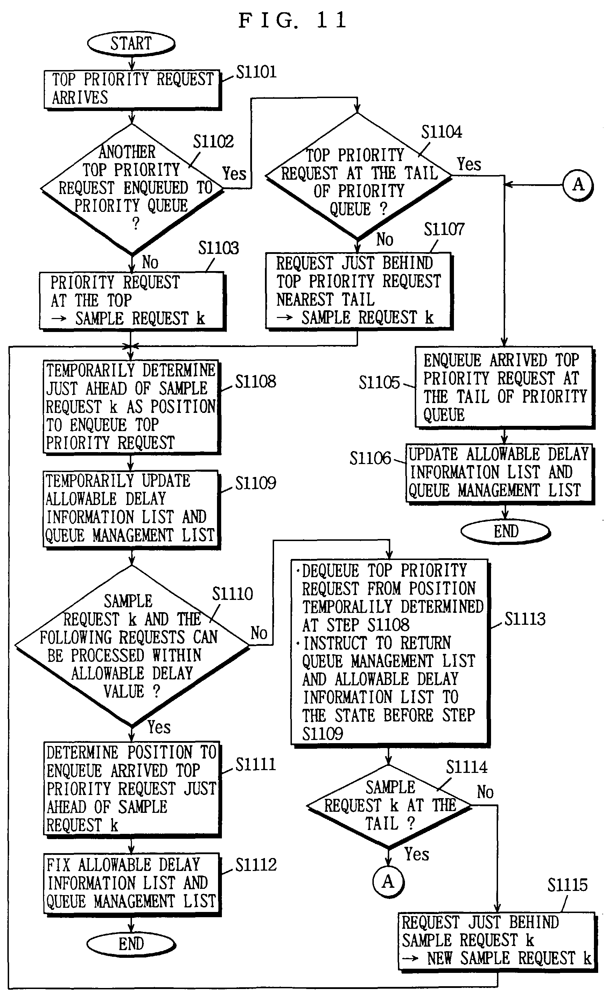

Here will be described an operation, when the "top priority request" is inputted of the queue inputting part 42 with reference to a flowchart shown in Fig. 11.

The queue inputting part 42, when a "top priority request" arrives from the request receiving part 3 (Step S1101), provides the request with request number and arrival time. Next, the queue inputting part 42 examines whether the other "top priority requests" are being held in the "priority queue" or not (Step S1102) and, when judging that the other "top priority requests" are not being held, defines a "priority request" sitting at the top of the "priority queue" as sample request k (Step S1103), and then goes to a step S1108 (described below).

The queue inputting part 42, when judging that the other "top priority requests" are being held at the step S1102, examines whether a "top priority request" is sitting at the tail of the "priority queue" or not (Step S1104). The queue inputting part 42, when judging that the "top priority request" is sitting at the tail, the arrived "top priority request" is enqueued at the tail of "priority queue" (Step S1105). After that, the queue inputting part 42 has the queue managing part 43 and the allowable delay information managing part 441 update the queue management list (see Fig. 9) and the allowable delay information list (see Fig. 10) (Step S1106).

The queue inputting part 42 takes out access position information for the arrived "top priority request" of the step S1106 and sends it to the address position list referring part 14. The address position list referring part 14 extracts address position information corresponding to the received access position information from the address position file managing part 13 and send it to the queue inputting part 42. The queue inputting part 42 outputs the received address position information, request number with which the "top priority request" is provided by self, and kind of queue to which the "top priority request" is enqueued and position to enqueue it to the queue managing part 43. The queue managing part 43 writes the received request number, the received address position information, and the received kind of queue ("priority queue") and position into the queue managing part list and thereby updates the list.

Further, the queue inputting part 42 outputs request number and arrival time with which the "top priority request" is provided by self, information (priority information, delay limit time, access position information and information on data size ) attached to the "top priority request", kind of queue and position, which are held in the queue management list, the request number to the allowable delay information managing part 441. The allowable delay information managing part 441 writes the request number and the priority information into the allowable delay information list, and then the above-described estimated processing period (read), allowable delay time and expected ending time are computed based on the information extracted from the queue management list and the information received from the queue inputting part 42, and writes these into the allowable delay information list and thereby updates the list.

The queue inputting part 42, when judging that the "top priority requests" are not being held at the tail at the step S1104, selects the "priority request" which is being enqueued just behind the "top priority request" enqueued nearest to the tail of the "priority queue" from the queue management list and defines the selected "priority request" as sample request k (Step S1107), and then goes to step S1108.

The queue inputting part 42 temporarily determines to enqueue the arrived "top priority request" just ahead of the above-described sample request k (Step S1108).

The queue inputting part 42, next, has the queue managing part 43 and the allowable delay managing part 44 temporarily updates the content of the queue management list and the allowable delay information list based on the above-described temporarily-determined position (Step S1109).

Since the procedures of the update is such as described in the step S1106, the description is omitted. However, since the arrived "top priority request" interrupts just ahead of the sample request k, in the queue management list, not only the information on the arrived top priority request is written, but also displacement of the position in the "priority queue" due to the interrupt is reflected. This displacement affects the sample request k and all requests sitting behind the sample request. Also, in the allowable delay information list, not only the request number, the priority information and the allowable delay information of the arrived "top priority request" are written, but also displacement of the position in the "priority queue" due to the interrupt is reflected. That is, to the allowable delay value and the expected ending time of the sample request k and all requests sitting behind the sample request, the estimated processing period for the arrived "top priority request" is added. Also, for the sample request k, the estimated processing period is changed because it has to be computed based on the address position for the arrived "top priority request".

The queue inputting part 42 judges whether this sample request k and all requests sitting behind the sample request can be processed (read) within the respective allowable delay values referring to the temporarily-updated allowable delay information list (Step S1110). The queue inputting part 42 judges that when allowable delay values for the sample request k and all requests sitting behind the sample request are "a predetermined constant value" or more these requests are able to be processed, and judges that when even any one of the values is not more than "a predetermined constant value" these requests are not able to be processed.

The queue inputting part 42, when judging that these requests are able to processed at the step S1110, finally fixes the position temporarily-determined at the step S1108 for a position to enqueue the arrived "top priority request" (Step S1111).

The queue inputting part 42, next, has the queue managing part 43 and the allowable delay information managing part 441 fix the queue management list and the allowable delay information list which are temporarily updated (Step S1112).

While, the queue managing part 43, when the queue inputting part 42 judging that these requests are not able to processed at the step S1110, dequeues the "top priority request" from the position temporarily-determined at the step S1108 and has the queue managing part 43 and the allowable delay information managing part 441 return the queue management list and the allowable delay information list to the state before the step S1109 (Step S1113).

The queue managing part 43, next, examines whether the sample request k is sitting at the tail of the "priority queue" or not (Step S1114), and, when judging that the sample request is sitting at the tail, enqueues the arrived "top priority request" just behind the sample request k, that is, at the tail of "priority queue" (Step S1105). After that, the queue inputting part 42 goes to step S1106 and performs such operations as described above (Step S1106).

While, the queue managing part 43, when judging that the sample request k is not sitting at the tail at the step S1114, sets a request just behind the sample request k as new sample request k (Step S1115). After that, the queue inputting part 42 repeats process of the step S1108 and the later steps based on new sample request k. The queue inputting part 42, whenever a "top priority request" is arrived, decides which position of the "priority queue" the arrived "top priority request" is enqueued to according to procedures shown in Fig. 11. Thus, the queue inputting part 42 enqueues the "top priority request" to the "priority queue" as based on the rule shown in Fig. 8.

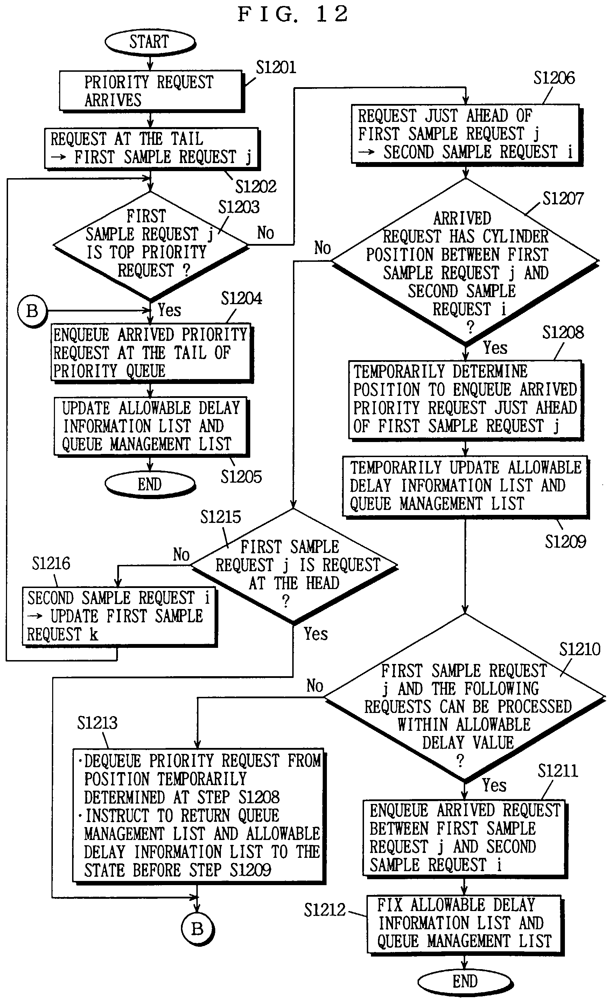

Next, there will be described an operation, when the "priority request" is inputted, of the queue inputting part 42 with reference to a flowchart shown in Fig. 12.

The queue inputting part 42, when a "priority request" is arrived from the request receiving part 3 (Step S1201), provides the arrived request with a request number and arrival time.

The queue inputting part 42, next, refers to the queue management list to search a request which is sitting at the tail of "priority queue", and sets the request as a first sample request j (Step S1202).

The queue inputting part 42, next, examines whether the first sample request j is a "top priority request" or not referring to the queue management list (Step S1203), and, when judging that it is the "top priority request", enqueues the arrived "priority request" just behind the first sample request j (Step S1204).

The queue inputting part 42, next, has the queue managing part 43 and the allowable delay information managing part 441 update the queue management list and the allowable delay information list (Step S1205). Meanwhile, since the operation of the update of the queue managing part 43 and the allowable delay information managing part 441 is such as described in the step S1106 of Fig. 11, the description is omitted.

While, the queue inputting part 42 , when judging at step S1203 that the first sample request j is not the "top priority request", sets a request which is sitting just ahead of the first sample request j as a second sample request i (Step S1206).

The queue inputting part 42, next, takes out and holds cylinder positions for the first and second sample requests j and i referring to the queue management list. The queue inputting part 42, next, takes out access position information for the arrived "priority request" and outputs it to the address position list referring part 14. The address position list referring part 14 extracts address position information corresponding to the received access position information from the address position file managing part 13 and outputs it the queue inputting part 42.

The queue inputting part 42 judges whether the arrived "priority request" has a cylinder position (which is included in the address position information) between the cylinder positions for the first and second sample requests j and i or not step S1207, and, when judging that the request is between the cylinder positions of the first and second sample requests j and i, temporarily determines to enqueue the arrived "priority request" between those (Step S1208).

The queue inputting part 42, next, has the queue managing part 43 and the allowable delay managing part 44 temporarily update the content of the queue management list and the allowable delay information list based on the above-described temporarily-determined position (Step S1209).

That is, since the arrived "top priority request" interrupts between the first sample request j and the second sample request i, in the queue management list, not only the information on the arrived priority request is written, but also displacement of the position in the "priority queue" due to the interrupt is reflected. This displacement affects the first and second sample requests j and i , and all requests sitting behind these sample requests (only, in the first loop of the present flowchart, the first sample request j only). Also, in the allowable delay information list, not only the request number, the priority information and the allowable delay information of the arrived "priority request" are written, but also displacement of the position in the "priority queue" due to the above interrupt is reflected. That is, for the allowable delay value and the expected ending time of the first sample request j and all requests sitting behind the sample request, the estimated processing period for the arrived "priority request" is added. Also, for the first sample request j, the estimated processing period is changed because it has to be computed based on the address position for the arrived "priority request"

The queue part 42 judges whether the first and second sample requests j and i and all requests sitting behind these sample requests can be processed (read) within the respective allowable delay values referring to the temporarily-updated allowable delay information list (Step S1210). The queue inputting part 42 judges that when allowable delay values for the first sample request j and all requests sitting behind the sample request are all "a predetermined constant value" or more these requests are able to be processed, and judges that when even any one of the values is less than "the predetermined constant value" these requests are not able to be processed.

The queue inputting part 42, when judging that these values are able to be processed at the step S1210, finally fixes the position temporarily-determined at the step S1208 for a position to enqueue the arrived "priority request" (Step S1211).

The queue inputting part 42, next, has the queue managing part 43 and the allowable delay information managing part 441 fix the queue management list and the allowable delay information list which are temporarily updated as those are (Step S1212).

Thus, when the above-described conditions shown at the step S1210 are satisfied, the first sample request j, and all sample requests sitting behind the sample request are processed (read) within the respective allowable delay values even when the arrived "priority request" is enqueued between the first sample request j and the second sample request i in the "priority queue." Further, since cylinder positions for the second sample request i, the arrived "priority request" and the first sample request j stand in ascending order or descending order, the seek time can be shortened.

While, the queue managing part 43, when judging that these requests are not able to be processed at the step S1210, dequeues the "priority request" from the position temporarily-determined at the step S1208 and has the queue managing part 43 and the allowable delay information managing part 441 return the queue management list and the allowable delay information list to the state before the step S1209 (Step S1213).

The queue managing part 43, next, goes to step S1204 and then adds the arrived "priority request" to the "priority queue", and goes to step S1205 to perform such operations as described above.

Also, the queue inputting part 42, when judging that cylinder position for the arrived "priority request" is not between the cylinder positions for the first and second sample requests j and i, examines whether the first sample request j is sitting at the head of "priority queue" or not referring to the queue management list (Step S1215).

The queue inputting part 42, when judging that the first sample request j is sitting at the head at the step S1215, executes the above-mentioned steps S1204 and S1205.

Meanwhile, in the present embodiment, the queue inputting part 42 sets the "top priority request" or "priority request" enqueued to the "priority queue" as the first sample request j. However, the queue inputting part 42, in addition to this process, may set a command (a request outputted as a command) which is being processed in the storage device as the first sample request j and, the "top priority request" or "priority request" enqueued to the "priority queue", as the second sample request i. For this process, the column of kind of queue in the queue management is set such that, not only the above-described top priority queue, priority queue and no priority queue but also the information that the storage device is in a process can be written. Therefore, the queue inputting part 42 can understand the request corresponding to the command which is being processed in the storage device, thereby enables the queue inputting part to set the request as the first sample request j.

While, the queue inputting part 42 , when judging that the first sample request j is not sitting at the head at the step S1215, replaces the second sample requests i with the first sample request k (Step S1216), and then goes to the step S1203. After that, the queue inputting part 42 performs processes of the step S1203 and the later steps again. As a result of that, the queue inputting part 42 adds the arrived "priority request" to the "priority queue" such that the arrived request is behind the "top priority request" held in the "priority queue" and the seek time becomes as short as possible.

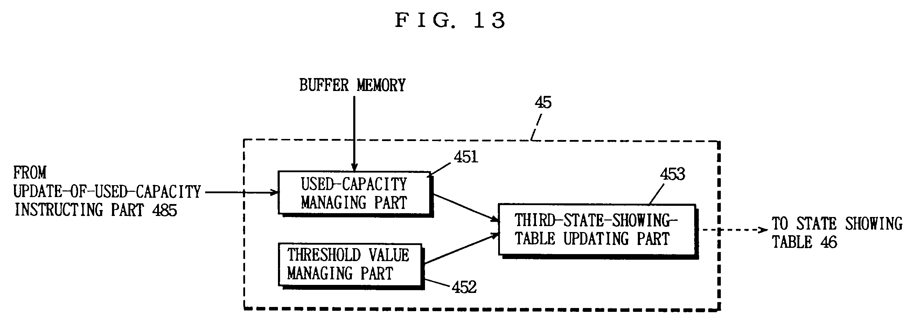

By the way, after video data etc, or address position file outputted by the external device or the write-of-file request outputting part 15 is temporarily stored in a buffer memory (not shown), it is written into the storage devices 2. That is, in the buffer memory are stored video data or stationary image data which waits to be written and the address position file. Next, with reference to Fig. 13 there will be described a buffer memory managing part 45 (see Fig. 6) which manages volume of data (that is, used capacity of the buffer memory), which waits to be written, stored in the buffer memory.

Referring to Fig. 13, the buffer memory managing part 45 includes an used-capacity managing part 451, a threshold value managing part 452 and a third-state-showing-table updating part 453.

The used-capacity managing part 451 detects used capacity of the buffer memory for every predetermined time (every instruction from the below- described update-of-used-capacity instructing part 485 ) and holds it therein.

The threshold value managing part 452 holds a predetermined threshold value therein.

The third-state-showing-table updating part 453 creates a comparison between the used capacity and the threshold value which are held in the used-capacity managing part 451 and the threshold value managing part 452 respectively, and, based on a result of the comparison, updates the state showing table 46.

Next, there will be described the state showing table 46 (see Fig. 6). The state showing table 46 is a table showing internal state of the request controlling part 4, which, as is evident from the above description, is updated by the first, second and third state-showing-table updating parts 412, 444 and 453. There are eight kinds of the internal state of this request controlling part 4. The state showing table 46 holds eight kinds of information about internal state of the request controlling part 4 as follows (meanwhile, the eight kinds of information which are provided with respective state numbers "1" ∼ "8").

The state number "1" means the used capacity is the threshold value or more.

The stat number "2" means the used capacity is less than the threshold value and the allowable delay value for the write request is less than the predetermined constant value.

The state number "3" means the used capacity is less than the threshold value, the allowable delay value for the write request is the predetermined constant value or more and there is the "top priority request".

The state number "4" means the used capacity is less than the threshold value, the allowable delay value for the write request is the predetermined constant value or more, the allowable delay value for the "priority request" has no time to space and there is no "top priority request".

The state number "5" means the used capacity is less than the threshold value, the allowable delay value for the write request is the predetermined constant value or more, the allowable delay value for the "priority request" has time to space, there is no "top priority request" and there is the "write request".

The state number "6" means the used capacity is less than the threshold value, the allowable delay value for the write request is the predetermined constant value or more, the allowable delay value for the "priority request" has time to space, there is no "top priority request" or "write request", and there is the "priority request".

The state number "7" means the used capacity is less than the threshold value, the allowable delay value for the write request is the predetermined constant value or more, the allowable delay value for the "priority request" has time to space, there is no "top priority request", "write request" or "priority request", there is the "no priority request".

The state number "8" means the used capacity is less than the threshold value, the allowable delay value for the write request is the predetermined constant value or more, the allowable delay value for the "priority request" has time to space, there is no the "top priority request", "write request", the "priority request" or "no priority request".

The internal state of the request controlling part 4 is in any one of the above-described eight kinds but changes when a request (for read or write) arrives or when read operation or write operation for requests finishes and further, also changes according to the used capacity of the buffer memory. The state showing table 46 is updated by the first, second and third state-showing-table updating parts 412, 444 and 453, which enables the state showing table 46 to hold the internal of state of the request controlling part 4 at the time of update using the state numbers.

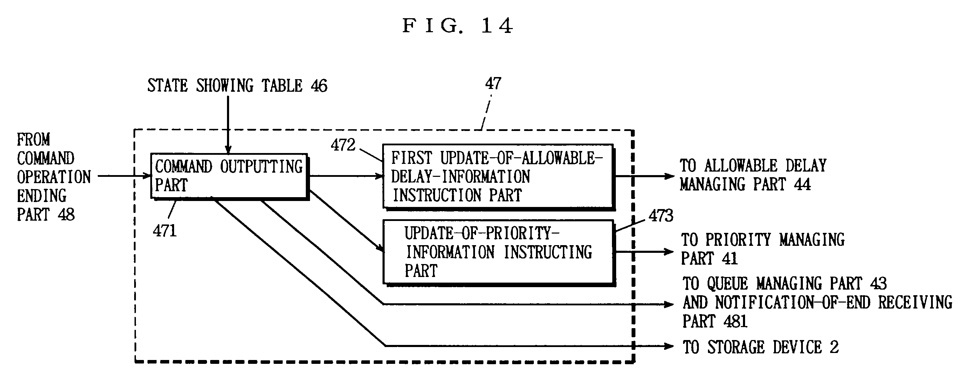

The command output processing part 47 sends commands to the storage devices 2 based on the state numbers held by the state showing table 46. There will be described in detail this command output processing part 47 with reference to Fig. 14 below.

Referring to Fig. 14, the command output processing part 47 includes a command outputting part 471, a first update-of-allowable-delay-information instructing part 472 and a update-of-priority-information instructing part 473.

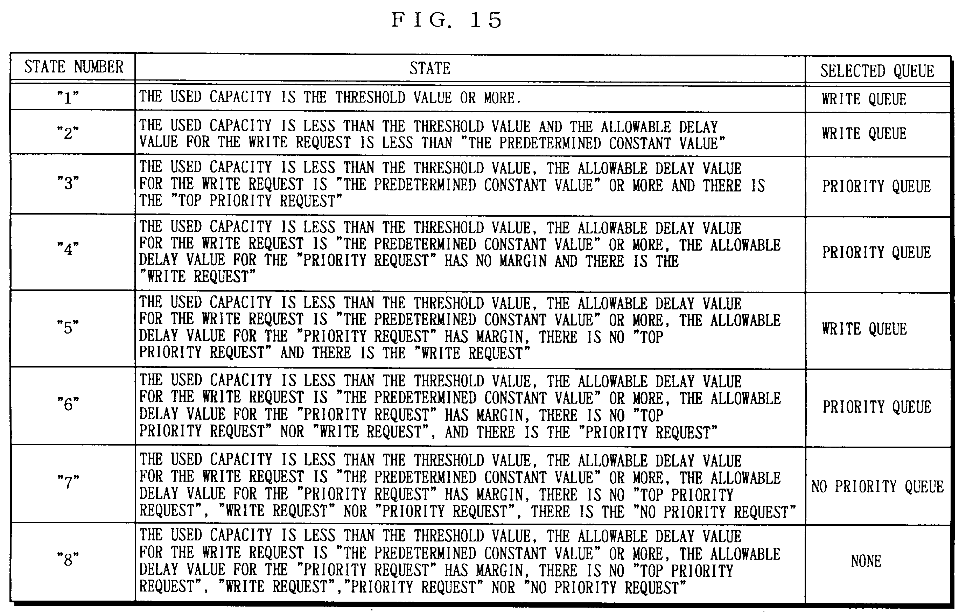

The command outputting part 471, based on the state number held by the state showing table 46, selects one queue among the "priority queue", "write queue" and "no priority queue" and sends a request (for read or write) sitting at the head of the selected queue to the storage device 2 as a command. The storage device 2, in response to the command, writes data or reads out data. Here, Fig. 15 is a diagram which is used to explain a relation between the above-described state numbers and the queue to be selected by the command outputting part 471. Referring to Fig. 15, in columns for the state number and the state are written the above-described state numbers 1 ∼ 8 and their contents respectively, and in the selection queue column is written the queue to which the request outputted by the command outputting part 471 as a command is enqueued.

More specifically, the command output processing part 47 outputs the write request sitting at the top of "the write queue" as a command when the state showing table 46 holds the state number "1", "2" or "5" therein, outputs the top priority request on the "priority request" sitting at the top of "the priority queue" as a command when the state showing table 46 holds the state number "3", "4" or "6" therein, outputs the "no priority request" sitting at the top of the "no priority queue" as a command when the state showing table 46 holds the state number "7" therein and does nothing when the state showing table 46 holds the state number "8" therein. The command outputting part 471, when outputting a request placed in any one queue as command, has the queue managing part 43 omit the request number corresponding to the request from the queue management list and further notifies the request number to the first update-of-allowable-delay-information instructing part 472, the update-of-priority-information instructing part 473 and the notification-of-end receiving part 481 (described below).

The first update-of-allowable-delay-information instructing part 472, when the request sitting at the top of the write queue is outputted as a command, outputs the fact to the allowable delay information managing part 441 and instructs the update of allowable delay information. The allowable delay information managing part 441, in response to this instructions, adds the expected ending time (write) which the write request outputted as a command has to the allowable delay value and the expected ending time which "top priority request" and "priority request" in the "priority queue" have, and further omits the allowable delay information which the write request has. As described above, since the expected ending time is for only requests held in the same queue, it is required that the allowable delay value and the expected ending time for "top priority request" or "priority request" held in the "priority queue" be updated when the write request is outputted as a command. Further, the allowable delay information managing part 441, based on the updated allowable delay list, outputs the estimated processing period (write) which the write request sitting at the top of the write queue has, and updates the information which the processing-period-for-top-request-of-write-queue managing part 443 holds.

The update-of-priority-information instructing part 473, when a request is outputted as a command from any one of the three kinds of queues, outputs the priority information which the request has to the priority information managing part 411 to instruct update of priority information. The priority information managing part 411, in response to this instructions, performs processes (described above) as explained with reference to Fig. 7.

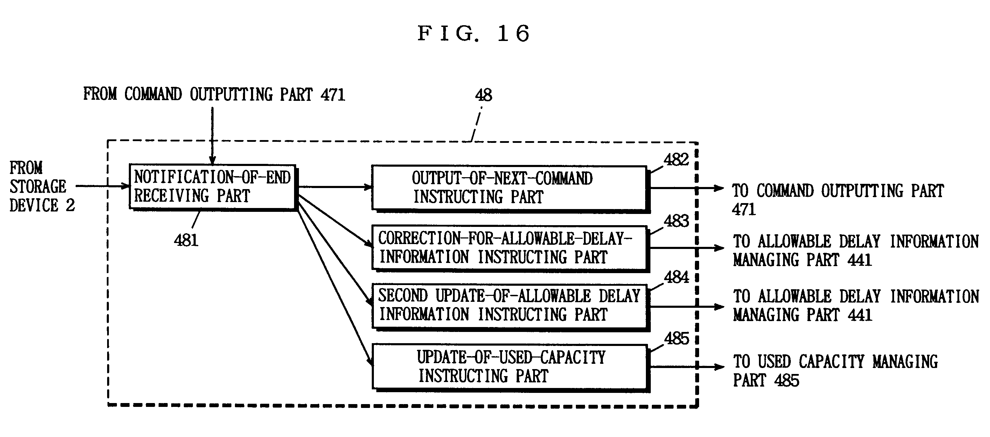

The storage devices 2, in response to the command received form the present storage device control unit, writes video data or the like which is temporarily stored in the above-described buffer memory into an internal storage medium (magnetic disk or the like) or reads video data which has already been written out of the storage medium, and thereafter outputs an end notification including end-of-read time or end-of-write time to the command operation ending part 48. Next, there will be described the command operation ending part 48 with reference to Fig. 16.

Referring to Fig. 16, the command operation ending part 48 includes a notification-of-end receiving part 481, an output-of-next-command instructing part 482, the correction-for-allowable-delay-information instructing part 483, the second update-of-allowable delay information instructing part 484 and the update-of-used-capacity instructing part 485.

The notification-of-end receiving part 481 outputs the end notification and the request number which are received from the storage devices 2 and the command outputting part 471 to the output-of-next-command instructing part 482, the correction-for-allowable-delay-information instructing part 483, the second update-of-allowable delay information instructing part 484 and the update-of-used-capacity instructing part 485.

The output-of-next-command instructing part 482, when receiving the end notification, outputs instructions to output a new command to the command outputting part 471. The command outputting part 471, when receiving this instructions, outputs the request sitting at the top of the queue selected with reference to a table shown in Fig. 15 as a command.

The correction-for-allowable-delay-information instructing part 483, when receiving the end notification, takes out the request number and end-of-write or end-of-read time, and instructs the allowable delay information managing part 441 to correct the allowable delay information list (see Fig. 10(b)). As described above, in the allowable delay information list is being written the expected ending time. Since this expected ending time is, time when the read operation or write operation which is expected to finish and the ending time is actual time for end of operation, the time difference occurs between the two time. Therefore, the expected ending time for all of the requests which are being written in the allowable delay list at the present changes, and further the allowable delay value computed based on the expected ending time changes. The allowable delay information managing part 441, in response to an instruction from the correction-for-allowable-delay-information instructing part 483, computes the above-described time difference and reflects the time difference on the expected ending time and the allowable delay value which is being written in the allowable delay information. Accordingly, the values held in the prior read allowable time minimum value managing part 442 change.

The second update-of-allowable delay information instructing part 484, on receiving the end notification, takes out the request number and instructs the allowable delay information managing part 441 to update the allowable delay information list. The allowable delay information managing part 441, in response to this instruction, omits the allowable delay information corresponding to the request number from the allowable delay information list. Accordingly, the values held in the prior read allowable time minimum value managing part 442 and the processing-period-for-top-request-of-write-queue managing part 443 change.

The update-of-used-capacity instructing part 485, on receiving the end notification, has the used-capacity managing part 451 update the used capacity of the buffer memory. Also, the third-state-showing-table updating part 453, when this update leads to change in bigness-and-smallness relation between the used capacity and the threshold value, updates the state showing table 46.

As described above, the storage device control unit stores an address area where unit blocks of integer can be stored consecutively in the storage devices 2 as an address position file. As unit blocks composing video data, stationary image data, or the other are stored in the storage device according to the address position file, the video data or the stationary image data is distributed and placed in the plural storage devices 2.

Also, when the external device reads out video data or the other, sends a "top priority request" or a "priority request" to the storage device control unit. The storage device control unit determines an order such that the arrived "top priority request" or "priority request" is outputted as command so as to keep the allowable delay value. Therefore, when the external device replays video data, no drop-out of image nor sound occurs.

Also, for the "priority request", specifically, an order is determined such that the request is outputted as a command so that access position (cylinder position) of video data or the like is as consecutive as possible. This can shorten time for the head of the storage devices 2 to move between cylinders, and time to read the video data or the like. Therefore, compared with the conventional control unit, more requests can be outputted as commands in a period of time within the limit satisfying the allowable delay time, which improves use efficiency of the storage devices 2. As a result of that, a video server to which the present storage device control unit is mainly applied does not need to store a great deal of the same video data or the like, which leads to decrease in the number of expensive storage devices.

Also, the present storage device control unit, when the ending time when the write or the read finishes is different from the initially expected ending time, corrects the allowable delay value in the allowable delay information list. Therefore, more requests can be outputted as command within the limit satisfying the allowable delay time, which improves use efficiency of the storage devices 2.

Also, the present storage device control unit, when the used capacity of the buffer memory is the threshold value or more, and, for example, even when the "top priority request" or the "priority request" is beyond the allowable delay value, outputs the write request sitting at the top of the write queue as a command. Therefore, there is no case where the buffer memory overflows, and thereby video data, stationary image data or other from the external device can be reliably written into the storage devices. Further, according to the present storage device control unit, for write operation, the allowable delay value is kept. Therefore, the video data or the like from the external device is written into the storage devices 2 within a predetermined time, and when the predetermined time has passed, data is in the state to be read immediately. That is, the present storage device control unit can write video data (for example, news) which may be read at constant time simultaneously into the storage devices 2 by the constant time.

Also, the priority information of "top priority", "priority" or "no priority" is defined for the read requests. When the external device requests processing which require high-speed response of the storage devices, for example, when reading the address position file, starting to read or changing a reading point of the video data or the like, a request ("top priority") is sent using the priority information of the "top priority". For the "top priority request", the storage device control unit arranges order of output so as to output it as early as possible as well as ensuring the allowable delay value. This enables the present storage device control unit to perform processing which require high-speed response.

Also, the "top priority request" and the "priority request" are to be enqueued to the "priority queue", and the command outputting part 471 outputs the "top priority request" or the "priority request" sitting at the top of the "priority queue" as a command sequentially. Therefore, according to the present storage device control unit, the number of process for judgement in outputting command decreases. This improves use efficiency of the storage device.

Further, the external device sends the "no priority request" for data (computer data or stationary image data) which does not have to ensure the allowable delay value, and sends the "top priority request" or the "priority request" for data which has to ensure the allowable delay value such as video data, and then reads the data out of the storage devices 2. The storage device control unit firstly outputs the "top priority request" or the "priority request" as a command and outputs the "no priority request" when there is no requests in the "priority queue" and the write queue. Therefore, the video server to which the present storage device control unit is applied can store both data which does not have to ensure the allowable delay value and data which has to in the same storage device.

Also, in the above-described embodiment, the read request and the write request includes the delay limit time,. However, this delay limit time may be provided by the storage device control unit.

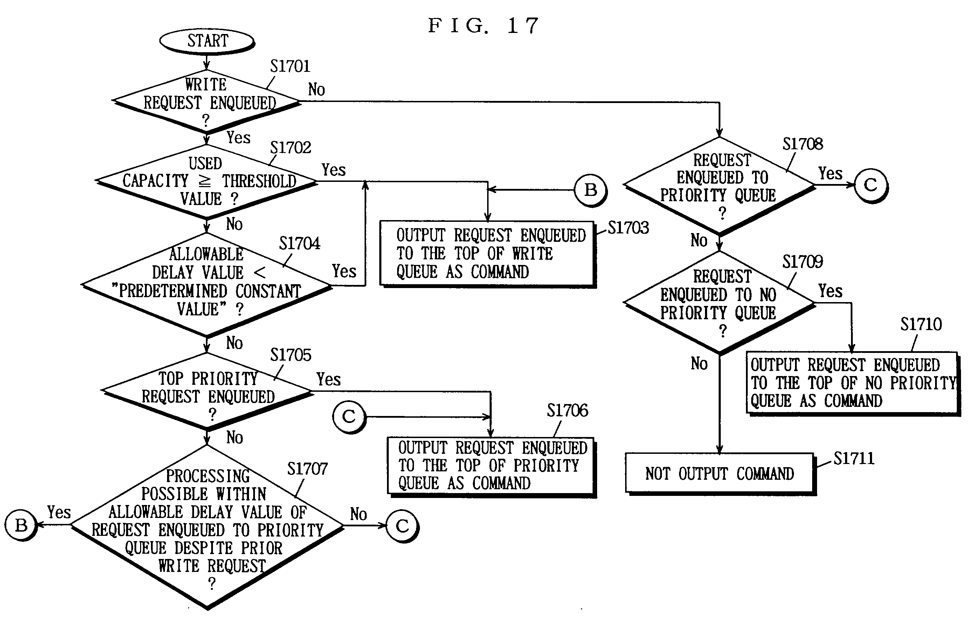

Also, the command outputting part 471 (see Fig. 14) selects one queue in order to output commands with reference to the state numbers (see Fig.15) held by the state showing table 46. However, the storage device control unit can be composed without the state showing table 46, and, the first, second and third state-showing-table updating parts 412, 444 and 453. In this case, the command outputting part 471 selects a queue which is used to output commands based on the flowchart shown in Fig. 17.

First, the command outputting part 471, referring to the queue management list, examines whether the write request exists in the write queue or not (Step S1701). The command outputting part 471, when judging that the write request does not exist, goes to the below-described step S1708, and, when judging that the write request exists, goes to step S1702.

The command outputting part 471 takes out the used capacity managed by the used-capacity managing part 451 and a threshold value managed by the threshold value managing part 452 to compare the two values in bigness and smallness at the step S1702 (Step S1702). The command outputting part 471, when the used capacity is the threshold value or more, sends the write request sitting at the top of write queue to the storage device 2 as a command (see Step S1703). Meanwhile, this process means the state 1 shown in Fig. 15.

The command outputting part 471, when judging that the used capacity is not more than the threshold value at step S1702, examines whether the allowable delay value of each request held in the write queue is not more than "a predetermined constant value"(step S1704).

The command outputting part 471, when judging that the allowable delay value is not more than a "predetermined constant value", goes to the step S1703 and then outputs the write request sitting the top of the write queue as a command (Step S1703). Meanwhile, this process means the state 2 shown in Fig. 15.

The command outputting part 471, when judging that the allowable delay value is "the predetermined constant value" or more at step S1704, examines whether the top priority request exists in the priority queue referring to the priority information list (step S1705), and when judging that the top priority request exists, outputs the read request sitting at the top of the priority queue to the storage device 2 as a command (step S1706). This process means the state 3 shown in Fig.15.

The command outputting part 471, when judging that the "top priority request is not held, examines whether the processing time held by the processing-period-for-top-request-of-write-queue managing part 443 is shorter than the allowable time held by the prior read allowable time minimum value managing part 442 or not, that is, whether write operation for the write request sitting at the top of the write queue finishes within the time of the allowable delay value which each request in the "priority queue" has (Step S1707).

The command outputting part 471, when judging that the write operation finishes within the time, goes to step S1703 and then outputs the write request sitting at the top of the write queue as a command (Step S1703). Meanwhile, this process means state 5 shown in Fig. 15. While, the command outputting part 471, when judging at step S1703 that the write operation does not finish, goes to step S1706 and then sends the read requests being held at the top of the "priority queue" as a command to the storage device 2 (Step S1706). This process means state 4 shown in Fig. 15.

Next, the command outputting part 471, when judging at step S1701 that the write request does not exist, examines whether the "top priority request" or the "priority request" exists in the "priority queue" with reference to the priority information list (Step S1708).

The command outputting part 471, when judging that the request exists in the "priority queue", goes to step S1706 and then sends the read request sitting at the top of "the priority queue" to the storage device 2 as a command (Step S1706). This process means the state 6 shown in Fig. 15. While, the command outputting part 471, when judging that the request does not exist in the "priority queue" at the step S1708, examines whether the "no priority request" exists in the"no priority queue" or not with reference to the priority information list (Step S1709).

The command outputting part 471, when judging that the request exists in the "no priority queue", sends the "no priority request" sitting at the top of "the no priority queue" to the storage device 2 as a command (Step S1710, see the state 7 of Fig. 14). While, the command outputting part 471, when judging that the "no priority request" does not exist in the "no priority queue", judges that no request exists in any queue and sends no command (Step S1711). The command outputting part 471, as shown in Fig. 17, can selects one from three kinds of queues.

Also, in the present embodiment, the storage device control unit comprises the plural storage devices 2, it may have only one storage device 2.

Also, in the present embodiment, an empty area where unit blocks of integer can be stored consecutively is selected from the plural storage devices 2, and the data is written into the storage device 2 in order of SCSI address. However, not only this, also the empty area may be selected from the plural storage devices 2 at random or from only one storage device 2.

Also, in the present embodiment, though the priority information the four kinds ("top priority", "priority", "no priority" and "write") are defined, a plurality of priority can lead to the above-described effect on the present storage device control unit.

Also, in the present embodiment, the allowable delay time and data size are included in the request arrived from the external device, they may be beforehand held in the storage device control unit.

Also, in the present embodiment, the access position information is included in the request arrived from the external device, and shows the head of the address position where video data or the like is stored. However, the access position information may be information (for example, track positions) which is able to specify position to store video data or the like.

Also, in the present embodiment, the queue managing part 43 (see Fig. 6) comprises three kinds of queues, not only this also it may have at least one queue.

Also, method for computing the estimated processing period (read or write) which is to be written into the allowable delay list is not only such as described above, but also, for example, a method wherein the rotational latency is computed based on information as to detection in the record position for rotation direction of disk.

Also, order of the "top priority request" or the "priority request" held in the "priority queue" may be determined with not only method as described above but also any other methods wherein the expected ending time for each request is shorten.

Also, the above-described position information managing part 1, in response to the file creating request from outside, creates the address position file. Hereinafter in the position information managing part 1, what creates the address position file is called as storage device management system. The address position file may be created not only with the above-described process but also by the following storage device management system (the first to the seventh composition embodiment). But, the address position file in accordance with the following composition embodiment has SCSI address, MSFS address and block address (described below) and thus is different from the above-described address position file.

Fig. 18 is a block diagram which shows the composition of the storage device management system according to the first composition embodiment of the present invention (hereinafter, "the present system"). As shown in Fig. 18, the present system includes a composition managing part 1801, an empty area managing part 1802 and an address position file creating part 1803, and creates address position files, that is, determines destinations of data, when blocks, which data is divided into, are distributed to external plural storage devices.

The composition managing part 1801 manages the information about the number of the above-described storage devices and first identifiers to identify each of the storage devices.

The empty area managing part 1802 manages empty blocks which empty area of each of the storage devices is divided into (one block is able to be stored in each of the empty blocks), using addresses of the empty blocks and the first identifiers. Although the empty area managing part 1802 corresponds to the empty area managing part 11 of Fig. 2, as understood in the above description, these two empty area managing parts differ in a method of managing empty area of the storage devices.

The address position file creating part 1803 creates address position files using the operations according to the flow chart of Fig. 3, and determines distributed data destinations using the first identifiers and the addresses of the empty blocks. Although the address position file creating part 1803 corresponds to the address position file creating part 12 of Fig. 2, as understood in the below description, these two address position file creating parts differ in operations executed in the internal.

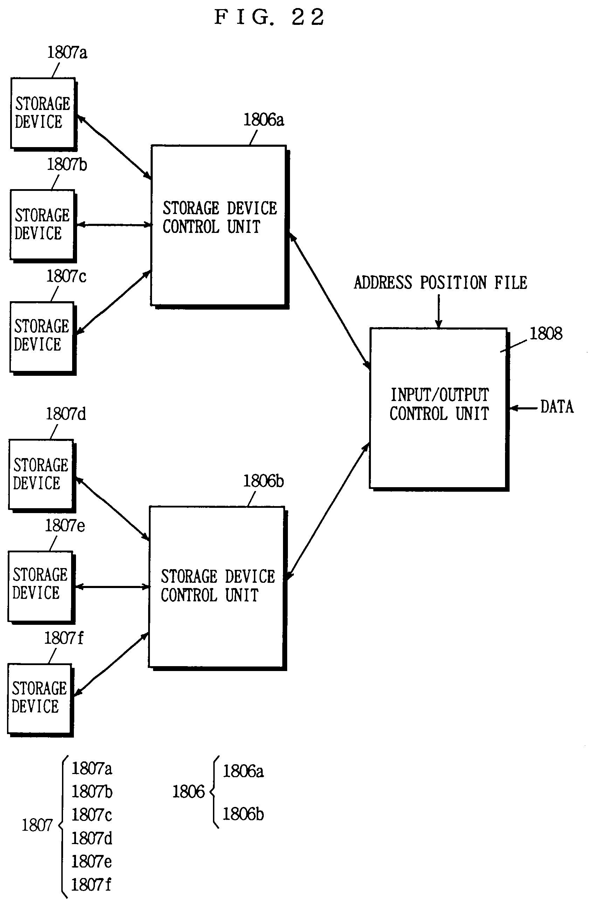

Fig. 19 shows a composition embodiment of the storage devices to be managed by the present system, and shows three storage devices 1805a∼1805c and one storage device control unit 1804 which, for example, is capable of writing data into these storage devices. And the storage device control unit 1804 corresponds to the request receiving part and the request controlling part shown in Fig. 1. That is applied to the storage device control unit 1806 of Fig. 22.

The storage devices 1805a, 1805b and 1805c are provided with SCSI addresses, respectively, SCSIa, SCSIb and SCSIc as the first identifiers, which are different from SISC addresses of other storage devices.

When the present system creates address position files for the plural storage devices (see Fig. 19), the composition managing part 1801 manages the first identifiers SCSIa, SCSIb and SCSIc, and "3" as the number of the storage devices.

The empty area managing part 1802 manages the addresses of the empty blocks in each SCSI address, that is to say, manages the empty blocks of each of the storage devices 1805a∼1805c. Here, to describe the present system more specifically, it is assumed that the storage devices 1805a∼1805c have each 1000 empty blocks, and the empty area managing part 1802 manages the empty-block addresses "1" to "1000" of each of the storage devices.

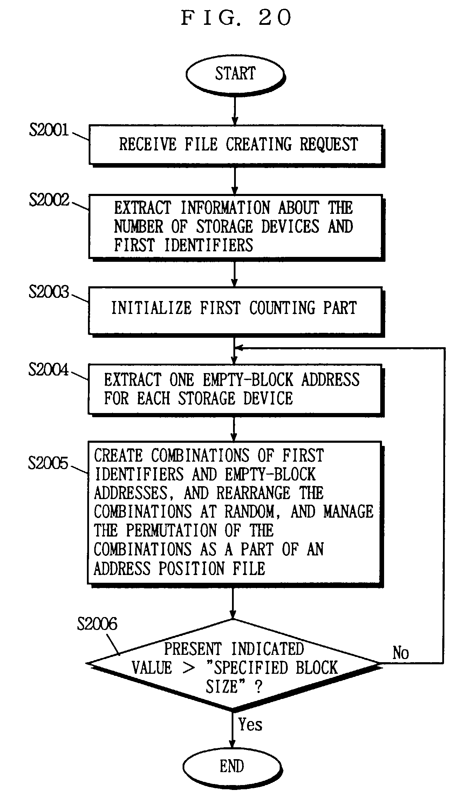

Referring to the flow chart shown in Fig. 20, operations of the present system will be described in detail below.

An external device (not shown) located outside the present system, when having necessity to write data into the storage devices, outputs a file creating request for requesting to create address position files concerning the data. The file creating request includes the information specifying the number of the empty blocks which are necessary to write the data (hereinafter, "specified block size").

The address position file creating part 1803 receives the file creating request from the external device (step S2001), and extracts the "specified block size" from the file creating request and holds it.

Next, the address position file creating part 1803 extracts the information about the number of the storage devices and the first identifiers from the composition managing part 1801 (step S2002), and by them recognizes the composition of the storage devices to be managed.

When, specifically, the present system manages plural storage devices as shown in Fig. 19, the address position file creating part 1803 obtains "3", the number of the storage devices, and the identifiers SCSIa∼SCSIc at the step S2002. By them the address position file creating part 1803 recognizes the composition of the plural storage devices as shown in Fig. 19.

Next, the address position file creating part 1803 initializes the built-in counting part (not shown) which is used to total the number of the empty-block addresses obtained at the following step S2004 (step S2003).

Next, the address position file creating part 1803 extracts one empty-block address, which each of the storage devices provided with the first identifiers obtained at the step S2002 has, from the empty area managing part 1802 (step S2004).

Specifically, the address position file creating part 1803 takes off the first identifiers SCSIa∼SCSIc as described above, and takes off "1" as the respective empty-block addresses at the step S2004.

Next, the address position file creating part 1803 creates combinations of the obtained the first identifiers and the obtained empty-block addresses corresponding to the first identifiers. Then, the address position file creating part 1803 generates a permutation of the combinations at random, and thereby rearranges the self-created combinations, and manages the permutation of the rearranged combinations as a part of an address position file (step S2005). That is, the address position file creating part 1803 designates the permutation, which number is kinds of a factorial of the self-created-combination number, as a destination of data.

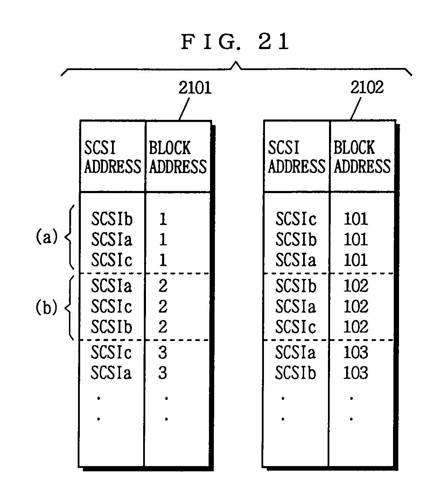

As described above, the address position file creating part 1803, in the case of taking off the empty-block address "1" for each of the first identifiers SCSIa∼ SCSIc as described above, creates three combinations (SCSIa;1), (SCSIb;1) and (SCSIc;1) at the step S2005, wherein the right Figure in the parentheses means an empty-block address. Then, the address position file creating part 1803 rearranges these three combinations at random. Thus, the permutation of the three combinations [(SCSIb;1), (SCSIa;1), (SCSIc;1)] is designated as a part of one address position file (see Fig. 21 (a)).

Next, the address position file creating part 1803, after counting the extracted empty blocks at the step S2004 and accordingly increasing the counting value of the counting part, compares the present indicated value of the counting part with the "specified block size" (step S2006). When the above-described present indicated value is smaller than the "specified block size", the address position file creating part 1803 judges that address position files corresponding to the "specified block size" have not been created, and then executes a loop (steps S2004∼ S2006). When, on the other hand, the present indicated value is the "specified block size" or larger, the address position file creating part 1803 judges that the address position files corresponding to the specified block size have been created, and then, finishes the operations in the flow chart of Fig. 20.

Specifically, when the address position file creating part 1803 takes out three empty-block addresses as described above, and, at the step S2006, adds the number of these empty-block addresses "3" to the present indicated value "0" of the counting part, and compares the present indicated value of the counting part "3" with the "specified block size". Here, when the present indicated value "3" is smaller than the "specified block size", the address position file creating part 1803 executes the loop (steps S2004 to S2006) again. In this loop, for example, it is assumed that a permutation [(SCSIa;2), (SCSIc;2), (SCSIb;2)] is designated as a part of the address position file (see Fig. 21 (b)). Then, the address position file creating part 1803 adds the number of the empty-block addresses "3" to the present indicated value "3" of the counting part, and compares the present indicated value "6" with the "specified block size". Thus, the address position file creating part 1803 executes the loop (steps S2004 to S2006) repeatedly until the present indicated value of the counting part reaches the "specified block size" or more.

Here, the first address position file 2101 shown in Fig. 21 is a file which was obtained by creating according to the above-described embodiment. Meanwhile, Fig. 21 also shows the second address position file 2102 which the address position file creating part 1803 has created in compliance with another file creating request.

The first and the second address position files 2101 and 2102 are composed of combinations of the SCSI addresses and the empty-block addresses, and are created so that the storage device control unit 1804 (see Fig. 19) can understand the address positions of the storage devices into which blocks of data are to be written. The storage device control unit 1804 divides inputted data into blocks, and writes the blocks into the storage devices 1805 according to address position files outputted through the other line than the data. Here, when the storage device control unit 1804 refers to the first address position file 2101, the first block is written into the empty-block address "1", of the storage device 1805b (the SCSI address SCSIb), and the second block is written into the empty-block address "1" of the storage device 1805a (the SCSI address SCSIa). Hereinafter in the same way, blocks are successively written into the empty area of the storage devices designated by the address position file, (SCSIc;1), (SCSIa;2), ... . Thus, data is divided into blocks, and the blocks are distributed to plural storage devices.

As described above, the present system, when managing plural storage devices, creates address position files so as to distribute data equally to the plural storage devices. Thereby, when data is read, the access does not concentrate in specific storage devices and is performed equally to all storage devices. Therefore, enough large band can be obtained as a whole.

And, when data is read, as understood by referring to the first and the second address position files 2101 and 2102, the data has different order of access. Therefore, even if requests for reading the data which have different band are generated simultaneously, because the data has different order of access, the present system has no necessity to delay "access timing" intentionally as described about the prior art. Therefore, that leads to an effect of shortening time which users need in order to get data. Moreover, that leads to another effect, that is, when storage devices have data which bands are different each other, the present system can prevent access timing from becoming synchronous because of the difference in bands as described about the prior art. These two above-described effects are also applied to the second ∼ the seventh composition embodiments described below.

And, although the present system distributes data to all storage devices in the above description, data may be distributed to specific storage devices. That is applied to the third, the fifth ∼ the seventh composition embodiments described in detail below.

And, as understood by referring to the first or the second address position file 2101 or 2102, the empty-block addresses of each storage device are extracted in the order of the empty-block addresses, but the empty-block addresses may be extracted at random. That is applied to the second ∼ the seventh composition embodiments described in detail below.

Next, the storage device management system according to the second composition embodiment of the present invention (hereinafter, "the present system") will be described.

Because the block composition of the present system is the same as shown in the Fig. 18, a Figure and an outline about the block composition will be omitted, and the same reference numbers as used in Fig. 18 will be used also in the below description. However, the composition of plural storage devices to be managed by the present system and other devices is different from the composition shown in Fig. 19, and, as described blow, parts of the composition of the present system are different from the parts described in the first composition embodiment.

Here, the plural storage devices to be managed by the present system are arranged into plural groups in advance. Each group is provided with a second identifier to identify each group, which is different from the second identifiers of other groups. And each storage device is provided with a first identifier which is different from the first identifiers of other storage devices of the same group.

The composition managing part 1801 manages the first identifiers, the second identifiers, the information about the number of the storage devices to be managed by the present system, and the information about the number of the groups of the storage devices.

The empty area managing part 1802 manages empty blocks of each storage device (see the first composition embodiment) using the addresses of the empty blocks and the first and the second identifiers.

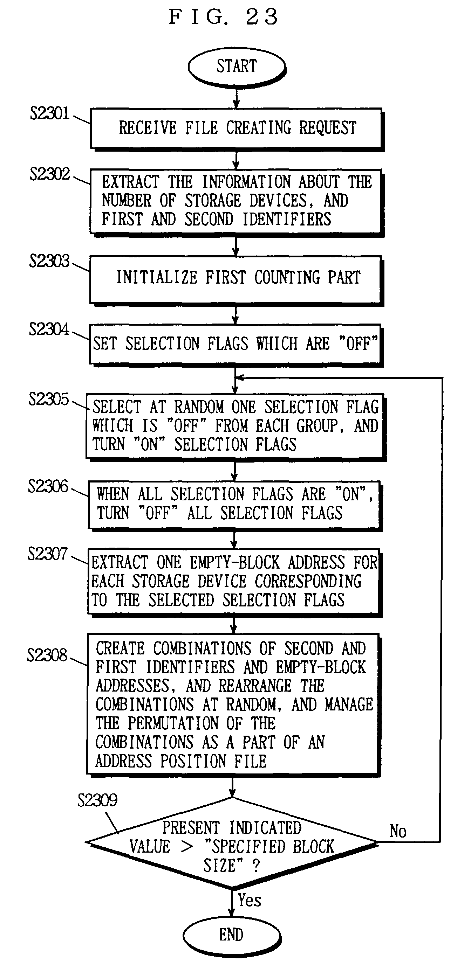

The address position file creating part 1803 executes operations according to the flow chart of Fig. 23, and determines destinations of data for each of the blocks using the first and the second identifiers and the empty-block addresses.

Fig. 22 shows a composition embodiment of the storage devices to be managed by the present system, and shows six storage devices 1807 (1807a to 1807f), two storage device control units 1806 (1806a and 1806b), and one input/output control unit 1808.

As shown in Fig. 22, three storage devices (the storage devices 1807a∼ 1807c) of the six storage devices are connected with the input/output control unit 1808 through the storage device control unit 1806a, and the rest (the storage devices 1807d∼1807f) are connected with the input/output control unit 1808 through the storage device control unit 1806b.

The storage device control units 1806a and 1806b, for example, write data into the storage devices, respectively, 1807a∼1807c and 1807d∼1807f.

The input/output control unit 1808, according to address position files received from the present system, allots blocks which data inputted from the external device is divided into and the address position files to the storage device control units 1806a and 1806b.

Each of the storage devices 1807 is provided with a SCSI address as the first identifier, and specifically, the storage devices 1807a∼1807c are provided with SCSI addresses, respectively, SCSIa∼SCSIc, and the storage devices 1807d∼ 1807f are also provided with SCSI addresses, respectively, SCSIa∼SCSIc.

And the storage device control units 1806a and 1806b are provided with MSFS addresses, respectively, MSFS1 and MSFS2, as the second identifiers, which are different from each other. Then the plural storage devices 1807 are arranged to groups by the MSFS addresses, and are specified by the MSFS addresses and the SCSI addresses. In the below description, specifically, the groups specified by the MSFS addresses MSFS1 and MSFS2 are referred to as, respectively, the group I and the group 2.

When the present system determines address position files for the plural storage devices (see Fig. 22), the composition managing part 1801 manages the second identifiers MSFS1 and MSFS2, and also manages the first identifiers SCSIa∼SCSIc for each of the second identifiers. And the composition managing part 1801 manages "2" as the number of the groups of the storage devices, and "6" as the number of the storage devices.

The empty area managing part 1802 manages the empty-block addresses "1" to "1000" of each of the storage devices 1807 for each MSFS address and each SCSI address.

Referring to the flow chart shown in Fig. 23, operations of the present system will be described in detail below.

As described in the first composition embodiment, an external device outputs a file creating request including "specified block size" and data.

The address position file creating part 1803 receives the file creating request from the external device (step S2301), and extracts the "specified block size" from the file creating request and holds it.

Next, the address position file creating part 1803 extracts the first and the second identifiers, the information about the number of the storage devices, and the information about the number of the groups of the storage devices from the composition managing part 1801 (step S2302), and by them recognizes the composition of the storage devices to be managed.

When, specifically, the present system manages plural storage devices as shown in Fig. 22, the address position file creating part 1803 obtains the second identifier MSFS1 and the first identifiers SCSIa∼SCSIc, the second identifier MSFS2 and the first identifiers SCSIa∼SCSIc, "6" as the number of the storage devices, and "2" as the number of the groups of the storage devices, at the step S2302. By them the address position file creating part 1803 recognizes the composition of the storage devices shown in Fig.22.

Next, the address position file creating part 1803 initializes the counting part (step S2303) which is the same as described in the first composition embodiment.

Next, the address position file creating part 1803 designates a selection flag for each of the storage devices, that is , for each of the first identifiers extracted at the step S2302 (more strictly, for each combination of the second identifiers and the first identifiers), and turns "OFF" all selection flags (step S2303). Here, the "selection flag" shows whether the storage device provided with the selection flag has been selected as the storage device from which an empty-block address should be extracted, or not.

The address position file creating part 1803, when extracting the first identifiers SCSIa∼SCSIc for each of the second identifiers MSFS1 and MSFS2 as described above, sets six selection flags "OFF" at the step S2304.

Next, the address position file creating part 1803 selects at random one of the first identifiers, the selection flag for which is "OFF", from each of the groups specified by the second identifiers, and turns "ON" these selection flags (step S2305), and by them selects the storage devices from which empty-block addresses should be extracted.

The address position file creating part 1803, when designating six selection flags as described above, selects one SCSI address from each of the group 1 and the group 2, and turns "ON" the selection flags for the SCSI addresses. Here, specifically, it is assumed that the SCSI address SCSIb is selected from the group I, and that the SCSI address SCSIa is selected from the group 2.

Next, the address position file creating part 1803 judges whether all selection flags of the storage devices of each group are "ON", or not, and only when all of the selection flags are "ON", the address position file creating part 1803 turns "OFF" all of the selection flags (step S2306), and thereby, can select any of the storage devices from all groups in the next loop (steps S2305 to S2309).

Specifically, when all selection flags for the first identifiers SCSIa∼SCSIc of the group I are "ON", the address position file creating part 1803 turns "OFF" all of the selection flags.

Next, the address position file creating part 1803 extracts one empty-block address for each of the storage devices (specified by the second and the first identifiers) selected at the step S2305 , from the empty area managing part 1802 (step S2307).

Specifically, the address position file creating part 1803 selects the first identifier SCSIb from the group I and the first identifier SCSIa from the group 2 as described above, and takes off "1" as the respective empty-block addresses at the step S2307.

Next, the address position file creating part 1803 arranges one of the second identifiers, one of the first identifiers and the empty-block address for these second and first identifiers in a combination, and creates the combinations as many as the groups of the storage devices. Then, the address position file creating part 1803 rearranges the combinations at random as described in the first composition embodiment, and manages the permutation of the combinations as a part of an address position file (step S2308).

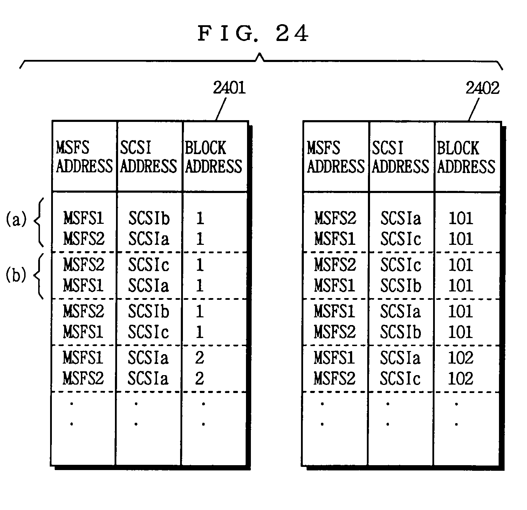

As described above, the address position file creating part 1803, taking off the empty-block address "1" for the second identifier MSFS1 and the first identifier SCSIb, and also for the second identifier MSFS2 and the first identifier SCSIa, creates two combinations (MSFS1;SCSIb;1) and (MSFS2;SCSIa;1) at the step S2308, wherein the right Figure in the parentheses means an empty-block address. Then, the address position file creating part 1803 rearranges these combinations at random. Here, it is assumed that the permutation of the combinations [(MSFS1;SCSIb;1), (MSFS2;SCSIa;1)] is designated as the address position file (see Fig. 24 (a)).

Next, the address position file creating part 1803, after adding the number of the empty-block addresses extracted at the step S2307 to the counting value of the counting part, compares the present indicated value of the counting part with the "specified block size" (step S2309). When the present indicated value is smaller than the "specified block size", the address position file creating part 1803 executes a loop (steps S2305∼S2309) again. When, on the other hand, the present indicated value is the "specified block size" or larger, the address position file creating part 1803 finishes the operations according to the flow chart shown in Fig. 23.

Specifically, the address position file creating part 1803 takes off two empty-block addresses as described above, and adds "2", the number of the empty block addresses, to "0", the present indicated value of the counting part. Here, when the present indicated value of the counting part "2" is smaller than the "specified block size", the address position file creating part 1803 executes the loop (steps S2305∼S2309) again. In this loop, it is assumed that [(MSFS2;SCSIc;1), (MSFS1;SCSIa;1)] is designated as the second part of the address position file (see Fig. 24 (b)). Then, the address position file creating part 1803 adds "2", the number of the empty-block addresses, to "2", the present indicated value of the counting part, and compares the present indicated value "4" with the "specified block size". Thus, the address position file creating part 1803 executes the loop (step S2305∼S2309) repeatedly until the present indicated value of the counting part reaches the "specified block size" or larger.

Here, the first address position file 2401 shown in Fig.24 has been created according to the above-described embodiment. And Fig. 24 shows the second address position file 2402 which the address position file creating part 1803 has created after accepting another file creating request.

The first and second address position files 2401 and 2402 are composed of the combinations of the MSFS addresses, the SCSI addresses and the empty-block addresses so that the input/output control unit 1808 is capable of grasping immediately the storage device control units 1806 connected with the storage devices which blocks should be written into, and also the storage device control units 1806 are capable of grasping the empty-block addresses of the storage devices which the blocks should be written into. The input/output control unit 1808, according to the address position files, allots blocks, which data inputted to the input/output control unit 1808 through a different line from that of the address position files is divided into, to the storage device control units 1806. The storage device control units 1806 write the blocks received from the input/output control unit 1808 into the storage devices 1807 according to the address position files. Here, when the input/output control unit 1808 and the storage device control units 1806 follow the first address position file 2401, the first block is written into the empty-block address "1" of the storage device 1807b (MSFS1;SCSIb), and the second block is written into the empty-block of the storage device 1807d (MSFS2;SCSIa) which address is "I". Hereinafter, in the same way, blocks are written into the empty blocks of the storage devices designated by the address position files, (MSFS2;SCSIc;1), (MSFS1;SCSIa;1), ... . Thereby, data is divided into blocks, and the blocks are distributed to plural storage devices arranged to plural groups.

As described above, the present system, when managing plural storage devices arranged to plural groups, creates address position files so as to distribute blocks of data equally to the groups, and also equally to the storage devices in each group. Thereby, when data is read, access does not concentrate in specific groups of the storage devices, and also access does not concentrate in specific storage devices in each of the groups, that is, access is made equally to all of the groups and also equally to all of the storage devices in each of the groups, and that leads to an effect of getting enough large band as a whole.

And, although data is distributed to all storage devices in each group in the above description, data may be distributed to specific storage devices in each group.

Next, the storage device management system according to the third composition embodiment of the present invention (hereinafter, "the present system") will be described.

Because the block composition of the present system and the composition embodiment of storage devices to be managed by the present system and other devices is the same as shown in Figs. 18 and 19, Figures and outlines about it will be omitted, and the same reference numbers as used in Figs. 18 and 19 will be used also in the below description. However, because the information managed by the composition managing part 1801 and the operation process executed by the address position file creating part 1803 is different from that described in the previous composition embodiments, the difference will be described in detail. And, because the information managed by the empty area managing part 1802 is the same as described in the first composition embodiment, an explanation about it will be omitted.

The composition managing part 1801 manages the information about the number of the storage devices and first identifiers as described in the first composition embodiment, and moreover, manages "distribution rates" of the storage devices.

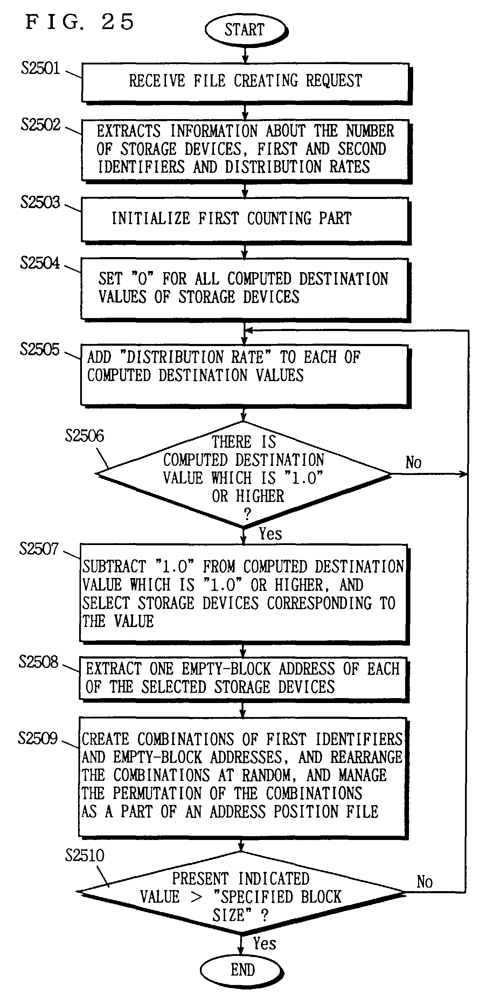

The address position file creating part 1803 executes operations according to the flow chart shown in Fig. 25, and, taking consideration into the "distribution rates", determines distributed data locations using the first identifiers and empty-block addresses.

Here, "distribution rates" will be described.

"A distribution rate" of a storage device is able to be found using the band (volume of data which can be written/read in a unit time) and/or the capacity of the storage device, and, when blocks of data are distributed to plural storage devices, a "distribution rate" of a storage device means a rate of the number of the blocks distributed to the storage device. Specifically, a "distribution rate" can be found by methods ① to ③ described blow.
① When a "distribution rate" of a storage device is found in proportion to the band of the storage device, the "distribution rate" of the storage device is able to be found by the following calculation.$\text{(the band of the storage device) / (the total of the bands of all storage devices)}$
   Here, it is assumed that plural storage devices are the storage devices 1805a, 1805b and 1805c shown in Fig. 19, and that the bands of the storage devices 1805a, 1805b and 1805c are, respectively, 1 Mbps, 2Mbps and 2Mbps. The "distribution rate" of the storage device 1805a can be found by the above-described formula (2).$\text{1 Mbps / (1 Mbps+2Mbps+2Mbps) = 1/5}$
   By the same formula, the "distribution rates" of the storage devices 1805 and 1805c can be found, respectively, 2/5 and 2/5.
② When a "distribution rate" is found in proportion to the capacity of a storage device, the "distribution rate" of the storage device can be found by the following calculation.$\text{(the capacity of the storage device) / (the total of the capacity of all storage devices)}$
   Here, as described above, it is assumed that the capacity of the storage devices 1805a, 1805b and 1805c are, respectively, 2GB, 2GB and 4GB. The "distribution rate" of the storage device 1805a can be found by the above-described formula (3).$\text{2GB / (2GB+2GB+4GB) = 2/8}$
   By the same formula, the "distribution rates" of the storage devices 1805b and 1805c can be found, respectively, 2/8 and 4/8.
③ When a "distribution rate" of a storage device is found in a method, in which the band and the capacity of the storage device are taken into consideration, the "distribution rate" of the storage device can be found by the following calculation.$\text{{( the band of the storage device) / (the total of the band of all storage devices)} × α + {(the capacity of the storage device) / (the total of the capacity of all storage devices)} × (1-α)}$
   Here, α and (1-α) are rates which show how the band and the capacity are taken into consideration when "distribution rates" are determined, and α satisfies 0<α<1.

Here, as described above, it is assumed that the bands and the capacity of the storage devices 1805a, 1805b and 1805c are, respectively, 1 Mbps and 2GB, 2Mbps and 2GB, and 3 Mbps and 4GB, and that α is 3/5. The "distribution rate" of the storage device 1805a can be found by the above-described formula (4).$\text{1/6 × 3/5 + 2/8 × 2/5 = 1/5}$

By the same formula, the "distribution rates" of the storage devices 1805b and 1805c can be found, respectively, 3/10 and 1/2.

When the present system manages plural storage devices as shown in Fig. 19 and the "distribution rates" of the storage devices are found by the above-described method ①, the composition managing part 1801 manages "3", the number of the storage devices, first identifiers SCSIa, SCSIb and SCSIc, and "0.2", "0.4" and "0.4", the "distribution rates" of the storage devices, respectively, 1805a, 1805b and 1805c for SCSIa, SCSIb and SCSIc.

Next, referring to the flow chart shown in the Fig. 25, operations of the present system will be described in detail.

As described in the first composition embodiment, an external device outputs a file creating request including "specified block size" and data.

The address position file creating part 1803 receives the file creating request from the external device (step S2501), and extracts the "specified block size" included by the file creating request and holds it.

Next, the address position file creating part 1803 extracts the first identifiers and the information about the number of the storage devices from the composition managing part 1801, and by them recognizes the composition of the storage devices to be managed, and extracts the "distribution rates" (step S2502).

Specifically, when the present system manages plural storage devices as shown in Fig. 19, the address position file creating part 1803, in the same way as the step S2002 shown in Fig. 20, recognizes the storage devices to be managed at the step S2502. And the address position file creating part 1803 extracts "0.2", "0.4" and "0.4", the "distribution rates" for the SCSI addresses, respectively, SCSIa, SCSIb and SCSIc.

Next, the address position file creating part 1803 initializes the counting part as described in the first composition embodiment (step S2503).

Next, the address position file creating part 1803, in order to select the storage devices as destinations of data, designates the computed destination values based on the information about the number of the storage devices and the first identifiers which have been extracted at the step S2502, and sets at "0" the present indicated values of the computed destination values (step S2504).

Specifically, when the address position file creating part 1803 extracts the first identifiers SCSIa, SCSIb and SCSIc as described above, the address position file creating part 1803 sets at "0" the present indicated values of the computed destination values for these first identifiers.

Next, the address position file creating part 1803 adds the "distribution rates" corresponding to each of the present indicated values of the computed destination values to the present indicated values of the computed destination values (step S2505).

Specifically, the address position file creating part 1803 sets at "0" the present indicated values of the computed destination values for SCSIa, SCSIb and SCSIc as described above, and adds "0.2", "0.4" and "0.4" to "0" as each of the present indicated values of the computed destination values..

Next, the address position file creating part 1803 judges whether there are the present indicated values of the computed destination values showing "1.0" or higher, or not (step S2506). When all present indicated values show lower than "1.0", the address position file creating part 1803 moves to the step S2505. When, on the other hand, at least one of the present indicated values shows "1.0" or higher, the address position file creating part 1803 moves to the step S2507. That is, the address position file creating part 1803 adds the "distribution rates" to each of the present indicated values of the computed destination values at the step S2505 until at least one of the present indicated values shows "1.0" or higher at the step S2506.

The address position file creating part 1803, when moving to the step S2507, subtracts "1.0" from the present indicated values of the computed destination values showing "1.0" or higher, and selects the storage devices, specified by the first identifiers for these present values from which "1.0" has been subtracted, as the storage devices which the empty-block addresses should be extracted from (step S2507).

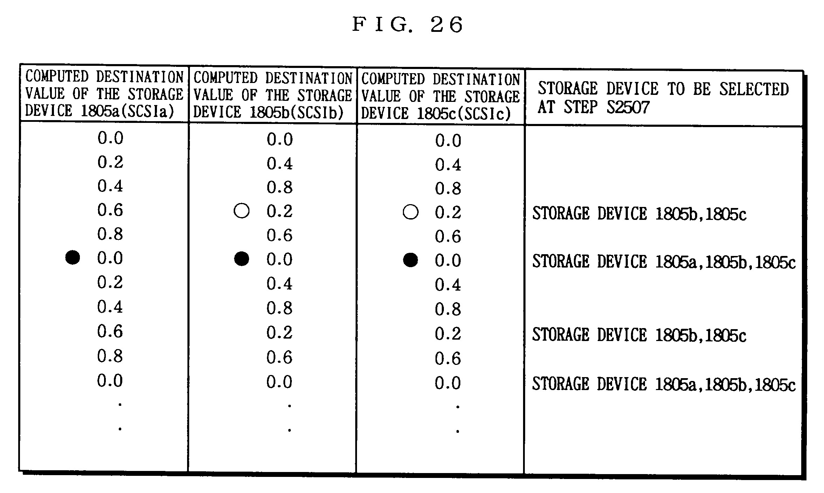

Here, Fig. 26 shows what shifts are made in the computed values for SCSIa∼SCSIc when the steps S2505 and S2506 are executed repeatedly, and shows the storage devices 1805 to be selected at the step S2507.

As shown in Fig. 26, because the "distribution rate" "0.2" is added to the present indicated value of the computed destination value for the first identifier SCSIa every time the step S2505 is executed, the present indicated value shifts from the present indicated value "0"→"0.2"→"0.4"→"0.6" ... . In the same way, because the "distribution rate" "0.4" is added to each of the present indicated values of the computed destination values for the first identifiers SCSIb and SCSIc, the present indicated values shift from the present indicated value "0"→"0.4"→ "0.8"→"1.2".

When the present indicated values of the computed destination values for the first identifiers SCSIb and SCSIc reach "1.2", the address position file creating part 1803 moves to the step S2507, and subtracts "1.0" from "1.2", the present indicated values, and sets the present indicated values at "0.2" (see the values indicated by ○ shown in Fig. 26). The address position file creating part 1803 selects the storage devices 1805b and 1805c provided with the first identifiers, respectively, SCSIb and SCSIc, the present indicated values of which have been set at "0.2", as the storage devices which empty-block addresses should be extracted from.

The above-described operations will be described again, referring to Fig. 25.

After the step S2507, the address position file creating part 1803 extracts one empty-block address for each of the first identifiers selected at the step S2507 from the empty area managing part 1801(step S2508).

Specifically, the address position file creating part 1803 selects the first identifiers SCSIb and SCSIc as described above, and extracts the empty-block address "1" for each of the first identifiers.

Next, the address position file creating part 1803 executes the same operations as the step S2005 in Fig. 20, and arranges one of the first identifiers and the empty-block address for this identifier to a combination, and then rearranges at random the combinations as many as the SCSI addresses, and manages a permutation of the combinations as a part of an address position file (step S2509).

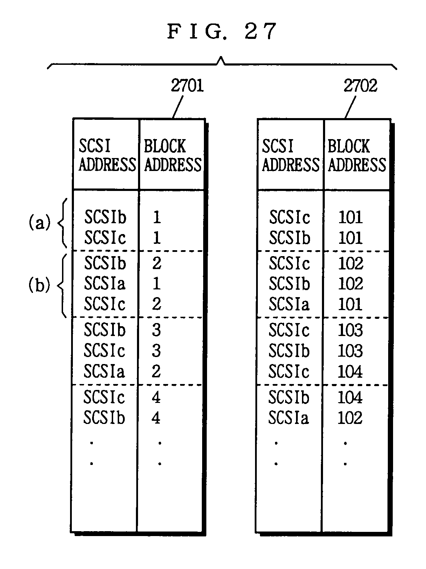

Specifically, when the address position file creating part 1803 extracts the empty-block address "1" for each of the SCSI addresses SCSIb and SCSIc as described above, the address position file creating part 1803 creates combinations of the SCSI addresses and the empty-block addresses (SCSIb;1) and (SCSIc;1) at the step S2509, and rearranges these combinations at random. Then the permutation of the combinations [(SCSIb;1), (SCSIc;1)] is designated as an address position file (see Fig. 27 (a)).

Next, the address position file creating part 1803 adds the number of the empty-block addresses extracted at the step S2508 to the present indicated value of the counting part, and compares the present indicated value of the counting part with the "specified block size" (step S2510). When the present indicated value is smaller than the "specified block size", the address position file creating part 1803 executes a loop (steps S2505∼S2510) again. On the other hand, when the present indicated value is the "specified block size" or larger, the address position file creating part 1803 finishes the operations according to the flow chart shown in Fig. 25.

Specifically, the address position file creating part 1803, when extracting two empty-block addresses as described above, adds "2", the number of the empty-block addresses, to "0", the present indicated value of the counting part. When the present indicated value of the counting part "2" is smaller than the "specified block size", the address position file creating part 1803 executes the loop (steps S2505∼S2510) again. In this loop, the address position file creating part 1803 repeatedly executes S2505 and S2506, and the present indicated value of the computed destination values for the SCSI address SCSIa shifts from "0.6"→ "0.8"→"1.0". And the present indicated values of the computed destination values for the SCSI address SCSIb and SCSIc shift from "0.2"→"0.6"→"1.0" (see Fig. 26). Here, because all of the present indicated values of the computed destination values show "1.0" simultaneously, the address position file creating part 1803 moves to the step S2507, and subtracts "1.0" from "1.0", all of the present indicated values, and sets all of the present indicated values of the computed destination values at "0.0" (see the values indicated by ● shown in Fig. 26). Thereby, the storage devices 1805a∼1805c are selected as the storage devices which empty-block addresses should be extracted from.

Specifically, the address position file creating part 1803 extracts the empty-block addresses "1", "2" and "2" for the SCSI addresses, respectively, SCSIa, SCSIb and SCSIc at the step S2508.

The address position file creating part 1803 creates combinations (SCSIa;1), (SCSIb;2) and (SCSIc;2) at the step S2509, and rearranges these combinations at random. Here, it is assumed that a permutation of the combinations [(SCSIb;2), (SCSIa;1), (SCSIc;2)] is designated as an address position file (see Fig. 27 (b)). Then, the address position file creating part 1803, at the step S2510, adds "3", the number of the empty-block addresses, to "2", the present indicated value of the counting part as described above, and compares the present indicated value "5" with the "specified block size". In this way, the address position file creating part 1803 executes the loop (steps S2505∼S2510) repeatedly until the present indicated value of the counting part reaches the "specified block size" or larger.

Here, the first address position file 2701 in Fig. 27 has been created according to the above-described embodiment. And Fig. 27 shows the second address position file 2702 which the address position file creating part 1803 has created after accepting another file creating request. These address position files 2701 and 2702 have the same composition as described in the first composition embodiment, and by them the storage device control unit 1804 can grasp immediately destinations of data.

The storage device control unit 1804 writes blocks of data into the storage devices 1805 according to address position files as described in the first composition embodiment. Thereby, blocks of data are distributed to plural storage devices.

As described above, the present system creates the address position files not to equalize the number of blocks of data distributed to each of the storage devices as described in the first composition embodiment, but to equalize burden of operations on each of the storage devices using "distribution rates". That is, specifically, in a case in which the band, the capacity and other performances of each of the storage devices 1805 are not equal, when the number of blocks distributed to each of the storage devices is equalized, the burden of operations on some of the storage devices, whose performance is inferior to that of the rest (hereinafter, the "first storage devices"), is heavier than the burden on the other storage devices whose performance is superior to that of the first storage devices (hereinafter, the "second storage devices"). Then, the performance of the second storage devices is restricted by the performance of the first storage devices, and the present system is not able to use the performance of the second storage devices at full.

However, in the present system, it is possible that the number of blocks written into the first storage devices is smaller than the number of blocks written into the second storage devices relatively, and thus the burden of operations on the first storage devices is equal to that on the second storage devices. Thereby, the present system is able to make effective use of the performance of all storage devices and is able to get large band as a whole.

Although "distribution rates" used in the present system are managed by the composition managing part 1801 in advance in the above description, the "distribution rates" are able to be given to the address position file creating part 1803 as parameter. And the address position file creating part 1803 may execute the operations according to the flow chart shown in Fig. 25 using the "distribution rates" found by executing algorithm.

Next, the storage device management system according to the fourth composition embodiment of the present invention (hereinafter, "the present system") will be described.

Because the block composition of the present system and the composition embodiment of the storage devices to be managed by the present system and other devices is the same as shown in Figs. 18 and 22, Figures and outlines about it will be omitted, and the same reference numbers as used in Figs. 18 and 22 will be used also in the below description. However, because the information managed by the composition managing part 1801 and the empty area managing part 1802 of the present system, and the operation process executed by the address position file creating part 1803 are different from those described in the previous composition embodiments, the difference will be described in detail.

The composition managing part 1801 manages the information about the number of the storage devices, the information about the number of groups of the storage devices, and first and second identifiers, as described in the second composition embodiment, and moreover, manages the first and the second "distribution rates".

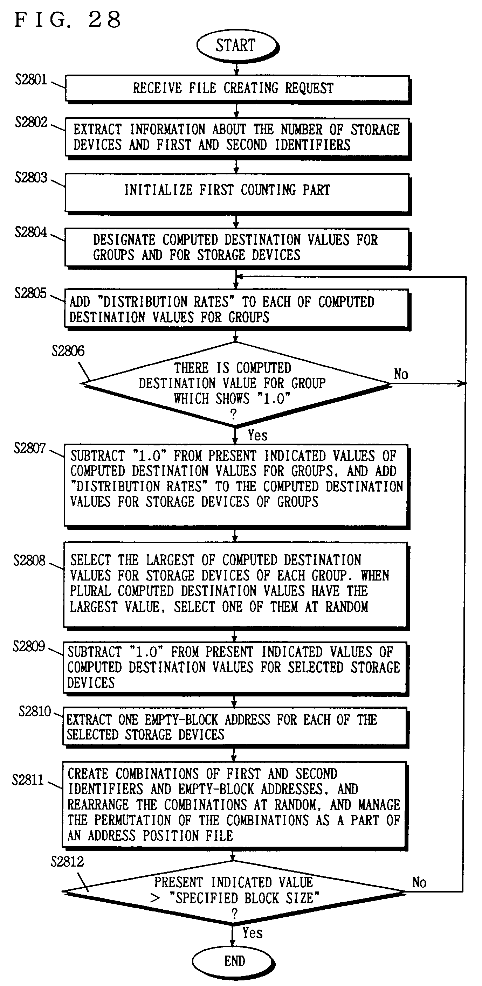

The address position file creating part 1803 executes operations according to the flow chart shown in Fig. 28, and, taking consideration into the first and the second "distribution rates", determines destinations of blocks of data using the first and the second identifiers and empty-block addresses.

Here, the first and the second "distribution rates" will be described.

The first "distribution rates" are almost the same as "distribution rates" described in the third composition embodiment. However, although the "distribution rates" described in the third composition embodiment show rates for all storage devices, the first "distribution rates" described in the present composition embodiment show rates for all storage devices of the same group. Because there are no other differences than that difference, an detailed explanation about the first "distribution rates" will be omitted.

Next, the second "distribution rates" will be described. Here, all storage devices of each group are arranged to one storage device, and a second "distribution rate" is found using band and/or capacity of the storage device which is composed of storage devices of the same group, and means a rate of the number of blocks of data distributed to the storage device which is composed of storage devices of the same group. That is, when the blocks of data are distributed to plural groups a second "distribution rate" means a rate of the number of blocks of data distributed to each of the groups of the storage devices.

Plural storage devices of each of the groups are arranged to one storage device as described below.

First, a first "distribution rate" of each storage device of the same group is found as described in the third composition embodiment (see the explanation about the methods ① to ③ in the third composition embodiment). Next, band and capacity is each multiplied by the reciprocal of the first "distribution rate" and the values found by that method are each regarded as practical band and practical capacity. And the smallest value of the practical band and the smallest value of the practical capacity of all storage devices of the same group are each regarded as band and capacity of the storage device which is composed of the storage devices of the group. And a second "distribution rate" can be found by using the band and the capacity of the storage device which is composed of the storage devices of the group in the same way as described about the methods ① to ③ in the third composition embodiments.

An embodiment will be described below.

It is assumed that the band and the capacity of the storage devices 1807a, 1807b and 1807c are 1 Mbps and 2GB, 2Mbps and 2GB, 3 Mbps and 4GB respectively. And it is assumed that the first "distribution rates" of the storage devices 1807a, 1807b and 1807c are found "0.2", "0.4" and "0.4" respectively. Here, practical band and practical capacity of the storage devices 1807a, 1807b and 1807c are found 5 Mbps and 10GB, 10 Mbps and 10GB, 15 Mbps and 20 GB, respectively. Therefore, when the storage devices 1807a, 1807b and 1807c are arranged to one storage device, the band and the capacity of the storage device (the group 1), which is composed of the storage devices 1807a, 1807b and 1807c, are each 5 Mbps and 10GB. In the same way, the band and the capacity of the storage device (the group 2), which is composed of the storage devices 1807d, 1807e and 1807f, are each 5 Mbps and 10GB. Here, when the second "distribution rates" are found by the method ① in the third composition embodiment, the second "distribution rates" of the group 1 and the group 2 are each "0.5".

Next, referring to the flow chart shown in Fig. 28, operations of the present system will be described in detail.

As described in the first composition embodiment, an external device outputs a file creating request including "specified block size" and data.

The address position file creating part 1803 receives the file creating request from the external device (step S2801), and takes off the "specified block size" included in the file creating request, and holds it.

Next, the address position file creating part 1803 extracts first and second identifiers, the information about the number of the storage devices, and the information about the number of the groups of the storage devices from the composition managing part 1801, and by them recognizes the composition of the storage devices to be managed, and moreover, extracts the first and the second "distribution rates" (step S2802).

Specifically, when the present system manages plural storage devices as shown in Fig. 22, the address position file creating part 1803 extracts "6" as the number of the storage devices, and "2" as the number of the groups at the step S2802. And the address position file creating part 1803 also extracts the second identifier MSFS1, "0.5" which is the second "distribution rate" of the group 1, the first identifiers SCSIa to SCSIc of the group 1, and "0.2", "0.4" and "0.4" which are the first distribution rates for the first identifiers SCSIa, SCSIb and SCSIc respectively. The address position file creating part 1803 executes the same operations also for the group 2 specified by the second identifier MSFS2.

Next, the address position file creating part 1803 initializes the counting part as described in the first composition embodiment (step S2803).

Next, the address position file creating part 1803, in order to select the storage devices as destinations of data, sets the computed destination values of the groups and of the storage devices at the number which is the total number of the groups and the storage devices, based on the second and the first identifiers extracted at the step S2502, and set at "0" the present indicated values of the computed destination values (step S2804).

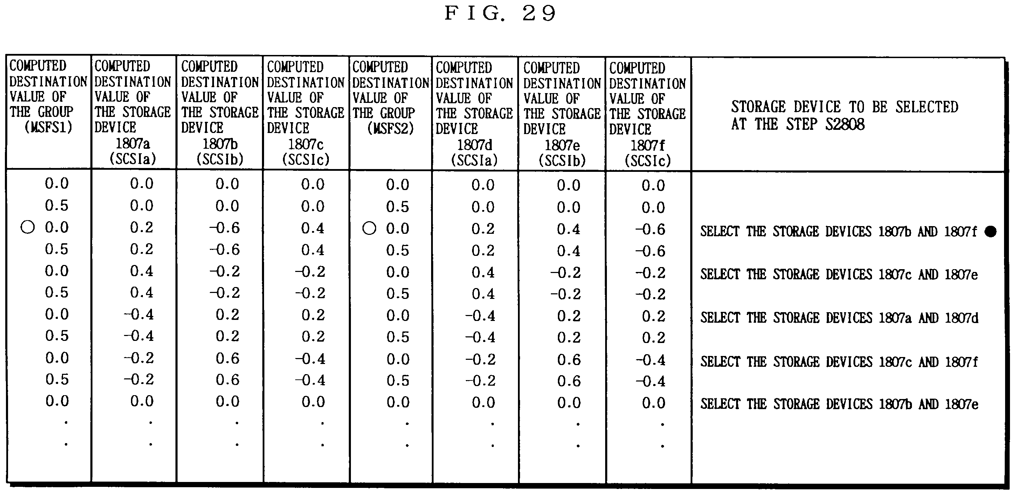

Specifically, the address position file creating part 1803 extracts the first identifiers SCSIa∼SCSIc for each of the second identifiers MSFS1 and MSFS2 as described above, and sets at "0" the present indicated values of the computed destination values for the groups in relation to the second identifiers MSFS1 and MSFS2, and also sets at "0" the present indicated values of the computed destination values for the storage devices in relation to the first identifiers SCSIa∼SCSIc of each group (see Fig. 29).

Next, by the operation at the step S2804 the address position file creating part 1803 adds the second "distribution rate" corresponding to the present indicated value for the computed destination value for each of the groups (step S2805).

Specifically, the address position file creating part 1803, when setting at "0" the present indicated value of the computed destination value for the groups in relation to each of the second identifiers MSFS1 and MSFS2 as described above, adds "0.5" which is the second "distribution rate" of each second identifier, to "0" which is the present indicated value of the computed value.

Next, the address position file creating part 1803 judges whether either of the present indicated values of the computed destination-of-the-distributed-data values for the groups shows "1.0" or higher, or not (step S2806). When all of the present indicated values of the computed destination values are lower than "1.0", the address position file creating part 1803 moves to the step S2805. On the other hand, when any of the present indicated values of the groups is "1.0" or higher, the address position file creating part 1803 moves to the step S2807. That is, the address position file creating part 1803 repeatedly adds the second "distribution rates" to the present indicated values of the computed destination values for the groups at the step S2805 until at least one of the present indicated values reaches "1.0" or higher.

The address position file creating part 1803, when moving to the step S2807, subtracts "1.0" from the present indicated values of the computed destination values for the groups showing "1.0" or higher. Then, the address position file creating part 1803 adds the first "distribution rates" corresponding to the present indicated values for the computed destination values of the storage devices of these groups. That is, the address position file creating part 1803, at the step S2806, selects the groups of the storage devices which empty-block addresses should be extracted from.

The address position file creating part 1803, when selecting the second identifiers MSFS1 and MSFS2 as described above, adds "0.2" which is the first "distribution rate", to "0" which is the present indicated value of the computed destination value for the storage device of the first identifier SCSIa designated corresponding to MSFS1 and MSFS2. In the same way, the address position file creating part 1803 adds "0.4" which is the "distribution rate", to "0" which is the present indicated value for the computed destination value for each of SCSIb and SCSIc.

Next, the address position file creating part 1803 selects the largest of the present indicated values of the computed destination values for the storage devices of each group, and selects the storage device corresponding to the value as the storage device which an empty-block address should be extracted from. When there are plural storage devices of the same group showing the largest present indicated value, the address position file creating part 1803 selects one of the storage devices at random, and selects the storage device as the storage device which an empty-block address should be extracted from (step S2808).

Next, the address position file creating part 1803 subtracts "1.0" from the present indicated values of the computed destination-of-the-distributed-data values for the storage devices selected at the step S2808 (step S2809).

Here, Fig. 29 shows what shifts are made in the computed destination value for the groups and the storage devices when the address position file creating part 1803 executes the above-described operations repeatedly, and also shows the storage devices 1807 to be selected at the step S2808.

As shown in Fig. 29, because the second "distribution rate" "0.5" is added to the present indicated values of the computed destination values for the groups provided with the second identifiers MSFS1 and MSFS2 every time the step S2805 is executed, the present values shift from the present indicated value "0"→ "0.5"→"1.0". At the time that the present indicated values for the computed destination values of the groups provided with the second identifiers MSFS1 and MSFS2 reach "1.0" which is the address position file creating part 1803 moves to the step S2807, and subtracts "1.0" from "1.0" which is the present indicated values, and sets at "0.0" the present indicated values of the computed destination values for the groups (see the values indicated by ○ shown in Fig. 29). Thereby, the group 1 and the group 2 are selected as the groups which empty-block addresses should be extracted from.

Next, the address position file creating part 1803 adds "0.2", "0.4", and "0.4" which are the first "distribution rates", to "0" which is the present indicated values of the computed destination values for the storage devices, respectively, provided with the first identifiers SCSIa, SCSIb and SCSIc of the group 1 as described above. The address position file creating part 1803 executes the same operations also for the storage devices of the group 2.

Then, the address position file creating part 1803 executes the above-described step S2808, and here, the present indicated values of the computed destination values of the storage devices provided with the first identifiers SCSIb and SCSIc of the group 1 are the largest. Therefore, the address position file creating part 1803 selects at random one of the present indicated values of the computed destination values. Here, it is assumed that the storage device 1807b (the first identifier SCSIb) is selected as the storage device which an empty-block address should be extracted from. The address position file creating part 1083 executes the same operations also for the group 2, and it is assumed that the storage device 1807f (the first identifier SCSIc) is selected as the storage device which an empty-block address should be extracted from (see the part indicated by ● shown in Fig. 29).

Then, the address position file creating part 1803 executes the step S2809, that is, subtracts "1.0" from "0.4" which is the present indicated value of the computed destination values for the storage device 1807b provided with the second identifier MSFS1 and the first identifier SCSIb, and also subtracts "1.0" from "0.4" which is the present indicated value for the storage device 1807f provided with the second identifier MSFS2 and the first identifier SCSIc, and sets the present indicated values of the computed destination values of the storage device 1807b and 1807f at "-0.6".

Again, referring to the Fig. 28, the operations of the present system will be described.

The address position file creating part 1803, when moving to the step S2810, extracts one empty-block address for each of the storage devices (specified by the second and the first identifiers) selected at the step S2808 from the empty area managing part 1802 (step S2810).

The address position file creating part 1803, when selecting the first identifier SCSIb for the second identifier MSFS1, and the first identifier SCSIc for the second identifier MSFS2, extracts the empty-block address "1" for each of the first identifier.

Next, the address position file creating part 1803 arranges one of the second identifiers, one of the first identifiers and the empty-block address for these second and first identifiers to one combination, and rearranges at random the combinations as many as the groups, and the permutation of the combinations is managed as a part of one address position file (step S28II).

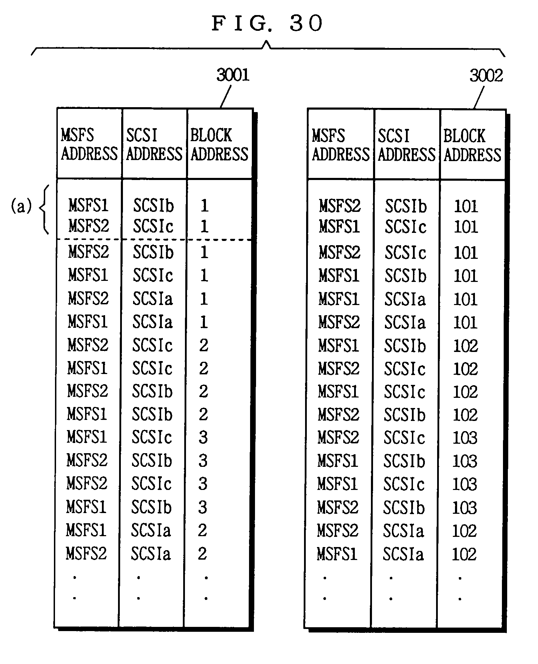

The address position file creating part 1803, when extracting the empty-block address "1" for the second identifier MSFS1 and the first identifier SCSIb, and for the second identifier MSFS2 and the first identifier SCSIc, creates combinations (MSFSS1;SCSIb;1) and (MSFS2;SCSIc;1), and rearranges the combinations at random, and a permutation [(MSFS1;SCSIb;1), (MSFS2;SCSIc;1)] is designated as a part of an address position file (see Fig. 30 (a)).

Next, the address position file creating part 1803 adds the number of the empty-block addresses extracted at the step S2810 to the present indicated value of the counting part, and compares the present indicated value of the counting part with the "specified block size" (step S2812). When the present indicated value is smaller than the "specified block size", the address position file creating part 1803 executes a loop (step S2805∼S2812) again. On the other hand, when the present indicated value is the "specified block size" or larger, the address position file creating part 1803 finishes the operations according to the flow chart of Fig. 28.

As described above, the present system creates address position files, not to distribute blocks of data equally to each of the groups and also equally to storage devices of each of the groups, but to equalize burden of operations on each of the group and also to equalize the burden of operations on each of the storage devices of the groups using the first and the second "distribution rates". Thereby, when data is read, access does not concentrate in the strong devices of specific groups, and also access does not concentrate in specific storage devices of each of the groups, and moreover, the burden of operations on each of the groups is equal, and the burden on each of the storage devices is also equal, and that leads to an effect of getting large band as a whole.

Although the first and the second "distribution rates" used in the present system are managed by the composition managing part 1801 in advance, the first and the second "distribution rates" can be given to the address position file creating part 1803 as parameter. And the address position file creating part 1803 may execute the operations according to the flow chart shown in Fig. 28 using the first and the second "distribution rates" found by executing prescribed algorithm.

Next, the storage device management system according to the fifth composition embodiment of the present invention (hereinafter, "the present system") will be described below.

Because the block composition of the present system and the composition embodiment of the storage devices to be managed by the present system and other devices are the same as shown in Figs. 18 and 19, Figures and outlines about it will be omitted, and the same reference numbers as used in Figs. 18 and 19 will be used also in the below description. However, the operation process executed by the address position file creating part 1803 of the present system follows the flow chart shown in Fig. 14. And, because the information managed by the composition managing part 1801 and the empty area managing part 1802 is the same as described in the first composition embodiment, an explanation about it will be omitted.

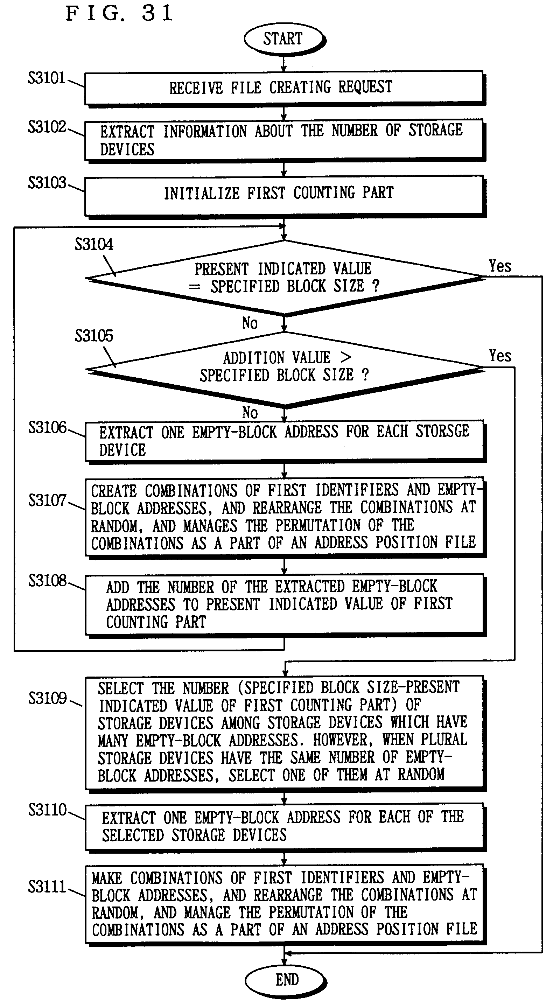

Referring to the flow chart shown in Fig. 31, the operations of the present system will be described below.

As described in the first composition embodiment, an external device outputs a file creating request including "specified block size" and data. And specifically, the case in which the "specified block size" is "4" will be described below.

Like the operations in the steps S2001∼S2003 shown in Fig. 20, the address position file creating part 1803 receives the file creating request (step S3101), and extracts the "specified block size" included in the file creating request, and holds it.

Next, the address position file creating part 1803 extracts first identifiers and the information about the number of the storage devices from the composition managing part 1801 (step S3102).

Specifically, when the present system manages plural storage devices as described in Fig. 19, the address position file creating part 1803 extracts "3" as the number of the storage devices, and the first identifiers SCSIa∼SCSIc at the step S3102.

Next, the address position file creating part 1803 initializes the counting part as described in the first composition embodiment (step S3103).

Next, the address position file creating part 1803 judges whether the present indicated value of the counting part is the same as the "specified block size", or not (step S3104). The address position file creating part 1803, when judging that the both are not the same, moves to the step S3105. On the other hand, the address position file creating part 1803, when judging that the both are the same, recognizes that the address position files corresponding to the "specified block size" have been created, and finishes the operations according to the flow chart shown in Fig. 31.

When the "specified block size" which the address position file creating part 1803 holds at present is "4", the address position file creating part 1803 compares "4", with "0" which is the present indicated value of the counting part. Here, because the both are not the same, the address position file creating part 1803 moves to the step S3105.

The address position file creating part 1803, when moving to the step S3105, compares the "specified block size" with the addition value, which is found by adding the number of the empty-block addresses to be extracted at the following step S3106 (this number is specified by the number of the storage devices) to the present indicated value of the counting part (step S3105). When the addition value is smaller than the "specified block size", the address position file creating part 1803 judges that it needs to extract the empty- block addresses corresponding to the number of the storage devices, and moves to the step S3106. On the other hand, when the addition value is the same as the "specified block size" or larger, the address position file creating part 1803 judges that, when the empty-block addresses corresponding to the number of the storage devices are extracted, some of the empty-block addresses are left over, and moves to the step S3109.

When the "specified block size" which the address position file creating part 1803 holds at present is "4", the present indicated value of the counting part is "0" and the number of the storage devices is "3", the address position file creating part 1803 compares "0+3" which is the addition value with "4" which is the "specified block size". In this case, because the addition value is smaller than the "specified block size", the address position file creating part 1803 moves to the step S3106.

The address position file creating part 1803, when moving to the step S3106, extracts one empty-block address for each of the first identifiers extracted at the step S3102 from the empty area managing part 1802 (step S3106).

Specifically, the address position file creating part 1803 takes off the first identifiers SCSIa∼SCSIc as described above, and extracts "1" as the respective empty-block addresses corresponding to each of the first identifiers at the step S3106.

Next, the address position file creating part 1803 executes the same operations as the step S2005 shown in Fig. 20, and creates combinations of the first identifiers extracted at the step S3106 and the empty-block addresses for these identifiers, and rearranges the combinations at random, and manages the permutation of the rearranged combinations as a part of an address position file (step S3107).

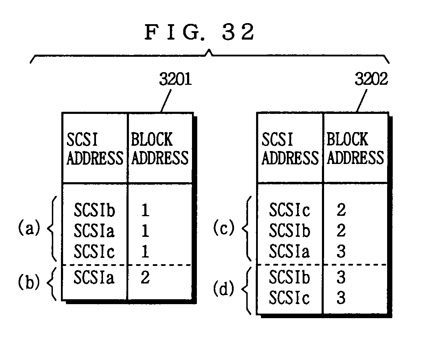

As described above, the address position file creating part 1803, taking off the empty-block address "1" for each of the first identifiers SCSIa∼SCSIc, creates the combinations (SCSIa;1), (SCSIb;1) and (SCSIc;1) at the step S3107, and rearranges these three combinations at random. Here, it is assumed that a permutation of the combinations [(SCSIb;1), (SCSIa;1), (SCSIc;1)] is designated as an address position file (see Fig. 32 (a)).

Next, the address position file creating part 1803 adds the number of the empty-block addresses extracted at the step S3106 to the present indicated value of the counting part (step S3108), and moves to the step S3104.

The address position file creating part 1803 extracts three empty-block addresses as described above, and adds "3" which is the number of the empty-block addresses, to the present indicated value of the counting part.

The above-described steps S3104∼S3108 forms a loop, and the loop is repeatedly executed the address position file creating part 1803 judges at the step S3104 that the present indicated value of the counting part is the same as the "specified block size" or until the address position file creating part 1803 judges at the step S3104 that the present indicated value is not the same as the "specified block size" and at the same time judges at the step S3105 that the addition value is larger than the "specified block size" .

The address position file creating part 1803, after increasing the present indicated value of the counting part to "3", executes the step S3104, and moves to the step S3105. Here, because the addition value "6", which is found by adding "3", the number of the empty-block addresses to be extracted at the step S3106, to "3", the present indicated value of the counting part, is larger than the "specified block size" "4", the address position file creating part 1803 moves to the step S3109.

First, the address position file creating part 1803, when moving to the step S3109, executes the following calculation.$\text{(the "specified block size"-the counting value of the counting part)}$

Then, referring to the empty area managing part 1802, the address position file creating part 1803 obtains the number of the empty-block addresses which each storage device has at present, and the first identifiers. The address position file creating part 1803 rearranges the first identifiers in the order of the first identifier, getting the larger number of empty-block addresses at present, comes first, and selects the first identifiers according to the order. The address position file creating part 1803 executes this selecting operation until the value found by the calculation (4) and the number of the selected first identifiers become the same. Here, during the above-described selecting operation, there is a case in which some storage devices have the same number of empty-block addresses. In this case, the address position file creating part 1803 selects at random one of the first identifiers showing the storage devices which have the same number of empty-block addresses (step S3109).

When the "specified block size" is "4" and the present indicated value of the counting part is "3" as describe above, the address position file creating part 1803, after obtaining "1" by the calculation (4) at the step S3109, recognizes that the storage devices 1805a∼1805c have each 999 empty block addresses at present. Here, because "3" which is the number of the storage devices having the same number of empty-block addresses, is larger than "1" which is the value found by the calculation (4), the address position file creating part 1803 selects at random one of the first identifiers SCSIa∼SCSIc. Here, it is assumed that the first identifier SCSIa is selected.

Next, the address position file creating part 1803 takes off one empty-block address for each of the first identifiers selected at the step S3109 from the empty area managing part 1802 (step S3110).

Specifically, the address position file creating part 1803 selects the first identifier SCSIa as described above, and extracts the empty-block address "2" for the first identifier SCSIa at the step S3110.

Next, the address position file creating part 1803 creates combinations of the first identifiers selected at the step S3109 and the empty-block address for these first identifiers, and rearranges the combinations at random, and manages the permutation of the combinations as a part of a address position file (step S3111).

The address position file creating part 1803, when extracting the empty-block address "2" for the first identifier SCSIa as described above, creates a combination (SCSIa;2) at the step S3110. Here, the address position file creating part 1803 manages the combination as a part of the address position file (see Fig. 32 (b)).

Here, the first address position file 3201 in Fig. 32 has been created according to the above-described operations. Fig. 32 also shows the second address position file 3202. The address position file creating part 1803, after creating the first address position file 3201, has created this second address position file 3202, responding to another file creating request. These first and second address position files have the same composition as described in the first composition embodiment, and by them, the storage devices are able to immediately grasp the destinations of blocks of data.

The storage device control unit 1804 receives the address position files designated as described above, and writes blocks, which data is divided into, into the storage devices according to the address position files as described in the first composition embodiment.

Here, the process to create the second address position file 3202 will be described. As described above, the address position file creating part 1803, after creating the first address position file 3201, receives another file creating request (step S3101). This file creating request includes the "specified block size" "5". The address position file creating part 1803, after executing the steps S3102 and S3103, executes the loop (steps S3104∼S3108) just once as in the case of creating the first address position file 3201. By executing the loop, the address position file creating part 1803 designates [(SCSIc;2), (SCSIb;2), (SCSIa;3)] as an address position file (see Fig. 32 (c)).

The address position file creating part 1803 creates the first part of the second address position file 3202 at the step S3107, and, after increasing the present indicated value of the counting part by "3", executes the step S3104, and moves to the step S3105.

Here, because the addition value "6", found by adding "3" which is the number of the empty- block addresses to be extracted at the step S3106 to "3" which is the present indicated value of the counting part, is larger than the "specified block size" "5", the address position file creating part 1803 moves to the step S3109.

Next, the address position file creating part 1803 obtains "2" by the above-described calculation (4), and recognizes that the storage devices 1805a, 1805b and 1805c have, respectively, 997, 998 and 998 empty-blocks at present. Therefore, the address position file creating part 1803 selects the storage devices 1805b and 1805c specified by SCSIb and SCSIc respectively, as the storage devices from which empty-block addresses should be extracted (step S3109). Here, the address position file creating part 1803 extracts the empty-block address "3" for SCSIb and SCSIc (step S3110). Next, the address position file creating part 1803 creates combinations (SCSIb;3) and (SCSIc;3), and rearranges the combinations at random. Here, [(SCSIb;3), (SCSIc;3)] is designated as an address position file (see Fig. 32 (d)).

The number of blocks composing the distributed data is not always a multiple of the number of storage devices. As a result of that, the systems according to the previous composition embodiments have possibility that they will not be able to distribute data equally to all storage devices. Therefore, the system according to the present composition embodiment creates address position files so as to distribute the remainder of the blocks (the remainder of the number of the blocks / the number of the storage devices) to the storage device which has the most empty-blocks at present. Thereby, data is distributed equally to all storage devices. And moreover, compared with the systems according to the previous composition embodiments, the system according to the present composition embodiment leads to an effect of getting still larger band.

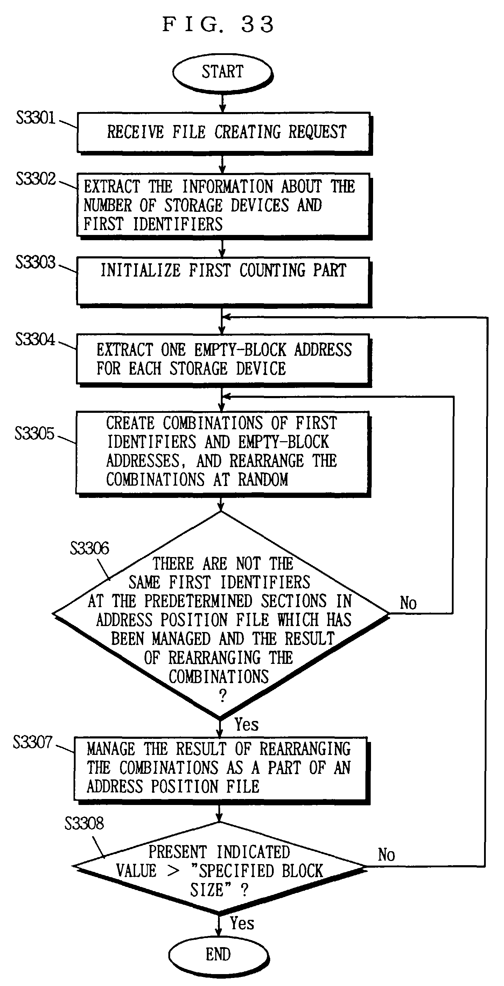

Next, the storage device management system according to the sixth composition embodiment of the present invention (hereinafter, "the present system") will be described. Because the block composition of the present system and the composition embodiment of the storage devices to be managed by the present system and other devices is the same reference as shown in Figs. 18 and 19, Figures and outlines about it will be omitted, and the same numbers as used in Figs. 18 and 19 will be used also in the below description. However, the operation process of the address position file creating part 1803 follows the flow chart shown in Fig. 33. And, because the information managed by the composition managing part 1801 and the empty area managing part 1802 is the same as described in the first composition embodiment, an explanation about it will be omitted.

Referring to the flow chart shown in Fig. 33, the operations of the present system will be described in detail below.

As described in the first composition embodiment, an external device outputs a file creating request including "specified block size" and data.

Like the operations of the steps S2001∼S2003 shown in Fig. 20, the address position file creating part 1803 receives the file creating request (step S3301), and extracts the "specified block size" included by the file creating request, and holds it.

Next, the address position file creating part 1803 takes off first identifiers and the information about the number of the storage devices (step S3302).

Specifically, when the present system manages plural storage devices as shown in Fig. 19, the address position file creating part 1803 takes off "3", the number of the storage devices, and the first identifiers SCSIa∼SCSIc at the step S3302.

Next, the address position file creating part 1803 initializes the counting part as described in the first composition embodiment (step S3303).

Next, the address position file creating part 1803 extracts one empty-block address for each of the first identifiers extracted at the step S3302 from the empty area managing part 1802, and creates combinations of the first identifiers and the empty-block addresses for these first identifiers (step S3304).

Specifically, the address position file creating part 1803 extracts the first identifiers SCSIa∼SCSIc as described above, and extracts "10" as the empty block address for the respective first identifiers at the step S3304, and creates combinations as (SCSIa;10), (SCSIb;10) and (SCSIc;10).

Next, the address position file creating part 1803 rearranges at random the combinations created at the step S3304 (step S3305).

The address position file creating part 1803, when creating the above-described combinations at the step S3304, rearranges the combinations at random. Here, it is assumed that the result of rearranging the combinations is [(SCSIb;10), (SCSIa;10), (SCSIc;10)].

Next, the address position file creating part 1803, when adding the result of rearranging the combinations at the step S3305 to the address position file created and managed in the previous loop (steps S3304∼S3308), judges whether there are the same first identifiers at the sections corresponding to the prescribed number of the combinations, or not. When there are not the same first identifiers at the sections, the address position file creating part 1803 manages the result of the rearranged combinations as a part of the address position file. On the other hand, when there are the same identifiers at the sections, the address position file creating part 1803 moves to the step S3305, and rearranged the combinations created at the step S3304 once more.

Specifically, it is assumed that the last three combination of the address position file decided and managed at the previous loop are [..., (SCSIa;9), (SCSIc;9), (SCSIb;9)]. And it is assume that the sections corresponding to two combinations has been specified as the above-described sections in advance.

The address position file creating part 1803, when rearranging the combinations as described above at the step S3304, adds the result of rearranging the combinations at the step S3305 to the address position file which was created and has been managed as described above, and thereby, recreating the address position file, creates a new address position file [..., (SCSIa;9), (SCSIc;9), (SCSIb;9), (SCSIb;10), (SCSIa;10), (SCSIc;10)]. Here, because the address position file creating part 1803 finds the same SCSI address at the section corresponding to two combinations (SCSIb;9), (SCSIb:10) in the new address position file, the address position file creating part 1803 moves to the step S3304.

When the address position file creating part 1803 rearranges the combinations at the step S3304 once more, and the result of rearranging the combinations is assume to be [(SCSIa;10), (SCSIb;10), (SCSIc;10)], because there are not the same identifiers at the sections corresponding to two combinations at the step S3306, the address position file creating part 1803 moves to the step S3307.

Next, the address position file creating part 1803 manages the result of rearranging the combinations at the step S3305 as a part of the address position file (step S3307).

Next, the address position file creating part 1803, after adding the number of the empty-block addresses extracted at the step S3304 to the present indicated value of the counting part, compares the present indicated value with the "specified block size"(step S3308). When the present indicated value of the counting part is smaller than the "specified block size", the address position file creating part 1803 moves to the step S3304, and executes the same operations as described above. On the other hand, when the present indicated value is the same as the "specified block size" or larger, the address position file creating part 1803 finishes the operations.

The storage device control unit 1804 receives the address position file designated as described above, and writes blocks, into which data is divided, into the storage devices according to the address position file as described in the first composition embodiment.

Blocks of data are distributed equally to the storage devices according to the address position files created by the systems in the previous composition embodiments, but that can be applied only on the whole, and when small parts of the systems are taken into consideration, there is possibility that blocks will be distributed to the same storage device continuously. Here, in the system according to the present composition embodiment, the address position file creating part 1803 judges whether two blocks are distributed to the same storage device continuously, or not, in the address position file managed by the system and rearranged combinations. Thereby, when data is read, access is made more equally to all storage devices. And that leads to an effect of making more effective use of the performance of the all storage devices and an effect of getting larger band.

Although the sections corresponding to two combinations are designated as the sections corresponding to the prescribed number of the combinations in the above description, the number of the combinations is not always necessary to be "2", and the number should be specified based on the designing request of the systems and so on.

Next, the storage device management system according to the seventh composition embodiment of the present invention (hereinafter, "the present system") will be described.

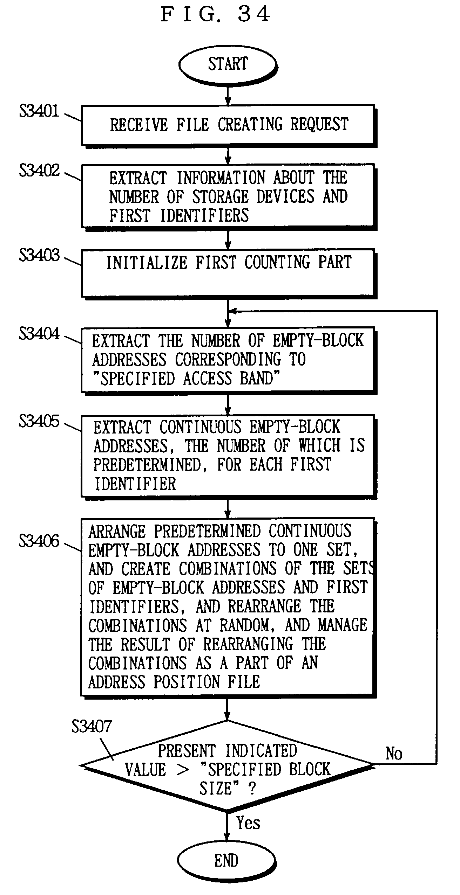

Because the block composition of the present system and the composition embodiment of the storage devices to be managed by the present system and other devices is the same as shown in Figs. 18 and 19, Figures and outlines about it will be omitted, and the same reference numbers as used in Figs. 18 and 19 will be used also in the below description. However, the address position file creating part 1803 of the present system is different from that described in the first composition embodiment, and has a table in advance, which manages by associating the band which accesses to data with the number of the empty-block addresses extracted from one storage device, and executes the operations according to the flow chart shown in Fig. 34. Because the other parts in the block composition of the present system are the same as described in the first composition embodiment, an explanation about them will be omitted.

Referring to the flow chart of Fig. 34, which shows the operation procedure executed by the address position file creating part 1803, operations of the present system will be described in detail below.

An external device outputs a file creating request and data as described in the first composition embodiment and others. The file creating request includes the above-described "specified block size" and the information for posting the band which is necessary to make access to data (hereinafter, "specified access band"). And specifically, a case in which the "specified access band" is 30Mbps will be described below.

The address position file creating part 1803 receives the file creating request (step S3401), and takes off the "specified block size" and the "specified access data" included in the file creating request, and holds the both.

Next, the address position file creating part 1803 extracts the information about the number of the storage devices and first identifiers (step S3402), and recognizes the composition of the storage devices to be managed .

Specifically, when the present system manages plural storage devices as described in Fig. 19, the address position file creating part 1803 takes off "3" as the number of the storage devices, and the first identifiers SCSIa∼SCSIc at the step S3402.

Next, the address position file creating part 1803 initializes the counting part as described in the first composition embodiment (step S3403).

Next, the address position file creating part 1803 extracts the number of the empty-block addresses, corresponding to the "specified access band", which the address position file creating part 1803 holds at present, from the built-in table (described above) (step S3404).

Specifically, the table is assumed to show that the numbers of the empty-block addresses extracted from one storage device are "1", "2" and "4" respectively when the specified access bands are 1.5Mbps, 10Mbps and 30Mbps. Here, the reason why the larger the "specified access band" is, the more the number of the empty-block addresses extracted from one storage device becomes, is that the larger the band which accesses to the data is, the more times access are made to the same storage device during a unit time, and in this case, when data is stored in the continuous area of the storage devices, the storage devices are able to be used more effectively.

The address position file creating part 1803, when receiving the file creating request including the "specified access band" "30Mbps" as described above, takes off "4" as the number of empty-block addresses, which corresponds to 30Mbps.

Next, the address position file creating part 1803 takes off the empty-block addresses which are the number of which is the same as the number extracted at the step S3404, and at the same time, which are continuous, for each of the first identifiers extracted from the empty area managing part 1802 at the step S3402. (step S3405).

Specifically, the address position file creating part 1803, when extracting "4" as the number of the empty-block addresses from the table, takes off "1"∼"4" as the four continuous empty blocks addresses for the respective first identifiers SCSIa∼SCSIc.

Next, the address position file creating part 1803 arranges the continuous empty-block addresses "1"∼"4" extracted at the step S3405 to one set, and makes units of the sets of the continuous empty-block addresses and the first identifiers (hereinafter, "unit-empty-block address"). Therefore, the number of the "unit-empty-block addresses" corresponds to the number of the first identifiers extracted at the step S3402. Next, the address position file creating part 1803 rearranges the "unit empty-block addresses" at random, and manages the result of rearranging the "unit-empty-block addresses" as a part of one address position file (step S3406).

Specifically, the address position file creating part 1803, when extracting the empty-block addresses "1"∼"4" for each of the first identifiers SCSIa∼SCSIc, arranges the four continuous empty-block addresses to one set to make a unit empty block address, and makes a unit of the SCSI addresses and the unit empty blocks address. The unit will be described as (SCSIa;1∼4) below. And the address position file creating part 1803 makes the "unit-empty-block addresses" for the SCSI addresses SCSIb and SCSIc in the same way. And the address position file creating part 1803 rearranges at random the "unit-empty-block addresses" as described above. Here, it is assumed that the result of rearranging the "unit-empty-block addresses" is [(SCSIb;1∼4), (SCSIa;1∼4), (SCSIc;1∼4)] (see Fig. 35 (a)).

Next, the address position file creating part 1803, after adding the number of the empty-block addresses extracted at the step S3405 to the present indicated value of the counting part, compares the present indicated value of the counting part with the "specified block size" (step S3407). When the present indicated value is smaller than the "specified block size", the address position file creating part 1803 executes the loop (steps S3405∼S3407) again. On the other hand, when the present indicated value of the counting part is the same as the "specified block size" or larger, the address position file creating part 1803 finished the operations according to the flow chart shown in Fig. 34.

Here, the address position file 3501 shown in Fig. 35 has been created according to the above-described operations. The first address position file 3501 has the same composition as described in the first composition embodiment, and by the address position file 3501, the storage devices are able to grasp immediately destinations of blocks.

The storage device control unit 1804 receives the address position files designated as described above, and writes blocks, into which data is divided, into the storage devices according to the address position files as described in the first composition embodiments and others.

As described in the "prior art", there are cases in which it is better that blocks of data are distributed to continuous area of the same storage device. Then, the system according to the present composition embodiment changes the number of the extracted empty-block addresses according to the band which is necessary to make access to data. Thereby, the application of the present system leads to the improvement of the operation efficiency of video servers and so on.

Although, in the above-described composition embodiment, the number of the extracted empty-block addresses is determined according to the band, it is not always necessary to do so, and the number of the empty-block addresses to be extracted may be determined based on characteristics of data like bands.

Although, in the above description, the storage device management systems according to the fifth ∼ the seventh composition embodiments are described in the manner combined with the storage device management system according to the first composition embodiment, they are able to be combined with each of the storage device management systems according to the second ∼ the fourth composition embodiments, and moreover, after a combination of two storage device management systems is created among the storage management systems according to the fifth ∼ the seventh composition embodiments, it is possible to combine that combination with each of the first ∼ the fourth composition embodiments.

Next, the storage device control unit according to the second embodiment of the invention will be explained. Fig.36 shows the block diagram showing the composition of the storage device control unit and its peripheral equipment. In Fig.36, the storage device control unit 3600 is connected to the external device like the storage device control unit according to the first embodiment (refer to Fig.1), to control the storage device 3610 which reads out and writes data, and comprises a request receiving part 3620, a read order determining part 3630, a write order determining part 3640, a queue managing part 3650, an allowable delay managing part 3660, a command outputting part 3670 and a command operation ending part 3680.

Here, the following explanation will be made, supposing that the storage device 3610 is a hard disc drive like the one in the storage device control unit according to the first embodiment(refer to Fig.1).

The request receiving part 3620 receives a request arrived from the external device, inputs a read request into the read order determining part 3630 and outputs a write request into the write order determining part 3640. Here, the request arrived from the external device contains at least information for discriminating the read request and the write request, and an access position information (which will be mentioned later; it is the same as the first embodiment).

The read order determining part 3630 determines the position in the read queue 3651 (refer to Fig.37) to which to enqueue the read request by referring to an allowable delay information list (refer to Fig.38) after a read request is inputted.

The write order determining part 3640 determines the position in the write queue 3652 (refer to Fig.37) to enqueue the write request to like the case of the read request.

The queue managing part 3650 will be explained with reference to Fig.37. As Fig.37 shows, the queue managing part 3650 has the read queue 3651, the write queue 3652 and the execution queue 3653. The read queue 3651 or the write queue 3652 controls the hold read request or the write request, which wait to be processed, in the state of a queue. The executive queue 3653, which is outputted to the storage device 3610 as a command, controls the (read or write) request waiting for the completion of the processing in the state of a queue.

The queue managing part 3650 enqueues the read request to the read queue 3651 according to the order determined by the read order determining part 3630. The arrow head (a) shows the above and in the illustrated example, the read queue 3651 stores the read requests 3654 and 3655. And the queue managing part 3650 enqueues the write request to the write queue 3652 according to the order determined by the write order determining part 3640. The arrow head (b) shows the above and in the illustrated example, the write queue 3652 stores the write request 3656. The read queue 3651 and the write queue 3652 store the read requests and the write requests, provided that the requests are sequentially processed in the order from the top to the tail of the write queue 3652.

The command outputting part 3670, as will be described later, selects the read queue 3651 or the write queue 3652, and outputs the request enqueued to the top of the selected queue to the storage device 3610 as a command. The queue managing part 3650 corresponds to the above, dequeues the request outputted as the command from the corresponding queue and enqueues the request to the executive queue 3653. The arrow head (c) or (d) shows the above. The execution queue 3653 is outputted to the storage device 3610 as a command at a prescribed time, and is the queue to store the requests for which the (read or write) processing of the command is not yet completed. In the illustrated example, the execution queue 3653 stores the request 3657. And when a processing for a prescribed command is completed on the storage device 3610, the request corresponding to the command is dequeued from the execution queue 3653. the arrow head (e) shows the above.

The queue managing part 3650 manages the processing order of the arriving requests as mentioned in the above.

The allowable delay managing part 3660 (refer to Fig.36) manages information entered in the allowable delay information list. Fig.38 is an illustration for explaining the allowable delay information list managed by the allowable delay managing part 3660. In Fig.6, the allowable delay information list holds the allowable delay information consisting of request numbers, access positions, weighted time, expected ending time, limited rearrangement time, priority time for writing and limited time for each of the requests existing in the storage device control unit (the requests are enqueued to the read queue, the write queue and the execution queue; refer to Fig.37).

Here, the request number represents the number for specifying each of the requests arrived at the storage device control unit 3600.

The access position represents the position for data being read from the storage device 3610 or written into the storage device 3610 in accordance with the requests.

The weighted time represents the weight of the time calculated on the basis of the access position and required for the processing in the storage device 3610. The value is defined as a function of the access position of a target request and the access position of the request enqueued just before the target request, and is different from the period required for actual processing.

Here, the weighted time is, for example, expressed as;$\text{T = f(d) + t + r + x}$

In the above expression, f(d) represents a monotone increasing function of d, and d represents the distance between a cylinder position of the target request and a cylinder position of the request enqueued just before the cylinder position in the same queue.

Also, t represents an internal transfer time of the write data to be written or the read data to be read.

And, r represents an average of rotational latency of the storage device.

Furthermore, x represents an overhead time of the controller (the central processing circuit of the storage device 3610).

The expected ending time is the time obtained by adding the sum of the weighted time which is from the request enqueued to the top of the execution queue 3653 to the target request, to the arriving time of the target request. Here, the weighted time of the request enqueued to the queue that the target request does not enqueue to is not considered in calculating the expected ending time. More concretely, for example, it is assumed that the target request is the read request 3654 (refer to Fig.37) enqueued to the read queue 3651. The expected ending time of the read request 3654 is the time obtained by adding the sum of the weighted time of the request 3657 enqueued to the execution queue 3653 and the read requests 3655 and 3654 to the arrival time. Also, the expected ending time of the write request 3656 is the time obtained by adding the sum of the weighted time of the request 3657 and the write request 3656 to the arrival time.

Limited arrangement time is the time for judging whether the arrived read or the arrived write request can be enqueued to the position other than the tail of the read queue 3651 or the write queue 3652 and in the case of not exceeding the time, real-time processing is expected to be realized with reference to all of the requests being in a row in the same queue. In this embodiment, the limited rearrangement time can be obtained by adding the first pre-determined period to the arrival time request of the write or the read request at the storage device control unit 3600.

The priority time for writing is the time for judging whether the write request should be preceded to the read request, and in the embodiment example the priority time for writing can be obtained by adding the second pre-determined period to the arrival time of the write request at the storage device control unit. The second predetermined time is the time for preventing the request waiting to be processed from excessively increasing in the write queue.

Limited time represents the time that the read request or the write request is outputted as a command and the read or the write must be completed, and in the embodiment the limited time can be obtained by adding the third predetermined period to the arrived time of the write request or the read request at the storage device control unit.

The relationship between the above-mentioned first and third predetermined periods will be described here. The above-mentioned limited arrangement time and the limited time are desired to be identical.

However, the limited arrangement time follows the time system in the storage device control unit 3600, since it is calculated in the storage device control unit. On the other hand, because the actual read and write are executed in the storage device 3610, they follow the time system of the device. In this reason, even if the queue is composed so as to satisfy the above limited arrangement time, it may happen that real-time processing for the data to be written into the storage device 3610 and read from the storage device 3610 are not realized.

Accordingly, the above-mentioned third predetermined period is determined based on the measured value obtained by the write and the read to/from the storage device 3610, and uses a reliable value enough to realize the real-time processing.

Therefore, in case that the read and the write are executed so as to satisfy the limited time, the real-time processing of data is guaranteed. On the other hand, the first predetermined period is obtained by subtracting a pre-determined period from the third pre-determined period. Like the above, an evil effect which may be arisen from the difference among the above-mentioned time systems is prevented in advance by taking some period between the limited arrangement time and the limited time.

Moreover, since the second predetermined period is the period for preventing the requests waiting to be processed from excessively increasing in the write queue, it is set shorter than the third pre-determined period.

The command outputting part 3670 outputs a command to the storage device according to the algorithm in Fig.40. The command operation ending part 3680, according to the algorithm shown in Fig.41., ends the operation of the read request or the write request which completes the read/write operation in the storage device 3610.

Next, the operation in the storage device control unit 3600 from the arrival of the read request or the write request to the end of the read or the write of data will be explained.

The request receiving part 3620 outputs a read requests to the read order determining part 3630 and the write requests to the write order determining part 3640, attaching the request number, the limited arrangement time, the priority time for writing(which is attached only to the write requests) and the limited time to the read requests or the write requests arriving from the external devices.

The read order determining part 3630, after receiving a read request and the attached information from the request receiving part 3620, determines the order among the read requests which have already arrived at the storage device control unit and have not been outputted as a command. The write order determining part 3640 also determines the order for the write request like the read order determining part 3630.

Fig. 39 is a flow-chart showing the algorithm for determining a processing order of the arrived read requests or the arrived write requests at the read order determining part 3630 or the write order determining part 3640. The operation of the read order determining part 3630 in determining the processing order of the read requests will be explained as follows with reference to Fig. 39.

The read order determining part 3630 receives the read request from the request receiving part 3620 (step S3901), designates the tail of the read queue 3651 as a provisionally decided position and enqueues the arrived read request at the tail (step S3902). The read order determining part 3630, after the completion of the operation of the step S3902, notifies the allowable delay managing part 3660 of the completion and lets the allowable delay managing part 3660 calculate the sum of the first weighted time (step S3903).

The allowable delay managing part 3660 responds to the notification and temporarily updates the allowable delay information list (refer to Fig. 38) held inside (refer to Fig. 38). At this time, the allowable delay managing part 3660 firstly calculates the weighted time for the arrived read request according to the above formula (5), computes the expected ending time by adding the weighted time to the arrival time of the request and, moreover, enters the weighted time and the expected ending time in the allowable delay information list. And the allowable delay managing part 3660 adds up the weighted times for all of the read requests enqueued to the read queue 3651 and holds the sum of the weighted time (the sum of the first weighted time). The allowable delay managing part 3660, after acquiring the sum of the first weighted time, and notifies the read order determining part 3630 of the acquisition.

Next, the read order determining part 3630, after receiving this notification, dequeues the read request from the tail of the read queue 3651 and searches a new provisionally-determined position referring to the allowable delay information list. More concretely, the read order determining part 3630, when arranging the arrived read request to interrupt among the read requests which are enqueued to the read queue 3651 at present and of which the processing order is consecutive, searches of which three access positions become serial or identical in the order from the tail to the top of the read queue 3651.

When the read order determining part 3630 finds such position, it enqueues the read request to the position as a new provisionally decided position (step S3904). The read order determining part 3630, after completing the step S3904, notifies the allowable delay managing part 3660 of the completion and lets the allowable delay managing part 3660 calculate the sum of the second weighted time (step S3905).

The allowable delay managing part 3660 revises temporarily updates the allowable delay information list (refer to Fig. 38) held inside with responding to the notification. Then, the allowable delay managing part 3660 firstly calculates the weighted time for the arrived read request in accordance with the above formula (5), computes the expected ending time by adding the result to the arrival time of the request, and enters the weighted time and the expected ending time in the allowable delay information list. Afterwards, the allowable delay managing part 3660 re-calculates the weighted time only for the read request enqueued just after the provisionally-determined position of the arrived read request. This is because the arrived read request interrupts the provisionally-determined position and therefore f(d), which is one of the parameters in calculating the weighted time of the read request enqueued just after the request, is changed.

And, the allowable delay managing part 3660 re-calculates the expected ending time for the read requests enqueued after the arrived read request. This is because the arrived read request interrupts the provisionally-determined position and therefore the expected ending time of the read requests enqueued after the request is delayed by the weight time of the request.

When the above-mentioned temporary update is over, the allowable delay managing part 3660 adds up all of the weighted times of the read requests enqueued to the read queue 3651 at present and holds the sum of the weighted time (the second sum of weighted time). The allowable delay managing part 3660, after acquiring the second sum of weighted time, notifies the read order determining part 3630 of the acquisition.

The read order determining part 3630, after receiving the notification, takes out and compares the first and the second sums of the weighted time held by the allowable delay information managing part 3660(step S3906) and proceeds to the step S3309 (which will be mentioned later) when judging that the second sum of the weighted time is the same as the first sum of the weighted time or larger. The read order determining part 3630 proceeds to step S3907 when judging that the second sum of the weighted time is smaller than the first sum of the weighted time.

Next, the read order determining part 3630, referring to the temporary updated allowable delay information list, checks whether the expected ending time for each of the read requests enqueued to the read queue 3651 at present is within the limited arrangement time (step S3907). The read order determining part 3630, in the case of judging that all of the expected ending times are within the limited arrangement time, finally designates that the provisionally-determined position determined in the step S3904 as the position that the arrived request should be enqueued to (step S3908). On the other hand, when the read order determining part 3630 judges that the expected ending time for any one of requests is not within the limited arrangement time, it dequeues the arrived read request from the new provisionally-determined position at the read queue 3651 and enqueues the arrived read request to the tail (step S3909).

The read order determining part 3630 ends the step S3908 or the step S3909, notifies the command outputting part 3670 of the completion and lets the command outputting part 3670 update and hold the allowable delay information list (step S3910). Next, the read order determining part 3630 notifies the command outputting part 3911 of that the arrived read request is enqueued to the read queue 3651.

In the above-description, although only the read order determining part 3630 is described, the write order determining part 3640 also has a similar provisionally-determining algorithm and enqueues the arrived write request to the write queue 3652 in a similar manner to the above-description.

There are other algorithm for determining the processing order than the above, for example, the one shown in Fig. 40.

First, the read order determining part 3630 receives the read request from the request receiving part 3620 (step S4001) and sets the request enqueued to the tail of the read queue 3651 as a sample request (step S4002). Next, the read order determining part 3630 temporarily enqueues the received read request just after the sample request (step s4003), notifies the allowable delay managing part 3660 of the connection and lets the allowable delay managing part 3660 calculate the sum of the weighted time (step S4004).

The allowable delay managing part 3660 temporarily updates the allowable delay information list held inside (refer to Fig. 38), responding to the notification. Then, first of all, the allowable delay managing part 3660 calculates the weighted time of the arrived read request based on the above-mentioned formula (5), computes the expected ending time by adding the weighted time to the arrival time of the request, and enters the weighted time and the expected ending time in the allowable delay the information list. Then, the allowable delay managing part 3660 adds up the weighted times of all of the read requests enqueued to the read queue 3651 and holds the sums of the weighted time. The allowable delay managing part 3660, after obtaining the sum of the first weighted time, notifies the read order determining part 3630 of the obtainment.

On receiving the notification, the read order determining part 3630 checks whether the sample request is the request enqueued to the top of the read queue 3651 (step S4005), and when judging that it is not enqueued to the top, sets the request enqueued just before the present sample request as a new sample request (step S4006). Then, the read order determining part 3630 goes back to the step S4003 and executes the above-mentioned steps S4003 through S4005, according to the newly-set sample request.

That is, the read order determining part 3630 designates the read requests enqueued to the read queue 3651 as the sample requests in the order from the tail to the top, temporarily enqueues the newly-arrived read request just after each of the read requests and calculates the sum of the weighted time in each case of the connections. The read order determining part 3630 repeats the steps S4003 through S4005 as many times as the number of the read requests enqueued to the read queue 3651 prior to the arrival of a new request. At the following step S4005, the read order determining part 3630 judges that the sample request is the request enqueued to the top of the read queue 3651 and therefore goes to step S4007.

Next, the read order determining part 3630 takes out the sum of weighted time held by the allowable delay managing part 3660, selects the smallest sum of the weighted time among the sums, sets the position corresponding to the smallest value as provisionally-determined position, enqueues the received read request to the position (step S4008), notifies the allowable delay managing part 3660 of the connection and temporarily updates the allowable delay list (step S4009).

The allowable delay managing part 3660 temporarily updates the allowable delay information list held inside (refer to Fig. 38), responding to the notification. Then first of all, the allowable delay managing part 3660 calculates the weighted time of the arrived read request based on the above formula (5), computes the expected ending time by adding the weighted time to the arrival time of the request, and enters the weighted time and the expected ending time in the allowable delay information list. The allowable delay managing part 3660, after finishing the entry in the allowable delay information list, notifies the read order determining part 3630 of the completion.

The read order determining part 3630, responding to the notification, checks whether or not the expected ending time for each of the read requests enqueued to the read queue 3651 at present is within the limited arrangement time by referring to the temporarily-updated allowable delay information list (Step S4010). Judging that all of the expected ending time are within the limited arrangement time, the read order determining part 3630 finally determines the provisionally-determined position decided at the step S4008 as the position for the arrived request to be enqueued to the read queue 3651 (step S4010). Next, the read order determining part 3630, finally determining the position for enqueuing the arrived request, notifies the allowable delay managing part 3660 of the decision and lets the allowable delay managing part 3660 hold the allowable delay information list temporarily updated at step S4009 (step S4012).

The read order determining part 3630, when judging that the expected ending time for any one of the requests, the expected ending time is not within the limited arrangement time, dequeues the received request from the position enqueued at step S4008, enqueues the request to the tail of the read queue 3651 (step S4013), notifies the allowable delay managing part 3660 of the connection, lets it update and hold the allowable delay information list (step S4014).

When the read order determining part 3630 completes the operation in the step S4012 or S4014, and notifies the command outputting part 3670 of the completion (step S4010).

In the case that each of the access positions that the requests sequentially enqueued to the read queue 3651 and the write queue 3652 as other order determining algorithm is serial or identical, the read order determining part 3630 and the write order determining part 3640 may prohibit the received request from being enqueued between the requests sequentially enqueued to each other and may enqueue the received request to the top of the read queue 3651 and the write queue 3652 if possible.

The command outputting part 3670, when receiving the notification that the request has arrived from the read order determining part 3630 or the write order determining part 3640, outputs a command to the storage device. Fig. 41 is a flow chart showing the algorithm for selecting the queue that outputs commands at the command outputting part 3670.

The command outputting part 3670, referring to the execution queue 3653, firstly checks whether the number of the requests processed in the storage device 3610 is less than the prescribed number at present (step S4101) and waits until the number of the requests becomes less than the prescribed number.

The command outputting part 3670, when judging that the number of the requests is less than the prescribed number, checks whether the write requests are enqueued to the write queue 3652 (step S4102), and when judging that the write requests do not exist, checks whether the read requests are enqueued to the read queue 3651 (step S4103. Note that the case that the write requests exist will be explained later).

The command outputting part 3670, when judging that the read requests are not enqueued, judges that there are no requests which wait to be outputted as commands and does not output the command (step S4104). On the other hand, the command outputting part 3670, when judging that the read requests are enqueued, dequeues the read request positioned at the top of the read queue 3651, designates the request as a next execution command (step S4105) and outputs the command to the storage device 3610. Moreover, the command outputting part 3670 enqueues the read request dequeued from the read queue 3651 to the tail of the execution queue 3653. Thereby, the command outputting part 3670 can grasp how many requests are outputted as commands at present. That is, the above-mentioned prescribed number can be grasped.

Next, the command outputting part 3670 notifies the allowable delay managing part 3660 that the command outputting part 3670 has outputted the read request as the next execution command (step S4106). Responding to this notification, the allowable delay managing part 3660, after obtaining the weighted time held by the read request outputted as the next execution command with referring to the allowable delay information list, re-calculates the expected ending time of each of the write requests entered in the list. That is, the allowable delay managing part 3660 adds the weighted time of the read request outputted as the next command to the expected ending time entered before the allowable delay managing part received such notification. The addition is conducted because the expected ending time is calculated for the each of the queues, which corrects the expected ending time of the write requests to the accurate one.

On the other hand, when the command outputting part 3670 judges that the write request is enqueued to the write queue 3652 at step S4102, it checks whether or not usage capacity of a buffer memory in which data to be written into the storage device 3610 is temporarily stored exceeds the prescribed threshold (step S4107). In addition, the comparison between the usage capacity of the buffer memory and the prescribed threshold can be easily done when the buffer memory controlling part 45 explained in the first embodiment is constituted, so the repeated explanation will be omitted here.

The command outputting part 3670, when judging that the above-mentioned usage capacity is not less than the threshold, dequeues the write request located at its top to make a next execution command (Step S4108), and outputs the command to the storage device 3610. In addition, the command outputting part 3670 enqueues the request dequeued from the write queue 3652 to the tail of the execution queue.

Next, the command outputting part 3670 notifies the allowable delay managing part 3660 that the write request has been outputted as the next execution command (step S4109). Corresponding to the notification, the allowable delay managing part 3660 replaces the weighted time which the write request outputted as the next execution command has with the pre-determined maximum processing period by referring to the allowable delay information list. And the allowable delay managing part 3660 re-calculates the expected ending time of each of the write request entered in the allowable delay list and enqueued to the write queue 3652. Moreover, the allowable delay managing part 3660 adds the weighted time of the write request outputted as the next command to the expected ending time (of the read request) which has already been entered before receiving such notification. The reason for the addition is that the expected ending time is calculated for each of the queues. From this, the expected ending time of the write request and the read request is corrected to the accurate one.

On the other hand, the command outputting part 3670, when judging that the above-mentioned usage capacity is less than the threshold at the step S4107, checks whether or not the write requests for which the write request priority time exceeds the present time exist by referring to the allowable delay information list (step S4111) and when judging that there exist the write requests for which the priority time for writing is the same as or exceeds the present time, it executes the above-mentioned steps S4108 and S4109.

On the other hand, the command outputting part 3670, when judging that there exists no write requests of which the priority time for writing exceeds the present time, checks whether or not the read requests are enqueued to the read queue 3651 (step S4111), and when judging that there is no read request, executes the above-mentioned steps, S4108 and S4109. On the other hand, the command outputting part 3670, when judging that the read requests are enqueued, checks whether or not the access position of the read request located at the top of the read queue 3651 is serial or identical to the access position of the( read or write) request located at the tail of the execution queue 3653 by referring to the allowable delay information list.

When the command outputting part 3670 judges that the access position is serial or identical, it executes the above-mentioned steps S4105 and S4106.

On the other hand, when the command outputting part 3670 judges that the access position is not serial or identical at the step S4112, with referring to the allowable delay information list, it checks whether in the case of dequeuing the write request from the write queue 3652 to output the write request as a command, the read for the read requests enqueued to the read queue 3651 can be executed by the limited time. In this operation, the command outputting part 3670 compares the expected ending time of the write request located at the top of the write queue 3652 and the limited time of each of the read requests enqueued to the read queue 3651.

The command outputting part 3670, when judging that the read can be executed by the limited time, executes the above steps S4108 and S4109, and when judging that the read can not be executed by the limited time, executes the above steps S4105 and s4106.

The command outputting part 3670 outputs the commands to the storage device 3610 according to the above-mentioned algorithm. The storage device 3610, after executing the process in accordance with the command, outputs the end notification of the commands. The ending notification includes the ending time of the processing on the storage device 3610. The command operation ending part 3680 receives the ending notification of the commands.

Fig. 42 is a flow chart showing, at the command operation ending part 3680 (refer to Fig. 36), processing procedure conducted when the ending notification of the commands arrives from the storage device 3610.

The command operation ending part 3680, after receiving the ending notification of the commands (step S4201), takes out the ending time and takes out the expected ending time for the requests corresponding to the commands from the allowable delay information list. Then, the command operation ending part 3680 checks whether there is the time difference not less than a pre-determined prescribed value between the expected ending time and the ending time (step S4202) and when it judges that there is no time difference, it proceeds to step S4203 (which will be mentioned later). In the above the prescribed value is the value determined in corresponding to specification of the storage device control unit, and a greater value is adopted in the case of reducing the operation burden of software and a smaller value is adopted in the case of correcting the expected ending time to the highly accurate one.

At step S4203, the command operation ending part 3680 notifies the allowable delay managing part 3660 that it receives the ending notification of the commands (step S4203). The allowable delay managing part 3660, after receiving the notification, delets the allowable delay information for the (lead or write) requests corresponding to the ending notification of the commands in the allowable delay information list.

On the other hand, the command operation ending part 3680, when judging that there is the time difference at the step S4202, notifies the allowable delay managing part 3660 of the time difference (step S4204). The allowable delay managing part 3660, after receiving the notification, deletes the delay managing information for the (read or write) requests corresponding to the ending notification of the commands and re-calculates the expected ending time of all requests. That is, the allowable delay managing part 3660 makes the expected ending time reflect the time difference, thereby the expected ending time is corrected to the most appropriate time at that time.

The command operation ending part 3680, after the step S4203 or S4204 is completed, dequeues the request corresponding to the above-mentioned ending notification of the commands from the execution queue 3653 (Step S4205) and notifies the command outputting part 3670 of the dequeue (step S4206), thereby the command outputting part 3670 proceeds from step S4101 to step S4102 in the Fig. 41.

As mentioned above, the storage device control unit 3600 determines the order of requests waiting to be processed in the read queue 3651 or the write queue 3652 so that the expected ending time does not exceed the limited arrangement time and the sum of the weighted time becomes as small as possible for all requests in the read order determining part 3630 or the write order determining part 3640. Because of this, the storage device control unit 3600 according to the embodiment makes it possible to reduce time required in the processing of each of the requests with setting limit for the delay of processing requests waiting to be processed, which is caused by the arrangement, and to improve the usage efficiency of the storage device 3610. With this, a video server applying the storage device 3600 can support many users with fewer storage devices.

The storage device control unit 3600 is also equipped with the read order determining part 3630 and the write order determining parts 3640 separately and outputs a write request as a command within the time in which the read for the read requests is expected to be completed by the pre-determined limited time (Fig. 41; Step S4113). For this reason, in the case that the read requests and the write requests exist at random, the storage device control unit 3600 can guarantee the real-time processing of the data to be read from the storage device 3610 with improving the usage efficiency of the storage device which the data is written into.

Also, the storage device control unit 3600 limits the number of commands that can be outputted to the storage device 3610 per a unit time less than the prescribed number, in other words, it limits the number of requests under processing in the storage device 3610 less than the prescribed number (Fig. 41; Step S4101). Then, the storage device control unit 3600 can select the most efficient number of the requests for the storage device 3610 and can determine the most efficient processing order of the requests by increasing the number of requests constituting a queue.

Also, when there is a time lag between the ending time of the (read or write) processing in the storage device 3600 and the expected ending time of the read requests or the write requests corresponding to the processing, the storage device control unit 3600 reflects the time lag in the expected ending time of the requests constituting the queue (Fig. 42; step S4204). With this, the storage device control unit 3600 absorbs the time difference between the weighted time and the actual processing time to reduce the spare time set at the time of calculating the expected ending time beforehand, as the result, the number of the requests constituting the queue can be increased and the most efficient processing order of requests can be decided.

Also, in the case that there is the write request, the pre-determined write priority time for which exceeds the present time among the write requests constituting the queue, the storage device control unit 3600 outputs a command with giving priority to the write request over the read request, whereby, since the data is not written over the limited time with the storage device control unit 3600, reliability of the data written to the storage device 3610 can be improved.

Also, in the case that the access positions for the requests of which the order determined by the read or the write order determining parts 3630 or 3640 is serial or identical, the storage device control unit 3600 forbids a newly-arrived request to interrupt between the serial requests. Therefore, the storage device control unit 3600 outputs requests, the access positions of which are serial or identical to the storage device 3610, as commands in sequence as much as possible. This makes it possible to save rotational latency in the storage device 3610 from the actual processing time, as the result, the processing time required per a unit request can be reduced and the storage device 3610 can process more requests per a unit time.

Alternatively, in the case that the access positions are serial or identical in the requests constituting the queue when a new request arrives, within the time not exceeding the pre-determined limited arrangement time, the storage device control unit 3600 determines the processing order so that the order is serial. Like the above, this can also deduce the time necessary for processing each of the requests and the usage efficiency of the storage device 3610 improve.

The storage device control unit 3600 is not limited to the above-mentioned embodiments and,
(1) The orders of the judging steps in the flow-charts shown in Fig. 39 to Fig. 41 are just one of the examples and can be changeable.
(2) In the flowchart shown in Figs. 39 to 41, only one part of the judging steps can be adopted.
(3) The storage device 3610 is not only a magnetic disk drive but also a CD-1 (CD-Interactive) drive, MOD(Magnetic Optical Disk Drive) and other storage devices that can read and write. These are also applicable to the first embodiment (the storage device control unit) and the first to the seventh composition examples (the storage device controlling systems).

While the invention has been described in detail, the foregoing description is in all aspects illustrative and not restrictive. It is understood that numerous other modifications and variations can be devised without departing from the scope of the invention.

## Claims

1. A storage device control unit for controlling write operation or read operation of data on storage devices to be performed, in compliance with write requests or read requests successively arriving from the external, wherein
said data is divided into unit blocks of a predetermined size and
each of said read requests includes a delay limit value meaning a period which is from the arrival time of the read request to the time when said read operation has to finish, comprising:
selecting means for selecting one consecutive empty area or plural consecutive empty areas, where the predetermined number of unit blocks can be written consecutively, corresponding to the amount of data to be written into said storage devices from empty areas of said storage device,
write command outputting means for outputting said write request as a write command,
order determining means for determining an order of outputting read requests successively arriving from the eternal as read commands, and
read command outputting means for outputting the read commands in the order determined by said order determining means, wherein
said write command outputting means outputs said write command so that data to be written in said storage devices is written into said empty area selected by said selecting means and
said order determining means determines the order of processing each of the read requests successively arriving from the external so that the period for the read operation is not beyond each of said delay limit value and is also shorter than a period for the read operation obtained assuming that read requests is outputted in the order of arrival.

2. The storage device control unit in accordance with claim 1,
wherein said selecting means selects said consecutive empty areas at random.

3. The storage device control unit in accordance with claim 1,
wherein, when the number of connected storage devices is "p" (d₁,d₂,...dₚ),
said selecting means selects said consecutive empty areas from empty areas of storage devices of which number is "m" ("m" is an integer of 1≦m≦p), and
when consecutive empty areas selected from a storage device "dᵢ" ("i" is an integer of 1≦i≦m ) are aᵢ₁,aᵢ₂,...aᵢₙ ("n" is an integer of 2 or more),
said write command outputting means outputs said write command so that the unit blocks composing said data are written in such an order as a_{11,}a₂₁,...aₘ₁,a₁₂, a₂₂,...aₘ₂,...a₁ₙ, a₂ₙ,...aₘₙ.

4. The storage device control unit in accordance with claim 1,
wherein said selecting means selects said consecutive empty areas from the empty areas which one storage device has.

5. The storage device control unit in accordance with claim 1,
wherein said delay limit values are predetermined values stored therein.

6. The storage device control unit in accordance with claim 1,
wherein said delay limit values are parameters which said read request includes.

7. The storage device control unit in accordance with claim 1, further comprising position file managing means for managing positions in which to store each of said unit blocks in said storage devices,
wherein said order determining means includes:
queue managing means, having a read queue which temporarily holds said read requests in a queue, for managing record positions of unit blocks to be read in compliance with the read requests,
position fixing means for fixing a position in said read queue to enqueue an arrived read request to,
allowable delay information computing/managing means for computing and then managing an estimated processing period which is estimated to be period for each of said read operations, an expected ending time when the read operation is expected to finish, and an allowable delay value which is obtained by, subtracting the expected ending time from an ending time, obtained by referring to said delay limit values, at which the read operation has to finish,
said position fixing means
extracts a record position (hereinafter, "a first record position") of a unit block to be read in compliance with a newly-arrived read request from the eternal from said position file managing means,
extracts record positions (hereinafter, "second record positions") of unit blocks to be read in compliance with each of the read requests held in said read queue from said queue managing means,
temporarily fixing a position in said read queue to which to enqueue said newly-arrived read request based on said first record position and said second record position,
said allowable delay information computing/managing means
computes the estimated processing period for said newly-arrived read request enqueued to said temporarily fixed position and
compares the estimated processing period for said newly-arrived read request with the allowable delay values for each of the read requests behind the read request enqueued to the temporarily-fixed position, and
said position fixing means, when said allowable delay information computing/managing means judges that each allowable value is more than said estimated processing period, fixes said temporarily fixed position as a place to enqueue said newly-arrived read request to.

8. The storage device control unit in accordance with claim 7, wherein
said storage devices have disks for store of said unit blocks,
said estimated processing period is computed based on
seek time for a head of said storage devices to move between tracks where unit blocks to be read in compliance with the read request and a read request enqueued just ahead of said read request in said read queue are stored,
transfer time to transfer the unit block to be read in compliance with said read request from said disks, and
predetermined overhead time and rotational latency.

9. The storage device control unit in accordance with claim 8,
wherein tracks of said disk have respective track numbers,
said position file managing means and said queue managing means manage the track numbers corresponding to the positions of the tracks where the unit blocks are stored, and
said seek time is computed based on each of said track numbers.

10. The storage device control unit in accordance with claim 7,
wherein said storage devices have disks for store of said unit blocks,
said estimated processing period is computed based on
seek time of a head of said storage devices to move between cylinders where unit blocks to be read in compliance with the read request and a read request enqueued just ahead of said read request in said read queue are stored,
transfer time to transfer the unit block to be read in compliance with said read request from said disks, and
predetermined overhead time and rotational latency.

11. The storage device control unit in accordance with claim 10,
wherein cylinders of said disk have respective cylinder numbers,
said position file managing means and said queue managing means manage said cylinder numbers corresponding to the positions of cylinders where unit blocks are stored, and
said seek time is computed based on each of said cylinder numbers.

12. The storage device control unit in accordance with claim 10,
wherein said transfer time is computed based on packing density in the position where the unit block to be read in compliance with the read request is stored and the rotating speed of said disk.

13. The storage device control unit in accordance with claim 8,
wherein said overhead time is obtained by subtracting the sum of said mean seek time, said mean rotational latency and said mean transfer time from the average of measured period to read data of the same size as the unit block from said storage device plural times consecutively.

14. The storage device control unit in accordance with claim 8,
wherein said rotational latency is the mean rotational latency of said disk.

15. The storage device control unit in accordance with claim 7,
said estimated processing period means the period as a predetermined confidence limit which covers the set of measured periods obtained by reading the data of the same size as the unit block from said storage device plural times consecutively.

16. The storage device control unit in accordance with claim 7,
wherein said storage devices have disks for store of said unit blocks,
said disk have tracks provided with respective ascending or descending numbers from the most inner track of the disk to the most outer track of the disk,
said position file managing means manages position files including the track numbers corresponding to the positions where said unit blocks are stored,
said queue managing means manages numbers of the tracks where the unit blocks to be read in compliance with read requests enqueued to said read queue are stored,
said position fixing means
extracts a number (hereinafter, "a first track number") of the track where unit block to be read in compliance with the newly-arrived read request from the external is stored from said position file managing means,
extracts numbers (hereinafter, "second track numbers") of the tracks where each unit block to be read in compliance with the respective read requests held in said read queue is stored from said queue managing means, and
temporarily fixes a position where the first track number and the second track numbers stand in a row and in an ascending order or a descending order as said temporarily fixed position, and enqueues said newly-arrived read request to said temporarily-fixed position.

17. The storage device control unit in accordance with claim 7,
wherein said storage devices have disks for store of said unit blocks,
said disk have cylinders provided with respective ascending or descending numbers from the most inner track of the disk to the most outer track of the disk,
said position file managing means manages position files including cylinder numbers corresponding to the positions where said unit blocks are stored,
said queue managing means manages numbers of the cylinders where the unit blocks to be read in compliance with read requests enqueued to said read queue are stored,
said position fixing means
extracts a number (hereinafter, "a first cylinder number") of the cylinder where unit block to be read in compliance with the newly-arrived read request from the external is stored from said position file managing means,
extracts numbers (hereinafter, "second cylinder numbers") of the cylinder where each of the unit block to be read in compliance with the respective read requests held in said read queue is stored from said queue managing means, and
temporarily fixes a position where the first cylinder number and the second cylinder numbers stand in a row and in an ascending order or a descending order as said temporarily fixed position, and enqueues said newly-arrived read request to said temporarily-fixed position.

18. The storage device control unit in accordance with claim 7, further comprising
command operation ending means for receiving the ending time of the read operation performed by said storage device and notifying said allowable delay information computing/managing means of the ending time,
wherein said allowable delay information computing/managing means
calculates, when the ending time notified by said command operation ending means is different from the expected ending time for said read request managed therein, a time difference between the ending time and the expected ending time,
update the expected ending time and the allowable delay value for each of the read requests stored in said read queue based on the calculated time difference.

19. A storage device control unit for controlling write operation or read operation of data on storage devices to be performed, in compliance with write requests or read requests successively arriving from the external,
wherein each of said read requests includes a delay limit value meaning the maximum value of a period which is from the arrival time of the read request to the time when the read operation finishes,
comprising write command outputting means for outputting said write requests as write commands to said storage devices ,
wherein said write command outputting means outputs said write command so that the write operation of said data is performed within the delay limit value which each of said read requests includes.

20. The storage device control unit in accordance with claim 19, further comprising
allowable delay information computing/managing means for computing and then managing an estimated processing period which is estimated to be period for each of said read operations and said write operations, an expected ending time when the read or write operation is expected to finish, and an allowable delay value which is obtained by subtracting the expected ending time from an ending time, obtained by referring to said delay limit value, at which the operation has to finish, wherein
said write command outputting means outputs said write command when said allowable delay value is more than the estimated processing period for said write request, and
said allowable delay information computing/managing means, when the write command is outputted, subtracts the estimated processing period for said write command from each of the allowable delay values for said read requests.

21. The storage device control unit in accordance with claim 20,
wherein the estimated processing period for said read request shows the processing period as a predetermined confidence limit which covers the set of measured periods obtained by writing the data of the same size as the data written in compliance with said write request into said storage device plural times consecutively.

22. The storage device control unit in accordance with claim 21, further comprising
command operation ending means for receiving an actual ending time of the write operation performed by said storage device and notifying said allowable delay information computing/managing means of the actual ending time,
wherein said allowable delay information computing/managing means calculates, when an actual processing period for the write operation, which is calculated based on the ending time, is different from the estimated processing period which the write request has, a time difference between the processing period and the estimated processing period,
update the allowable delay value for each of said read requests based on the calculated time difference.

23. The storage device control unit in accordance with claim 19,
wherein said delay limit values are predetermined values stored therein.

24. The storage device control unit in accordance with claim 19,
wherein said delay limit values are parameters which the read requests include.

25. A storage device control unit for controlling write operation of data on storage devices to be performed, in compliance with write requests successively arriving from the external, comprising:
buffer memory managing/judging means for managing a used capacity of a buffer memory which stores temporarily data to be written into said storage devices and judging whether the used capacity is not less than a predetermined threshold value, and
write command outputting means for outputting said write requests to said storage device as write commands,
wherein said write command outputting means, when said buffer memory managing/judging means judges that said used capacity is the predetermined threshold value or more, sends a write command so that the data stored temporarily in said buffer memory is written into said storage devices.

26. A storage device control unit for controlling write operation of data on storage devices to be performed, in compliance with write requests successively arriving from the external, wherein
each of said write requests includes a delay limit value showing the maximum value of a period which is from the arrival time of the read request to the time when said write operation has to finish, comprising
write command outputting means for outputting said write request to said storage device as a write command,
wherein said write command outputting means, after said delay limit of period has passed since the arrival of said write request, outputs the write command.

27. The storage device control unit in accordance with claim 26,
wherein said delay limit values are predetermined values stored therein.

28. The storage device control unit in accordance with claim 26,
wherein said delay limit values are parameters which the write requests include.

29. A storage device control unit for controlling write operation or read operation of data on storage devices to be performed, in compliance with write requests or read requests successively arriving from the external, wherein
each of said read requests includes a first priority information or a second priority information, and
the read request including at least said second priority information includes a delay limit value showing the maximum value of a period which is from the arrival time of the read request to the time when said read operation finishes, comprising
read command outputting means for outputting said read requests to said storage devices as a read command,
wherein said read command outputting means outputs the read request including said first priority information as the read command within the delay limit value for a read request including said second priority information and with priority to the read request including said second priority information.

30. The storage device control unit in accordance with claim 29, wherein
said data is divided into unit blocks of a predetermined data size,
consecutive empty areas where the predetermined number of unit blocks can be written are selected from the empty areas of said storage device as many as the number which said data needs,
the selected consecutive empty areas are stored in the storage devices as a position file to fix a position in which to store said data: and
read requests which read said position file from said storage devices include said first priority information.

31. The storage device control unit in accordance with claim 29, further comprising:
a first read queue which holds read requests including said first priority information in a queue,
a second read queue which holds read requests including said second priority information in a queue, and
allowable delay information computing/managing means for computing and then managing an estimated processing period which is estimated to be period for each of the read operations performed in compliance with each of said read request, an expected ending time when the read operation is expected to finish, and an allowable delay value which is obtained by subtracting the expected ending time from an ending time, obtained by referring to said delay limit value, at which the read operation has to finish,
wherein said read command outputting means, when the estimated processing period for the read request held in said first read queue is less than each of the allowable delay values for the read requests held in the second read queue, outputs the read request located at the head of the queue held in the first read queue as the read command.

32. The storage device control unit in accordance with claim 29, further comprising:
a read queue which holds the read requests including said first priority information and the second priority information in a queue,
position fixing means for determining to enqueue a read request arrived newly from the external to a predetermined position in said read queue ,
allowable delay information computing/managing means for computing and then managing an estimated processing period which is estimated to be period for the read operation performed in compliance with each read request held in said read queue, an expected ending time when the read operation is expected to finish, and an allowable delay value which is obtained by subtracting the expected ending time from an ending time, obtained by referring to said delay limit value, at which the read operation has to finish,
wherein said position fixing means enqueues a read request including the first priority information to said queue so that the read request is outputted as the read command within the delay limit value for the read request, which is being held in the read queue, including the second priority information and with priority to the read request including the second priority information, and
said read command outputting means outputs the read requests as the read commands in the order from the head of the queue held in said read queue.

33. The storage device control unit in accordance with claim 32, wherein
said position fixing means, when the read request including said first priority information has arrived newly, defines the read request including the second priority information which is nearest to the tail of the queue held in said read queue as a sample request and
said allowable delay information computing/managing means computes an estimated processing period for a read request including the first priority information, which has been inputted by said position fixing means, when a place just ahead of said sample request is temporarily fixed as a position to enqueue the read request to, and
said position fixing means
compares estimated processing period for said newly-arrived read request with allowable delay values for said sample request and read requests including the second priority information behind the sample request,
when each of said allowable delay values is the estimated processing period or more, fixes finally a position just ahead of said sample request to enqueue said newly-arrived read request to,
when at least one of said allowable delay values is less than the estimated processing period, judges whether said sample request is located at the tail of the queue held in said read queue,
when said sample request is located at the tail, enqueues said newly-arrived read request to the tail of the queue held in said read queue, and,
when said sample request is not located at the tail, defines a read request located just behind the sample request as a new sample request.

34. The storage device control unit in accordance with claim 32, wherein said storage devices have disks for store of said unit blocks,
said estimated processing period is computed based on
seek time of a head for said storage devices to move between tracks or cylinders where unit blocks to be read in compliance with the read request and a read request located just ahead of said read request are stored,
transfer time to transfer the unit block to be read in compliance with said read request from said disks, and
predetermined overhead time and rotational latency.

35. The storage device control unit in accordance with claim 32, wherein
said estimated processing period means the period as a predetermined confidence limit which covers the set of measured periods obtained by reading the data of the same size as the unit block from said storage device plural times consecutively.

36. The storage device control unit in accordance with claim 29, wherein
said read request includes any one of the first to a third priority information and
said read request outputting means, when a newly-arrived read request has the third priority information, outputs the newly-arrived read request as the read command after all of the read requests including the first priority information and the second priority information are outputted.

37. A storage device control unit for controlling write operation or read operation of data on storage devices to be performed, in compliance with write requests or read requests successively arriving from the external, wherein
each of said read requests and said write requests include a delay limit value showing the maximum value of a period which is from the arrival time of the read request and the write request to the time when the read operation and the write operation finish, comprising:
a read queue which holds temporarily said read requests in a queue,
a write queue which holds temporarily said write requests in a queue,
command outputting means for selecting the read queue or the write queue and outputting a read request or a write request located at the head of the queue held in the read queue or the write queue to said storage devices as a read or a write command respectively,
allowable delay information computing/managing means for computing and then managing an estimated processing period which is estimated to be period for the operation to be performed in compliance with each arrived read request or each arrived write request, an expected ending time when the operation is expected to finish, and an allowable delay value which is obtained by subtracting the expected ending time from an ending time, obtained by referring to said delay limit value, at which the operation has to finish,
buffer memory managing/judging means for managing a used capacity of a buffer memory which stores temporarily data to be written into said storage devices and judging whether the used capacity is not less than a predetermined threshold value,
comparing means for comparing the estimated processing period for the write request located at the head of the queue held in said write queue with each minimum value of the allowable delay values for read requests composing the queue held in said read queue,
judging means for judging whether the read request and the write request is held in said read queue or said write queue,
wherein said command outputting means,
when said buffer memory managing/judging means judges that said used capacity is a predetermined threshold value or more,
when the allowable delay value for the write request which is managed by said allowable delay information computing/managing means reaches a predetermined constant value,
when said judging means judges that the write request and the read request is stored in the write queue and the read queue and said comparing means judges that the estimated processing period for the write request is less than the minimum value of the allowable delay time,
when said judging means judges that only the write request is held in the write queue, chooses the write queue, and,
when said judging means judges that the write request and the read request is held in the write queue and the read queue and said buffer memory managing/judging means judged that said used capacity is less than the predetermined threshold value and
when said judging means judges that only the read request is held in the read queue, chooses the read queue.

38. A storage device control unit for controlling write operation or read operation of data on storage devices, in compliance with write requests or read requests successively arriving from the external, wherein
said read request includes any one of first to third priority information,
read requests including at least said first priority information and said second priority information and said write requests includes a delay limit value meaning the maximum value from the arrival time of the read request and the write request to the time when the read operation and the write operation finish, comprising:
a first read queue which holds temporarily read requests including said first priority information and said second priority information in a queue,
a second read queue which holds temporarily read requests including said third priority information in a queue,
a write queue which holds temporarily said write requests in a queue,
position fixing means for fixing a predetermined position in said first read queue to which to enqueue a read request arrived from the external including the first priority information,
command outputting means for choosing one from the first read queue, the second read queue and the write queue, and outputting a read request from the head of the queue held in the chosen queue to said storage devices as a read or a write command respectively,
allowable delay information computing/managing means for computing and then managing an estimated processing period which is an estimated to be period for the operation to be performed in compliance with each arrived read request or write request, an expected ending time when the operation is expected to finish, and an allowable delay value which is obtained by subtracting the expected ending time from an ending time, obtained by referring to said delay limit value, at which the operation has to finish,
buffer memory managing/judging means for managing a used capacity of a buffer memory to store temporarily data to be written into said storage devices and judging whether the used capacity is not less than a predetermined threshold value,
comparing means for comparing the estimated processing period for the write request located at the head of the queue held in said write queue with the minimum value of the allowable delay values for read requests composing the queue held in said first read queue,
judging means for judging whether the read request or the write request is held in said first read queue, said second read queue or said write queue and whether a read request including the first priority information is held in the first read queue, wherein
said position fixing means enqueues the read request including the first priority information to said first read queue so that the read request is outputted as a read command within a delay limit value for the read request, which is being held in said first read queue, including said second priority information and with priority to the read request including the second priority information, and,
said command outputting means,
when said buffer memory managing/judging means judges that said used capacity is a predetermined threshold value or more,
when said buffer memory managing/judging means judges that said used capacity is less than the predetermined threshold value, and the allowable delay value for the write request which is managed by said allowable delay information computing/managing means reaches a predetermined constant value, and
when said buffer memory managing/judging means judges that said used capacity is less than the predetermined threshold value, and the allowable delay value for the write request which is managed by said allowable delay information computing/managing means does not reach said predetermined constant value, and further said judging means judges that the read request including the first priority information is not stored, and said comparing means judges that the estimated processing period for the write request is less than the minimum of the allowable delay value, chooses the write queue,
when said buffer memory managing/judging means judges that said used capacity is less than the predetermined threshold value, and the allowable delay value for the write request which is managed by said allowable delay information computing/managing means does not reach said predetermined constant value, and further said judging means judges that the read request including said first priority information is stored in said first read queue,
when said buffer memory managing/judging means judges that said used capacity is less than the predetermined threshold value, and the allowable delay value for the write request which is managed by said allowable delay information computing/managing means does not reach the predetermined constant value, and further said judging means judges that the read request including said first priority information is not stored in said first read queue, and said comparing means judges that the estimated processing period for the write request is more than the minimum of allowable delay value, and
when said judging means judges that the write request is not stored, chooses said first read queue, and,
when said judging means judges that the read request is stored in only said second read queue, chooses the second read queue.

39. A storage device control unit for controlling write operation or read operation of data on storage devices to be performed, in compliance with write requests or read requests successively arriving from the external, wherein
each of said read or write requests includes priority information to set a priority outputted as a command, comprising:
a plurality of queues which holds temporarily the said read or write requests in a queue,
position fixing means for fixing a predetermined position in a predetermined queue to which to enqueue the read or write request arrived from the external based on said priority information,
command outputting means for choosing any one from the plurality of queues and outputting a write or read request located at the head of the queue held in the selected queue to said storage devices as write or read command, and
state-number holding means for holding state numbers which decides if said write request should be outputted as the command and said read request should be outputted as the command,
wherein said command outputting means selects any one from the plurality of queues based on the state numbers held by said state-number holding means.

40. The storage device control unit in accordance with claim 39, wherein
each of said read requests and said write requests include a delay limit value showing the maximum value of a period which is from the arrival time of the read request and the write request to the time when the read operation and the write operation finish, and
said plural queues are a read queue which holds temporarily said read requests in a queue and a write queue which holds temporarily said write requests in a queue, comprising:
allowable delay information computing/managing means for computing and then managing an estimated processing period which is estimated to be period for the operation to be performed in compliance with each arrived read request and each arrived write request, an expected ending time when the operation is expected to finish, and an allowable delay value which is obtained by subtracting the expected ending time from an ending time, obtained by referring to said delay limit value, at which the operation has to finish,
buffer memory managing/judging means for managing a used capacity of a buffer memory which stores temporarily data to be written into said storage devices and judging whether the used capacity is not less than a predetermined threshold value,
comparing means for comparing the estimated processing period for the write request located at the head of the queue held in said write queue with a minimum value of the allowable delay values for read requests composing the queue held in said read queue, and
judging means for judging whether the read request and the write request are held in said read queue and said write queue respectively, wherein
said state-number holding means holds:
a first state-number showing a case where said buffer memory managing/judging means judges that said used capacity is a predetermined threshold value or more,
a second state-number showing a case where the allowable delay value for the write request which is managed by said allowable delay information computing/managing means reaches a predetermined constant value,
a third state-number showing a case where said judging means judges that the write request or read request is held in said write or read queue and said comparing means judges that the estimated processing period for the write request is less than the minimum value of the allowable delay time,
a forth state-number showing a case where said judging means judges that only the write request is held in said write queue,
a fifth state-number showing a case where said judging means judges that the write request and read request are held in said write and read queue and said buffer memory managing/judging means judges that said used capacity is less than the predetermined threshold value, and
a sixth state-number showing a case where said judging means judges that only the read request is held in said read queue,
said position fixing means enqueues the read request including a first priority information to said read queue so that the read request is outputted as a read command within an allowable delay value for the read request including a second priority information, which has been held in said read queue, and with priority to the read request including the second priority information,
said command outputting means
selects said write queue when said state-number holding means holds any one of said first to fourth state numbers, and
selects said read queue when said state-number holding means holds said fifth or sixth state number.

41. The storage device control unit in accordance with claim 39, wherein
the said read request includes any one of first to third priority information,
each of read requests including at least said first priority information and said second priority information or each of the said write requests includes the delay limit value showing the maximum value of a period which is from the arrival time of the read request and the write request to the time when the read operation and the write operation finish.
said plurality of queues are a first read queue which holds temporarily read requests including said first priority information and said second priority information in a queue, a second read queue which holds temporarily read requests including said third priority information in a queue, and a write queue which holds temporarily said write requests in a queue, comprising:
allowable delay information computing/managing means for computing and managing an estimated processing period which is the estimated value of the period for the operation to be performed in compliance with each arrived read request or each arrived write request, an expected ending time when the operation is expected to finish, and an allowable delay value which is the value obtained by subtracting the expected ending time from the ending time, obtained by referring to said delay limit value, at which the operation has to finish.
buffer memory managing/judging means for managing a used capacity of a buffer memory which stores temporarily data to be write into said storage devices and judging whether the used capacity is not less than a predetermined threshold value,
comparing means for comparing the estimated processing period for the write request located at the head of the queue held in said write queue with each of the minimum allowable delay values for read requests composing the queue held in said first read queue,
judging means for judging whether the read request or the write request is held in said first read queue, said second read queue or said write queue and whether a read request including the first priority information is held in the first read queue, wherein
said position fixing means enqueues the read request including the first priority information to said queue so that the read request is outputted as a read command within a delay limit value for the read request, which is being held in said first read queue, including said second priority information and with priority to the read request including the second priority information,
said state-number holding means holds:
a first state-number showing a case where said buffer memory managing/judging means judges that said used capacity is a predetermined threshold value or more,
a second state-number showing a case where said buffer memory managing/judging means judges that said used capacity is less than the predetermined threshold value, and the allowable delay value for the write request which is managed by said allowable delay information computing/managing means reaches the predetermined constant value,
a third state-number showing a case where said buffer memory managing/judging means judges that said used capacity is less than the predetermined threshold value, and the allowable delay value for the write request which is managed by said allowable delay information computing/managing means does not reach the predetermined constant value, and further said judging means judges that the read request including the first priority information is not stored, and said comparing means judges that the estimated processing period for the write request is less than the minimum of the allowable delay value, chooses the write queue,
a fourth state-number showing a case where said buffer memory managing/judging means judges that said used capacity is less than the predetermined threshold value, and the allowable delay value for the write request which is managed by said allowable delay information computing/managing means does not reach said predetermined constant value, and further said judging means judges that the read request including said first priority information is stored in said first read queue,
a fifth state-number showing a case where said buffer memory managing/judging means judges that said used capacity is less than the predetermined threshold value, and the allowable delay value for the write request which is managed by said allowable delay information computing/managing means does not reach said predetermined constant value, and further said judging means judges that the read request including said first priority information is not stored in said first read queue, and said comparing means judges that the estimated processing period for the write request is more than the minimum of allowable delay value,
a sixth state-number showing a case where said judging means judges that the write request is not stored in said write queue, and
a seventh state-number showing a case where said judging means judges that the read request is stored only in said second read queue,
said command outputting means
chooses said write queue when said state-number holding means holds any one of said first to third state numbers,
chooses said read queue when said state-number holding means holds said fourth to sixth state number, and
chooses said read queue when said state-number holding means holds said seventh state number.

42. The storage device control unit in accordance with claim 38, wherein
said position fixing means, when a read request including said first priority information has newly arrived from the external, defines a read request which is located at the nearest to the tail of said first read queue and further including the second priority information as a sample request and
said allowable delay information computing/managing means computes an estimated processing period for the arrived read request when said position fixing means temporarily fixes a position just ahead of said sample request to which to enqueue the newly arrived read request, and
said position fixing means
compares the estimated processing period for said newly-arrived read request with the allowable delay values for said sample request and each read requests including the second priority information and located behind the sample request,
when each of said allowable delay values is the estimated processing period or more, fixes finally a position just ahead of said sample request to which to enqueue said newly-arrived read request,
when at least one of said allowable delay values is less than the estimated processing period, judges whether said sample request is located at the tail of the queue held in said first read queue or not,
when said sample request is located at the tail, enqueues said newly-arrived read request at the tail of the queue held in said first read queue, and,
when said sample request is not located at the tail, defines a read request located just behind the sample request as a new sample request.

43. The storage device control unit in accordance with claim 38, wherein
said storage devices have disks for storing said unit blocks,
said estimated processing period is computed based on
seek time for a head of the storage devices to move between tracks or cylinders where, in said first and second read queue, each of the unit blocks to be read in compliance with the read request and the read request enqueued just ahead of said read request is stored,
transfer time to transfer the unit block to be read in compliance with the read request from said disks, and
predetermined overhead time and rotational latency.

44. The storage device control unit in accordance with claim 38, wherein
said estimated processing period means the period as a predetermined confidence limit which covers the set of measured period obtained by reading the data of same size as the unit block from said storage device plural times repetitively, or means the period as a predetermined confidence limit which covers the set of measured periods obtained by writing said data into said storage device plural times repetitively.

45. A storage device management system, which applied to a system which distributes data divided into blocks as units for write to a plurality of storage devices, wherein
each of said storage devices is provided with a first identifier which is different from that of the other storage devices, comprising:
a first managing part which is used to manage at least each of said first identifier,
a second managing part which manages an empty area of each of said storage devices with using said address of each empty block into which the block can be written and said first identifier,
a destination determining part which creates a combination, with referring to said first and second managing porions, of said first identifier and said address for each of all or part of the storage devices and then rearrange the created combinations, and thereby determines destinations of the data.

46. A storage device management system, which applied to a system which distributes data divided into blocks as units for write to a plurality of storage devices divided into predetermined groups, wherein
each of said storage devices is provided with a first identifier which is different from that of the other storage devices belonging to the same group,
each of said group is provided with a second identifier which is different form that of the other groups, comprising:
a first managing part which manages at least each of said first identifier and each of said second identifier,
a second managing part which manages an empty area of each of said storage devices with using address of each empty block into which said block can be written and said first and second identifier,
a destination determining part which selects all or part of the groups, with referring to said first and second managing parts, and , in the group, selects one storage device for each , at random and so that the same storage device is not selected until all storage devices belonging to the group are selected thoroughly, and creates a combination of said first and second identifiers and said address for each of the selected storage devices and then rearranges the created combinations
at random, and thereby determine destinations of the data.

47. The storage device management system in accordance with claim 45, wherein
at least one of said plurality of storage devices is different from the other storage devices in performance,
when said data is distributed to the plurality of storage devices, the rate of the blocks distributed to each storage device is set, based on said performance, as a distribution rate, and
said destination determining part selects storage devices for creating combinations according to said distribution rate, creates said combination for each of the selected storage device and further rearranges the created combinations at random.

48. The storage device management system in accordance with claim 46, wherein
at least one of the storage devices belonging to each of said group is different from the other storage devices belonging to the same group in performance,
when said data are distributed to the plurality of storage devices, the rate of the blocks distributed to each storage device belonging to the same group is preset, based on said performance, as a first distribution rate, and when said data are distributed to the plurality of groups, the rate of the blocks distributed to each group is preset, based on the performance of the storage device belonging to the group, as a second distribution rate, and
said destination determining part selects groups to be distributed said blocks thereto according to said second distribution rate, selects, as the storage device to create combinations, any one storage device belonging to the selected group according to said first distribution rate, creates said combination for each of the selected storage device and further rearranges the created combinations at random.

49. The storage device management system in accordance with claim 47,
wherein said distribution rate is beforehand managed therein.

50. The storage device management system in accordance with claim 47,
wherein said distribution rate is obtained therein based on said performance.

51. The storage device management system in accordance with claim 48,
wherein said first and/or second distribution rates are beforehand managed therein.

52. The storage device management system in accordance with claim 48,
wherein said first and/or second distribution rate is obtained therein based on said performance.

53. The storage device management system in accordance with claim 52, wherein
when said destination determining part repeats the random rearrangement of said created combinations and thereby the number of blocks where the destinations of said data being not determined becomes less than the number of said all or part of storage devices,
said destination determining part selects storage devices for creating combinations based on the number of empty blocks which each storage device has and further creates said combination for each of the selected storage devices.

54. The storage device management system in accordance with claim 52, wherein
when said destination determining part repeats the random rearrangement of said created combinations,
said destination determining part rearranges said created combinations at random, both in said determined data destination and in said rearranged combinations, so as not to distribute the data to the same storage device repetitively at the block corresponding to the predetermined number of combinations.

55. The storage device management system in accordance with claim 52, wherein
when each plural pieces of data which is different in his character from each other is distributed to said plural storage devices,
said destination determining part takes out said addresses corresponding to the number of said character and masses the taken-out addresses, and further creates said combinations using the mass of addresses for each selected storage device.

56. The storage device management system in accordance with claim 55, wherein
said character means band when said data is write into the storage devices, and said destination determining part takes out said addresses of which the number of being determined based on said band.

57. A storage device control unit for controlling write operation or read operation of data on storage devices in compliance with requests successively arrived from the external, wherein
each of said requests has an access position for said write operation or read operation on said storage device, comprising:
queue means for temporarily holding requests, which is not being processed standing in order of process in a queue,
request receiving means for receiving a request newly arrived from the external, calculating limited rearrangement time for the arrived request and enqueuing the arrived request to said queue means,
position fixing means for fixing a position to which to enqueue the requests received by said request receiving means to the position of said queue means so that a first condition is satisfied, and
holding means for calculating and holding weighted time and expected ending time for each of the requests held in said queue means, wherein
said limited rearrangement time is determined based on arrival time of the request, and
said weighted time for each request held in said queue means is determined based on an access position which the request has and an access position which a request to be processed just ahead of the request has,
said expected ending time is obtained by adding said weighted time to said arrival time, further comprising
command outputting means for outputting requests held in said queue means in the order of said queue to said storage devices as commands, wherein
said position to satisfy' the first condition is so that said expected ending time is not beyond said limited rearrangement time for each arrived request and the sum of said weighted time is the sum of said weighted time or less, assuming that the request received newly by said request receiving means is enqueued to the end of said queue.

58. The storage device control unit in accordance with claim 57, wherein
said requests are write requests to write data and read requests to read data,
said queue means includes a write queue or a read queue to temporarily hold write requests and read requests which are not being processed,
said request receiving means calculates the limited ending time for the request arrived newly from the external and enqueues the arrived request, and
said command outputting means, when said expected ending time for each of the read requests held in said read queue is not beyond said limited ending time, preferentially outputs the write request held in said write queue as a command.

59. The storage device control unit in accordance with claim 58, wherein
maximum necessary period from the arrival time of the request to the finish of write operation in compliance with the request on the storage device is preset as maximum processing period, and
said holding means changes said weighted time for the write request outputted as said command into said maximum processing period.

60. The storage device control unit in accordance with claim 57, wherein
the number of commands which can be outputted to said storage devices in a determined period by said command outputting means is preset,
said command outputting means outputs commands so as not to exceed the number of said commands.

61. The storage device control unit in accordance with claim 57, wherein
said storage devices, when said write operation or read operation in compliance with said command finishes, outputs the ending time, further comprising
command operation ending means for calculating a time difference between the ending time received from said storage devices and the expected ending time which the request has, the request being held in said holding means and having be processed in the storage device, wherein
said holding means recalculates the expected ending time or the limited rearrangement time for each of the requests held in said queue means on the basis of the time difference obtained by said command operation ending means.

62. The storage device control unit in accordance with claim 61, wherein
said holding means, only when the time difference calculated by said command operation ending means is a predetermined value or more, recalculates said expected ending time or said limited rearrangement time.

63. The storage device control unit in accordance with claim 57, wherein
said requests are the write requests to write data and the read requests to read data,
said queue means includes a write queue and a read queue,
said request receiving means further calculates write priority time of the write request arrived newly from the external and enqueues the arrived request,
said write queue and said read queue temporarily holds write requests and read requests received by said request receiving means, and
said command outputting means, when said write queue holds the write request which reaches said write priority time of the request, preferentially outputs said command from the write queue.

64. The storage device control unit in accordance with claim 57, wherein
when requests standing connectively in order of process in a queue respectively have consecutive or the same access positions,
said position fixing means does not enqueue requests received by said request receiving means between said consecutive requests.

65. A process order deciding method for determining which position of a queue requests arriving connectively from the external are enqueued to, the queue being temporarily holding requests in a queue so that the request stands in order of process, wherein
each of said requests has an access position on said storage device for said write operation or read operation, comprising:
a first step of calculating and holding a weighted time and an expected ending time for each of the requests held in said queue, wherein
said weighted time for each request held in said queue means is determined based on an access position which the request has and an access position which a request to be processed just ahead of the request has, and said expected ending time is obtained by adding said weighted time to the arrival time of the request in said queue,
a second step of receiving a request arrived newly from the external, calculating limited rearrangement time for the arrived request and enqueuing the arrived request to said queue, wherein
said limited rearrangement time is determined based on the arrival time of the request,
a third step of enqueuing the requests arrived newly at said second step in a temporarily-determined position to satisfy a first condition and recalculating the weighted time and the expected ending time for each of the requests being held in the queue, and
a fourth step of, when the weighted time and the expected ending time recalculated at said third step satisfies a second condition, determining that said newly-arrived request is enqueued to said temporarily-determined position, wherein
said first condition is such that the access position which said newly-arrived request has and the access positions which requests located just ahead and/or behind the newly-arrived request have are consecutive access positions or the same access position, and
said second condition is such that said expected ending time is not beyond said limited rearrangement time for all of already-arrived requests and the sum of said weighted time is the sum of said weighted time assuming that a request received newly at said first step is enqueued to the end of said queue, or less.

66. A process order deciding method for determining which position of a queue requests arrived connectively from the external is enqueued, the queue temporarily holding requests in a queue so that the request stands in order of process, wherein
each of said write or read requests has an access position for said write operation or read operation on said storage device and limited rearrangement time obtained by adding the predetermined period which is from the arrival time of the request to the finish time of the operation,
weighted time for each request held in said queue is set so as to be determined based on an access position which the request has and an access position which a request to be processed just ahead of the request has, and
expected ending time is set so as to be obtained by adding said weighted time to the arrival time of the request, comprising:
a first step of receiving a request arrived newly from the external, calculating limited rearrangement time for the arrived request and enqueuing the arrived request to said queue, wherein
said limited rearrangement time is determined based on the arrival time,
a second step of enqueuing the newly-arrived request at said first step at the end of said queue as a temporarily-determined position and calculating a first sum of the weighted time which each request being held in said queue has,
a third step of dequeuing said newly-arrived request from said queue, enqueuing the request in a new temporarily-determined position of said queue, calculating weighted time and expected ending time for each of the requests held in said queue and calculating a second sum of the weighted time,
a fourth step of comparing said first sum with said second sum,
a fifth step of judging whether the expected ending time for each of the requests obtained at said third step is earlier than a first limited time for each of the requests,
a sixth step of fixing a position in said queue to which to enqueue said newly-arrived request as said newly-temporarily-determined position when said first sum is more than said second sum at said fourth step and the expected ending time for each of the requests is earlier than the first limited time for each of the requests at said fifth step.

67. A process order deciding method for determining which position of a queue requests connectively arrived from the external are enqueued, the queue temporarily holding requests in a queue so that the request stands in order of process, wherein
each of the said write or read requests has an access position on said storage device and limited rearrangement time obtained by adding predetermined time period which is from the arrival time of the request to the finish time of the operation,
weighted time for each request held in said queue is set so as to be determined based on an access position which the request has and an access position which a request to be processed just ahead of the request has, and
expected ending time obtained by adding said weighted time to the arrival time of the request, comprising:
a first step of receiving a request arrived newly from the external, calculating limited rearrangement time for the arrived request and enqueuing the arrived request to said queue, wherein
said limited rearrangement time is determined based on said arrival time of the request,
a second step of enqueuing the newly-arrived request at said first step in any position of said queue as a temporarily-determined position, calculating weighted time which each request held in said queue has, and calculating and holding a sum of the calculated weighted time, wherein
said first step is repeated until said newly-arrived requests are enqueued in all positions in said queue and thereby the sum of said weighted time can be obtained corresponding with the number of requests composing said queue,
a second step of selecting the smallest sum from sums of plural of weighed time obtained by repeating said first step,
a third step of setting temporarily a temporarily-determined position corresponding to the sum of weighted time selected at said second step for a position to enqueue said newly-arrived request to,
a fourth step of calculating and holding said expected ending time for each of said requests composing said queue when said newly-arrived request is enqueued in said position set temporarily at said third step, and
a fifth step of finally fixing said position set temporarily at said fourth step as said position to which to enqueue said newly-arrived request when each expected ending time obtained at said fourth step is earlier than the limited rearrangement time.
